(19) Europäisches Patentamt
European Patent Office
Office européen des brevets

(11) Veröffentlichungsnummer: **0 552 634 A2**

(12) # EUROPÄISCHE PATENTANMELDUNG

(21) Anmeldenummer: **93100276.0**

(22) Anmeldetag: **11.01.93**

(51) Int. Cl.[5]: **C09B 62/503**, C09B 62/02, C09B 62/002

(30) Priorität: **22.01.92 DE 4201611**

(43) Veröffentlichungstag der Anmeldung: **28.07.93 Patentblatt 93/30**

(84) Benannte Vertragsstaaten: **CH DE FR GB LI**

(71) Anmelder: **BAYER AG**

**W-5090 Leverkusen 1 Bayerwerk(DE)**

(72) Erfinder: **Bootz, Konrad, Dr.**
**Amundsenstrasse 8**
**W-5802 Wetter 4(DE)**
Erfinder: **Herd, Karl-Josef, Dr.**
**Am Gartenfeld 66**
**W-5068 Odenthal-Holz(DE)**

(54) **Reaktivfarbstoffe.**

(57) Reaktivfarbstoffe der Formel

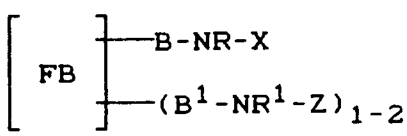

(1)

wobei Z = heterocyclische Reaktivgruppe und die restlichen Gruppen die in der Beschreibung angegebene Bedeutung haben, eignen sich hervorragend zum Färben und Bedrucken von Hydroxylgruppen oder Amidgruppen enthaltenden Materialien.

EP 0 552 634 A2

Die Erfindung betrifft neue Reaktivfarbstoffe, ihre Herstellung und Verwendung.

Reaktivfarbstoffe sind bereits aus zahlreichen Veröffentlichungen bekannt, siehe DE-A 30 19 960 (US-A-4 515 598), DE-A-19 22 940 (US-A-3 718 641), EP-A-167 490, EP-A-133 843 (US-A-4 746 732, 4 935 501, 4 996 304) und EP-A-40 806 (US-A-4 649 193).

Der vorliegenden Erfindung liegt die Aufgabe zugrunde, verbesserte Reaktivfarbstoffe zur Verfügung zu stellen.

Die Erfindung betrifft Reaktivfarbstoffe der Formel

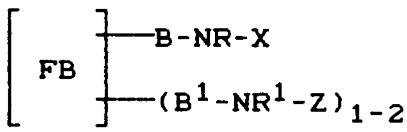

(1)

insbesondere Farbstoffe der Formel

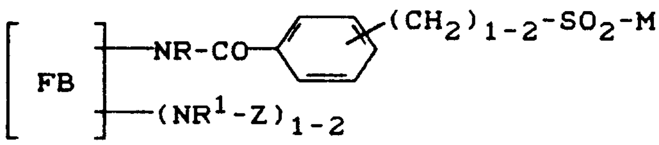

(1a)

mit

X =

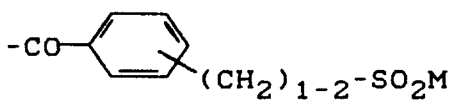

FB = der Rest eines Farbstoffes insbesondere der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe,

B, $B^1$ = gleich oder verschieden, direkte Bindung oder Brückenglied an ein Ring C-Atom eines aromatischcarbocyclischen oder an ein Ring-C- oder -N-Atom eines aromatisch-heterocyclischen Ringes in FB,

M = $CH=CH_2$ oder $CH_2CH_2$-V, worin

V = OH oder alkalisch eliminierbarer Rest, z.B. $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4$, $[N(CH_3)_3]^+$Anion$^-$ oder gegebenenfalls substituierter Pyridinium-Rest (Substituenten insbesondere gegebenenfalls substituiertes $C_1$-$C_4$-Alkyl, COOH, $SO_3H$, CN, Carbonamid), (Anion = z.B. Cl, $HSO_4$, $HCO_3$ usw.),

Z = heterocyclischer faserreaktiver Rest ohne weiteren chromophoren Teil und

R, $R^1$ = gleich oder verschieden, H, gegebenenfalls substituiertes $C_1$-$C_6$-Alkyl (bevorzugte Substituenten: Halogen, OH, COOH, $SO_3H$, $OSO_3H$).

Geeignete Brückenglieder B und $B^1$ sind beispielsweise

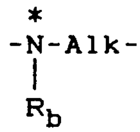 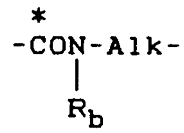 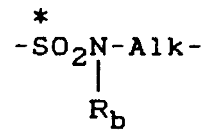 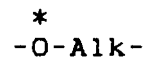 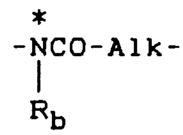

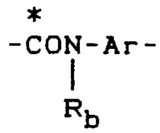 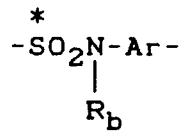 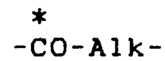 -Alk- 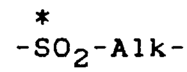

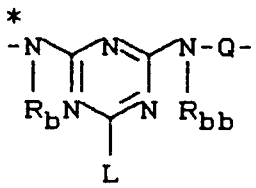 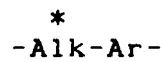

wobei der Stern die Verknüpfungsstelle mit FB markiert,

- $R_b$ und $R_{bb}$ — unabhängig voneinander H, $C_1$-$C_6$-Alkyl, welches substituiert sein kann, insbesondere mit Halogen, OH, COOH, $SO_3H$, $OSO_3H$
- Alk — gegebenenfalls durch Heteroatome oder Heteroatome wie NR, O oder S enthaltende Gruppierungen unterbrochenes, geradkettiges oder verzweigtes $C_1$-$C_6$-Alkylen,
- Ar — gegebenenfalls substituiertes Phenylen oder Naphthylen oder Rest eines Diphenyls oder Stilbens,
- Q — Alk oder Ar oder -Ålk-Ar-wobei Alk oder Ar weitere Substituenten, beispielsweise F, Cl, Br, $C_1$-$C_4$-Alkyl, $C_1$-$C_4$-Alkoxy, Carboxy oder Sulfo enthalten können und
- L — F, Cl, Br, gegebenenfalls substituiertes Amino, OH, $C_1$-$C_4$-Alkoxy, gegebenenfalls substituiertes Phenoxy, $C_1$-$C_4$-Alkylthio bedeuten.

Geeignete faserreaktive Reste Z, d.h. solche die mit den OH-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatischheterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin- oder Phenanthridin-Ring-System, und die an kein weiteres Chromophor gebunden sind.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido-($N_3$), Rhodanido, Thiolether, Oxyether, Sulfinsäure und Sulfonsäure.

Im einzelnen sind beispielsweise zu nennen:

2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, $C_1$-$C_4$-Alkoxy, Vinylsulfonyl-$C_2$-$C_4$-Alkoxy, substituierte Alkylsulfonyl-$C_2$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen, Acylamino, Vinylsulfonyl, substituiertes Alkylsulfonyl, Hydroxy, Amino.

2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-$\beta$-Methoxy-ethylamino-4-fluor-triazinyl-6, 2-$\beta$-Hydroxyethylamino-4-fluor-triazinyl-6, 2-Di-($\beta$-hydroxyethylamino)-4-fluor-triazinyl-6, 2-$\beta$-Sulfoethylamino-4-fluor-triazinyl-6, 2-$\beta$-Sulfoethyl-methylamino-4-fluortriazinyl-6, 2-Carboxymethylamino-4-fluor-triazinyl-6, 2-Di-(carboxymethylamino)-4-fluor-triazinyl-6, 2-Sulfomethyl-methy-

lamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Disulfonaphthyl-(1'))-amino-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m- oder p-Sulfophenoxy)-4-fluor-triazinyl-6, 2-(o-, m- oder p-Methyl- oder -Methoxy-phenoxy)-4-fluor-triazinyl-6, 2-β-Hydroxyethylmercapto-4-fluor-triazinyl-6, 2-Phenyl-mercapto-4-fluor-triazinyl-6, 2-(4'-Methylphenyl)-mercapto-4-fluortriazinyl-6, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem oder mehreren Vinylsulfonyl- oder Sulfatoethyl-sulfonylresten verknüpft sein bspw. über ein Brückenglied

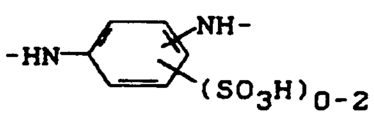

,

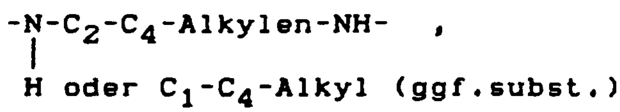

,

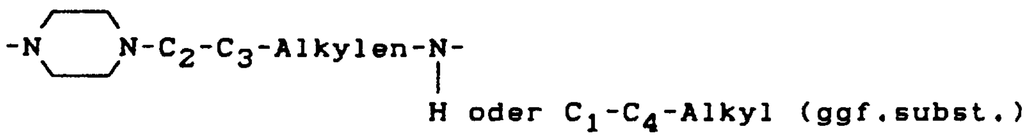

oder im Falle der Sulfatoethylsulfonyl- bzw. Vinylsulfonylgruppe über ein Brückenglied

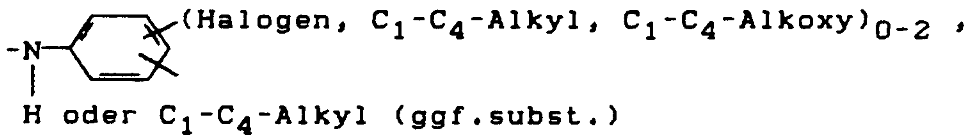

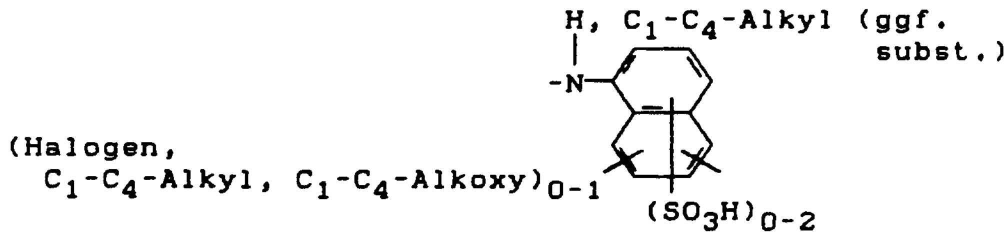

Beispiele für derartig verknüpfte Reste sind:

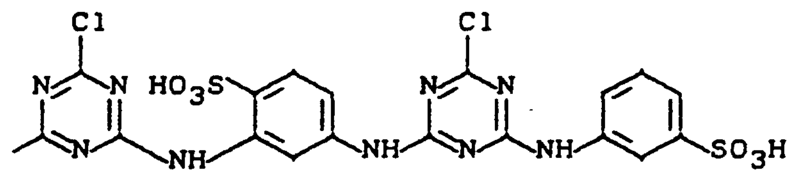

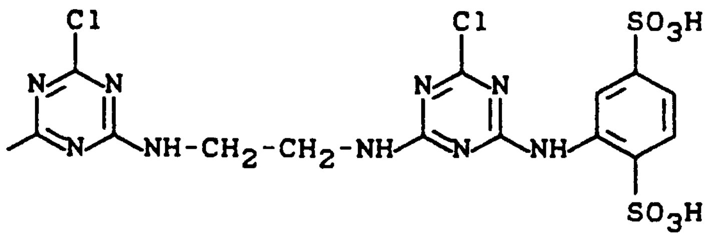

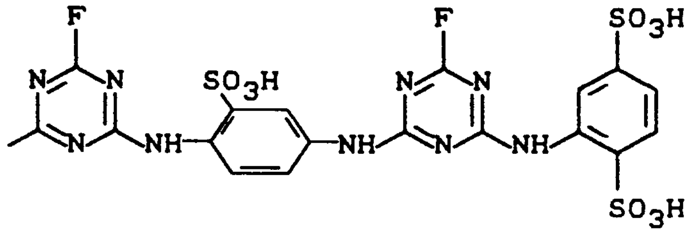

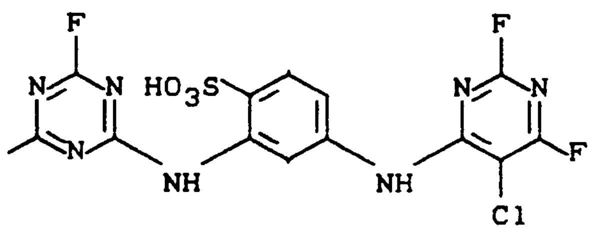

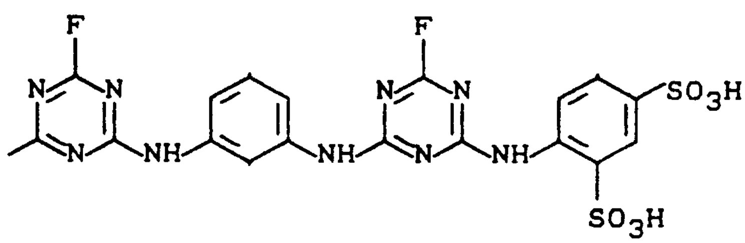

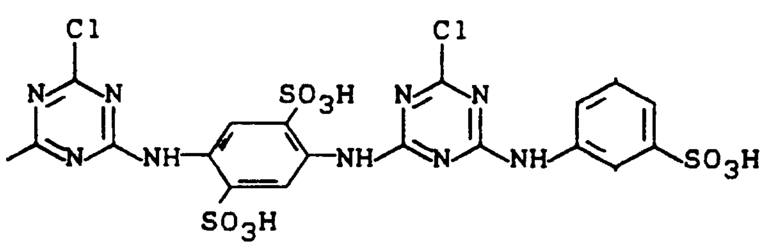

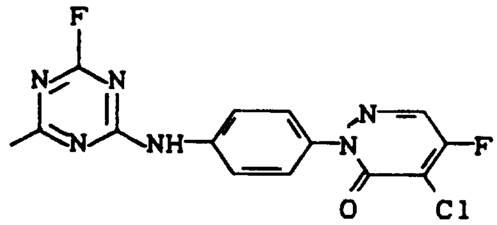

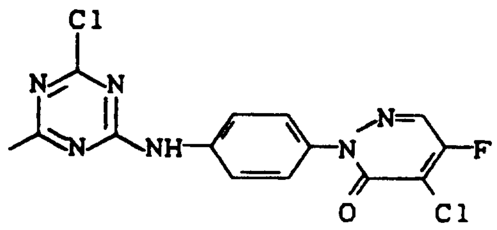

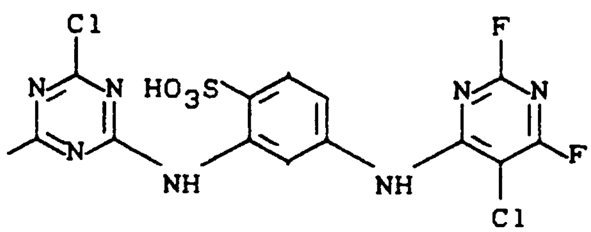

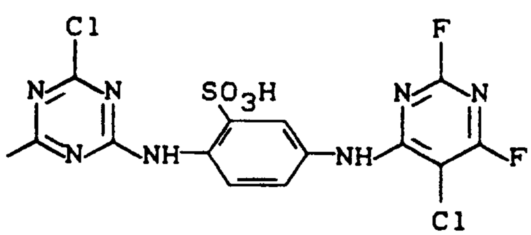

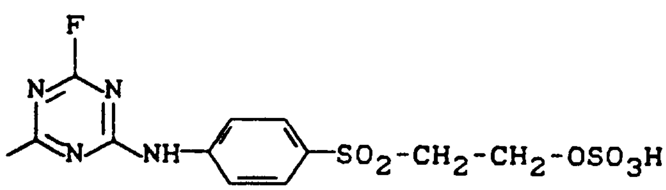

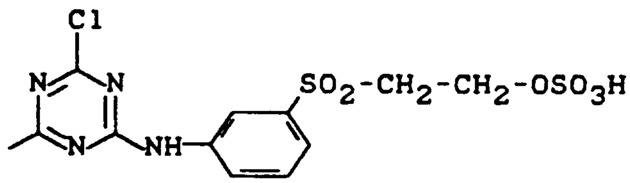

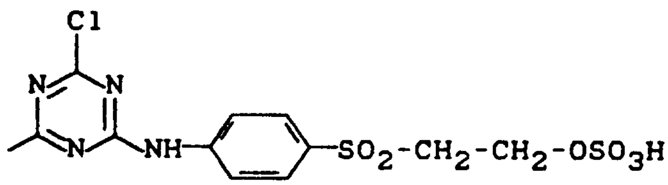

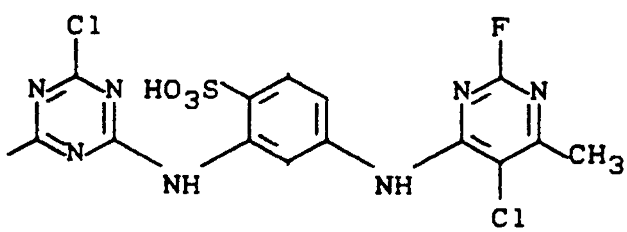

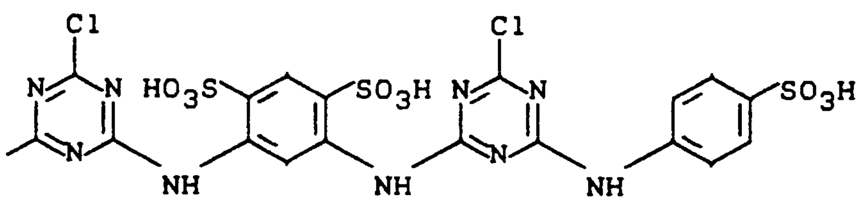

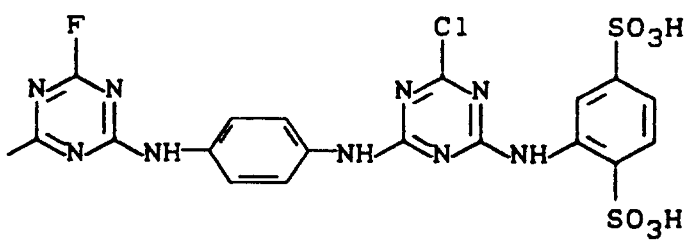

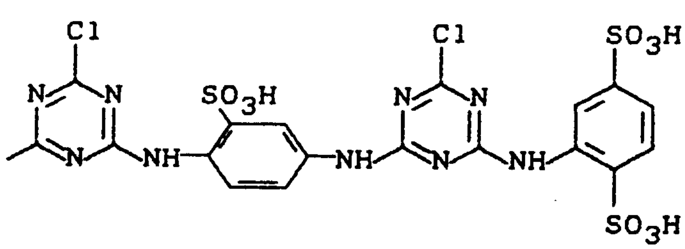

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carbalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-5- oder -6-carbonyl-, 2,3-Dichlorchinoxalin-5- oder -6-sulfonyl-, 1,4-Dichlorphthalazin-6-sulfonyl-oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder -carbonyl-, β-(4',5'-Dichlorpyridazon-6'-yl-1')-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-,2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluor-dichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 5-Chlor-6-Fluor-2-methyl-4-pyrimidinyl-, 5,6-Difluor-2-trifluormethyl-4-pyrimidinyl-, 5-Chlor-6-fluor-2-Dichlorfluormethyl-4-pyrimidinyl-, 2-Fluor-5-chlorpyrimidin-4-yl, 2-Methyl-4-fluor-5-methylsulfonylpyrimidinyl-6, 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-β-Sulfoethylsulfonyl-6-methylpyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4-oder -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6- sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl-oder -sulfonyl-, 2-Chlor-4-methylthiazol-(1,3)-5-carbonyl-oder -4-oder -5-sulfonyl-, N-Oxid des 4-Chlor-oder 4-Nitrochinolin-5-carbonyl.

Bevorzugt sind Reaktivfarbstoffe der Formel (1), worin FB der Rest eines Mono- oder Disazofarbstoffes oder eines Metallkomplexazofarbstoffes ist.

In diesem Falle sind die Reste -B-N(R)-X und -$B^1$-N($R^1$)-Z an verschiedene oder gleiche Reste von Ausgangskomponenten, d.h. Diazo- und Kupplungskomponenten, gebunden. Vorzugsweise sind die Reste

-B-N(R)-X und -B'-N(R')-Z an je eine Komponente, Diazokomponente oder Kupplungskomponente, gebunden. Die Reaktivfarbstoffe haben dann z.B. die Formel

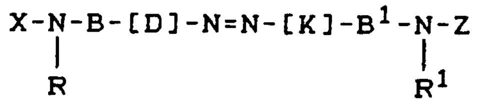

(1b)

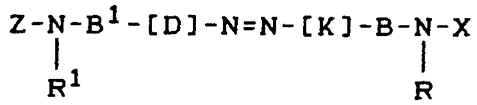

(1c)

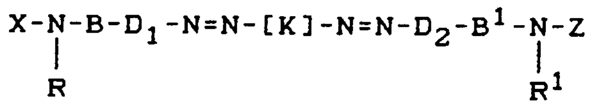

(1d)

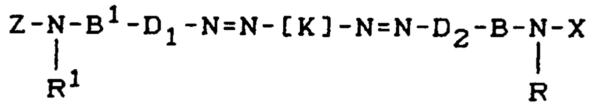

(1e)

worin -K- in Formeln (1d) und (1e) für den Rest einer zweifach kuppelnden Kupplungskomponente steht.

Wenn beide Reste -B-N(R)-X und -$B^1$-N($R^1$)-Z an den gleichen Rest einer Ausgangskomponente D oder K gebunden sind, so ist dies insbesondere der Rest der Kupplungskomponente K. Die Reaktivfarbstoffe entsprechen dann der Formel

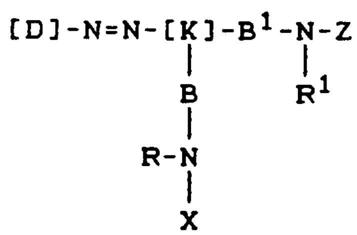

(1f)

worin

D, $D_1$, $D_2$ = Rest einer Diazokomponente der Benzol- oder Naphthalinreihe,

K = Rest einer Kupplungskomponente der Benzol-, Naphthalin-, Acetessigsäurearylid- oder heterocyclischen Reihe; in der heterocyclischen Reihe vorzugsweise ein Pyrazolon- oder Pyridon-Rest.

Die Reste D, $D_1$, $D_2$ und K können dabei mit weiteren Azogruppen oder mit azogruppenhaltigen Resten substituiert sein. X, Z, B, $B^1$, R und $R^1$ haben die oben angegebenen Bedeutungen.

Beispiele für D, $D_1$ und $D_2$ sind vorzugsweise gegebenenfalls durch $SO_3H$, Chlor, $C_1$-$C_4$-Alkoxy, $C_1$-$C_4$-Alkyl, Carbalkoxy oder Sulfonamido substituiertes Phenyl bzw. Phenylen, gegebenenfalls durch $SO_3H$, Chlor, $C_1$-$C_4$-Alkoxy oder $C_1$-$C_4$-Alkyl substituiertes Naphthyl bzw. Naphthylen, gegebenenfalls durch $SO_3H$ substituiertes 4-(Phenylazo)phenyl und gegebenenfalls durch $SO_3H$ substituiertes Biphenylen.

K steht beispielsweise für den Rest einer Kupplungskomponente aus der Hydroxybenzol-, Hydroxynaphthalin-, Aminobenzol-, Aminonaphthalin-, Aminohydroxynaphthalinreihe, für einen 5-Hydroxy-3-methyl (bzw. carboxy)-pyrazolon-, einen 6-Hydroxy-2-pyridon- oder einen gegebenenfalls $C_1$-$C_4$-Alkyl- bzw. $C_1$-$C_4$-Alkoxy-ringsubstituierten Acetessigsäurearylid-Rest.

K kann die üblichen Substituenten, insbesondere Sulfonsäuregruppen aufweisen.

Ferner sind in Betracht zu ziehen, Reaktivfarbstoffe der Formel (1b) bis (1f), worin die Reste D, $D_1$, $D_2$ und K noch einen weiteren Reaktivrest enthalten können. Somit sind auch tri- und tetrafunktionell faserreaktive Farbstoffe umfaßt.

Die zusätzlichen, in D oder K eingeschlossenen Reaktivreste können, wie Z und X, über Aminogruppen, oder in anderer Weise, z.B. durch eine direkte Bindung an D bzw. K gebunden sein. Die obigen

Erläuterungen gelten sinngemäß auch für die Metallkomplexe der Mono- und Disazofarbstoffe (1b - 1f).

Im besonderen bevorzugt sind erfindungsgemäße Reaktivfarbstoffe der Formel (1) bzw. (1a) - (1f), worin Z ein faserreaktiver fluorhaltiger Pyrimidyl-4-Rest oder ein Rest der Formel

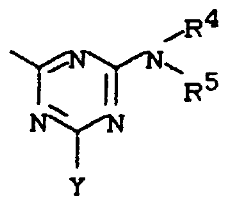

(II)

ist,

worin $R^4$ und $R^5$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenethyl, Cyclohexyl, Phenyl oder $-NHCH_2CH_2OCH_2CH_2-SO_2M$ (M = $-CH=CH_2$ oder $-CH_2CH_2-V$ mit V = alkalisch eliminierbarer Rest), Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo, oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo, sind,

oder worin $R^4$ und $R^5$ zusammen mit dem Aminostickstoffatom einen Morpholino-, Piperidino- oder Piperazinorest bilden, und worin Y = Cl, F oder gegebenenfalls substituierter Pyridiniumrest ist.

Weiterhin bevorzugt sind Farbstoffe der Formel (1), in denen Z für

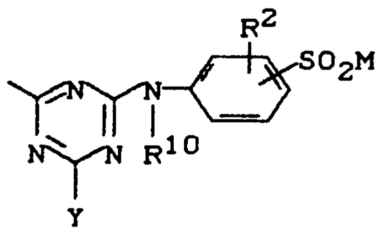

(III)

steht, worin

Y = Cl, F oder gegebenenfalls substituierter Pyridiniumrest ist,

M = $CH=CH_2$ oder $CH_2CH_2-V$, worin

V = alkalisch eliminierbarer Rest, z.B. $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2-C_6H_4$, $[N(CH_3)_3]^+Anion^-$ oder gegebenenfalls substituierter Pyridinium-Rest (Substituenten insbesondere gegebenenfalls substituiertes $C_1$-$C_4$-Alkyl, COOH, $SO_3H$, CN, Carbonamid),

$R^2$ = H, Cl, Br, $C_1$-$C_4$-Alkyl, $C_1$-$C_4$-Alkoxy, $CO_2H$ oder $SO_3H$ und

$R^{10}$ = H, gegebenenfalls substituiertes $C_1$-$C_6$-Alkyl.

Bevorzugte Substituenten von $R^{10}$ sind Halogen, OH, $CO_2H$, $SO_3H$ und $OSO_3H$.

Bevorzugt sind Reaktivfarbstoffe der Formel (2)

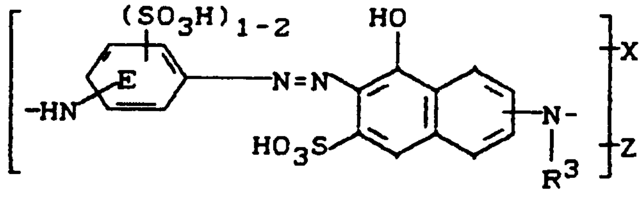

(2)

und der Formel (3)

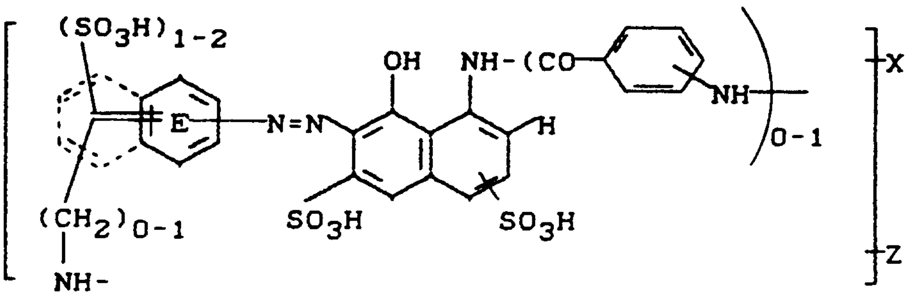

(3),

worin

$R^3$ = Wasserstoff, Methyl oder Ethyl, und der Benzolring E gegebenenfalls weitersubstituiert ist. Substituierten in E sind z.B.: $CH_3$, $C_2H_5$, $CH_3O$, $C_2H_5O$, Hal, $CO_2H$.

Bevorzugt sind insbesondere Reaktivfarbstoffe der Formel (Z), worin der Benzolring E nicht weitersubstituiert ist, sowie Reaktivfarbstoffe der Formel (3), worin der Benzolring E nicht weitersubstituiert ist.

Bevorzugt sind ferner Reaktivfarbstoffe der Formel (4)

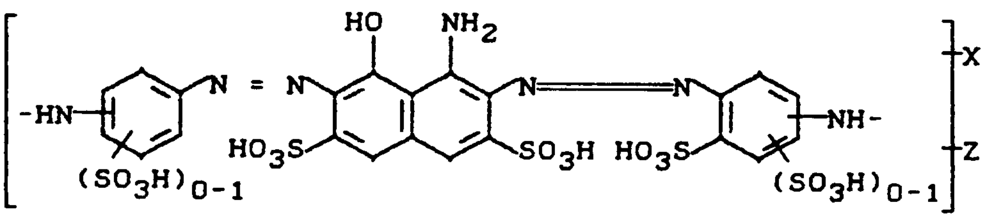

(4).

Außer den weiter oben beschriebenen Reaktivfarbstoffen der Formeln (2), (3) und (4) sind als weitere wertvolle Vertreter die Reaktivfarbstoffe der folgenden Formeln zu nennen:

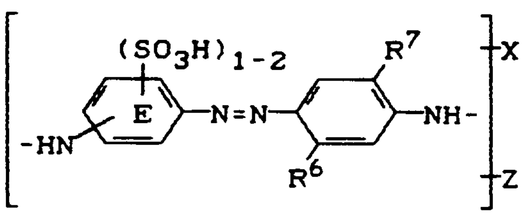

(5)

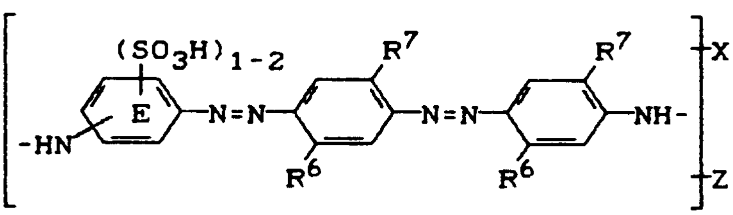

(6)

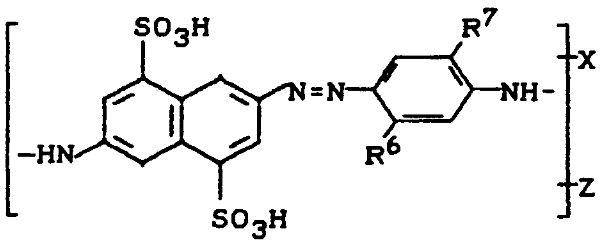

(7)

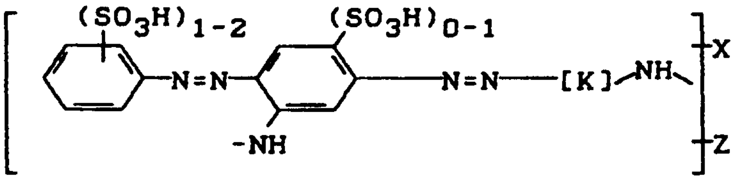

(8)

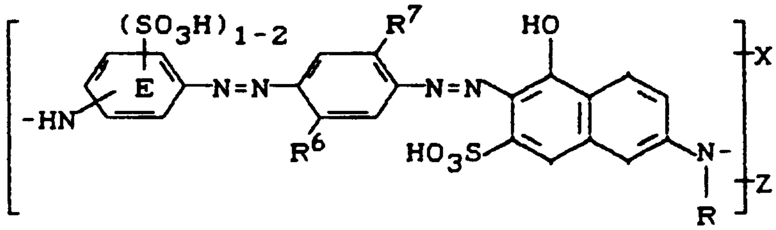

(9)

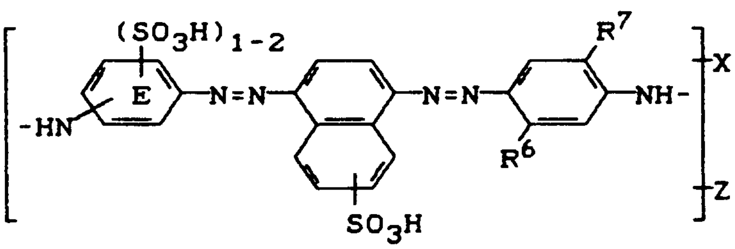

(10)

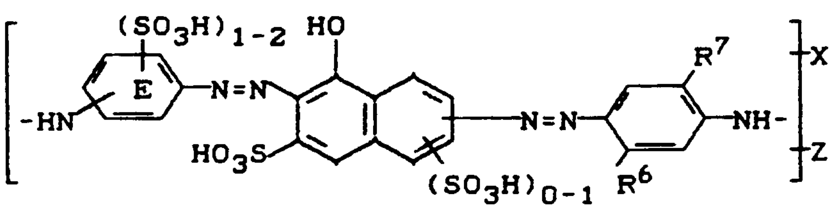

(11)

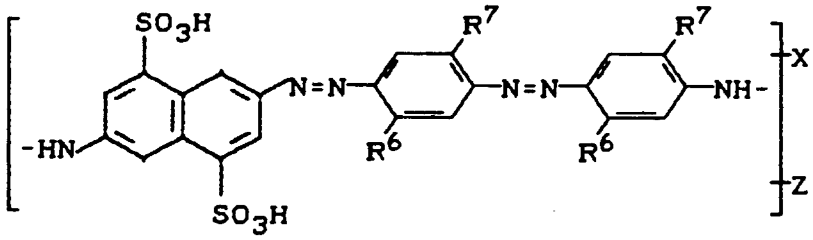

(12)

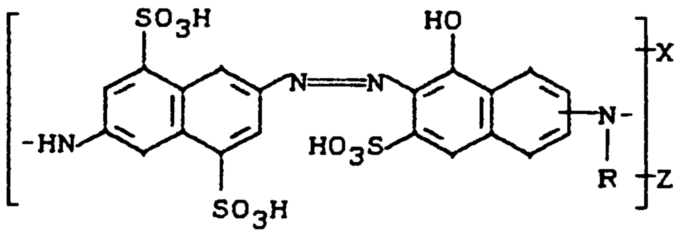

(13)

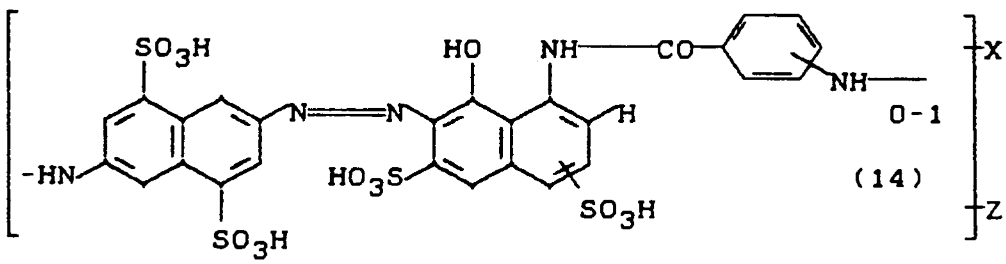

(14)

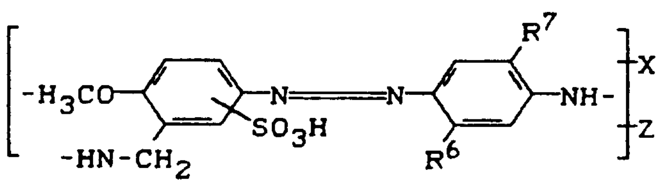

(15)

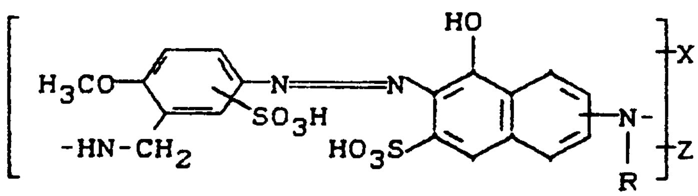

(16)

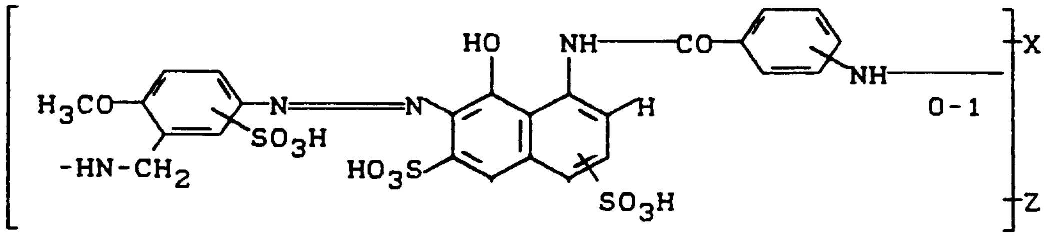

(17)

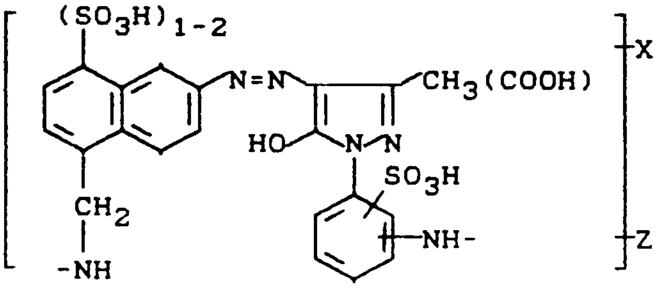

(18)

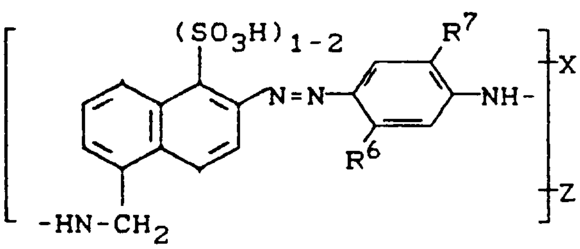

(19)

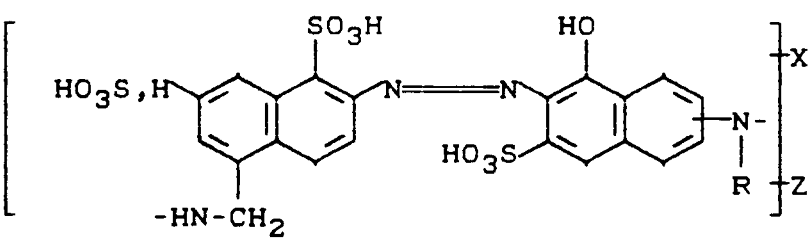

(20)

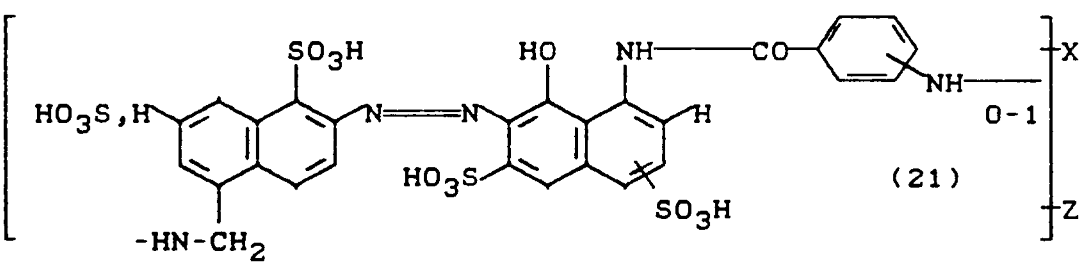

(21)

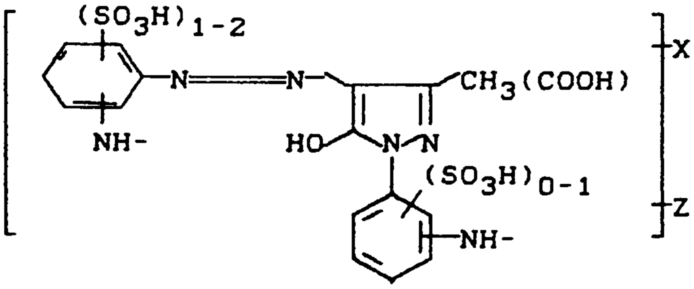

(22)

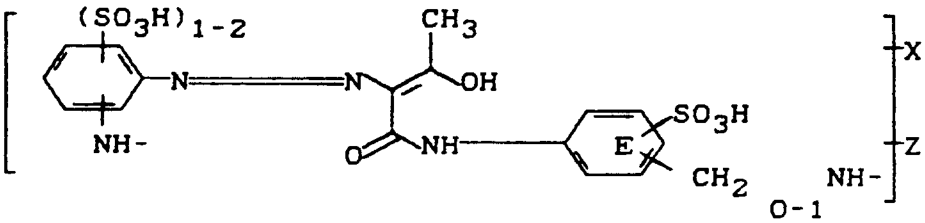

(23

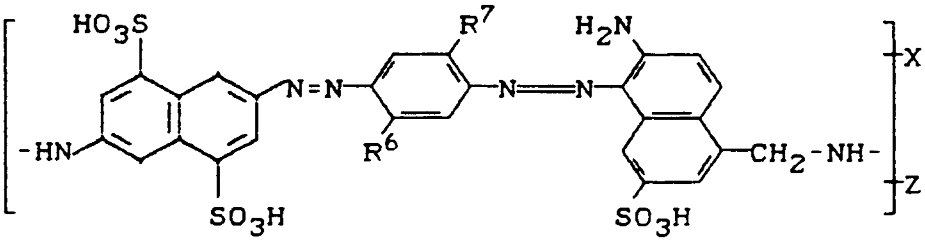

(24)

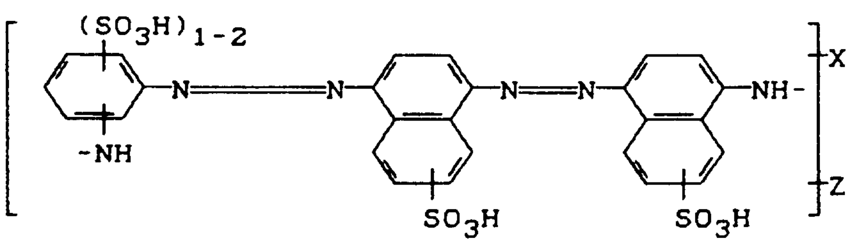

(25)

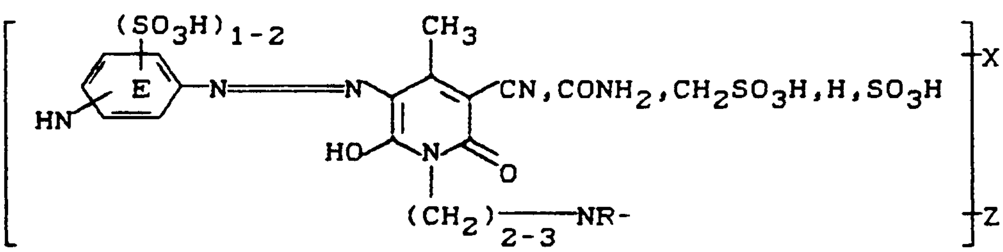

(26)

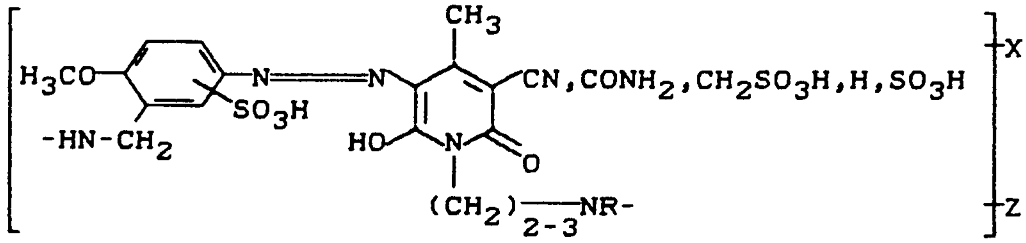

(27)

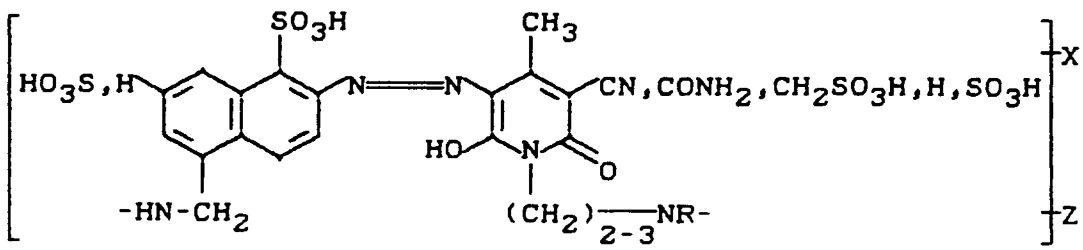

(28)

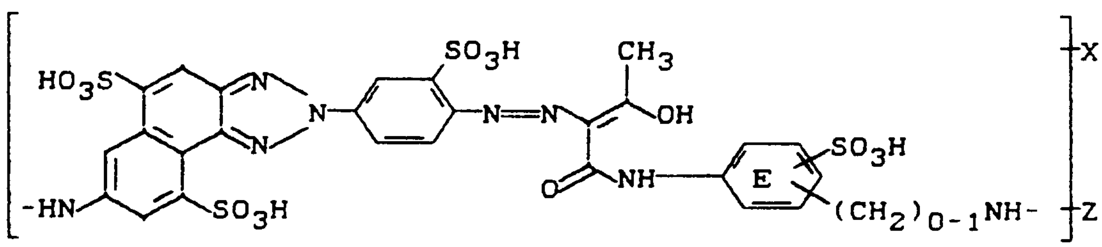

(29)

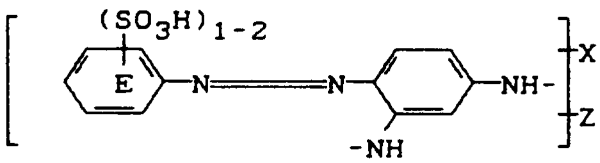

(30)

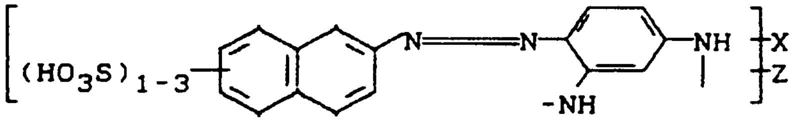

(31)

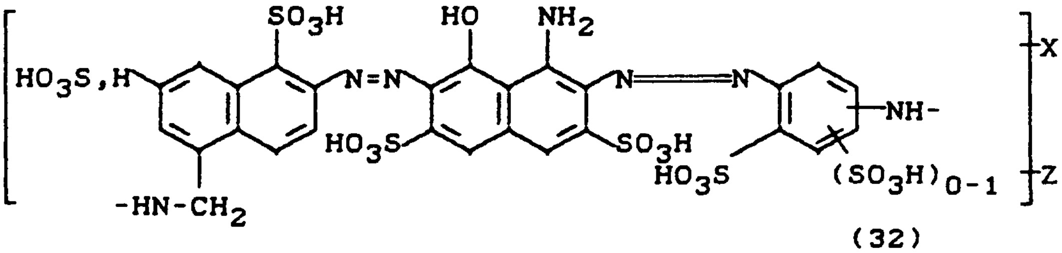

(32)

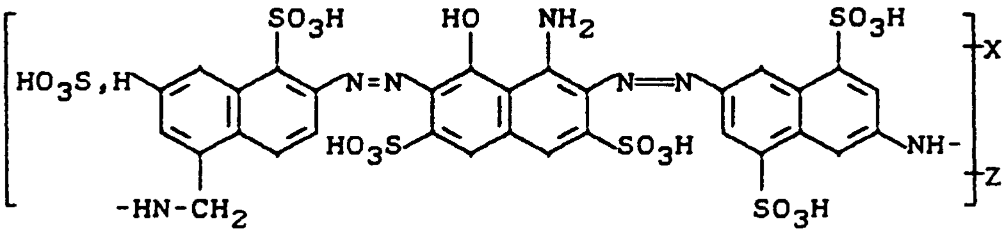

(33)

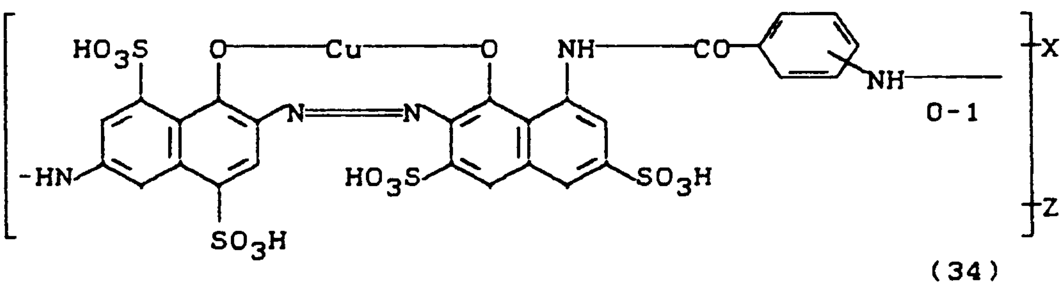

(34)

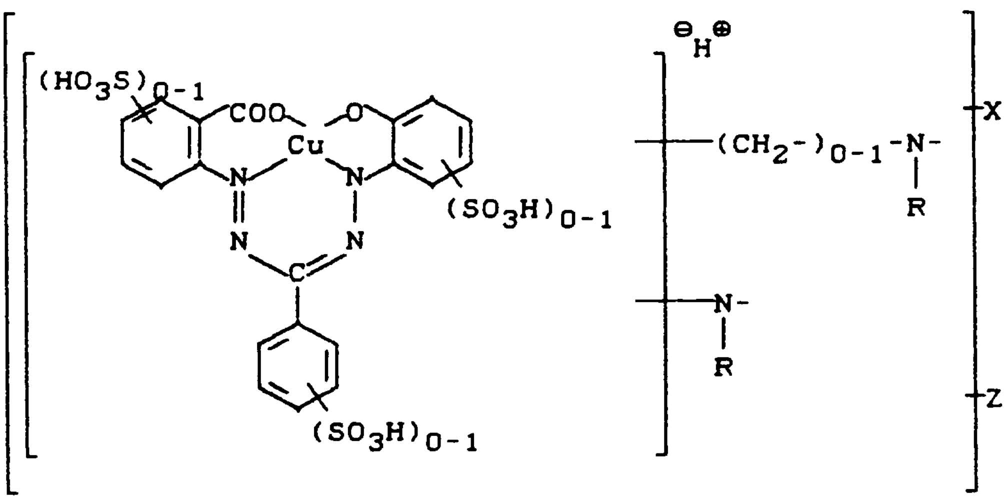

(35)

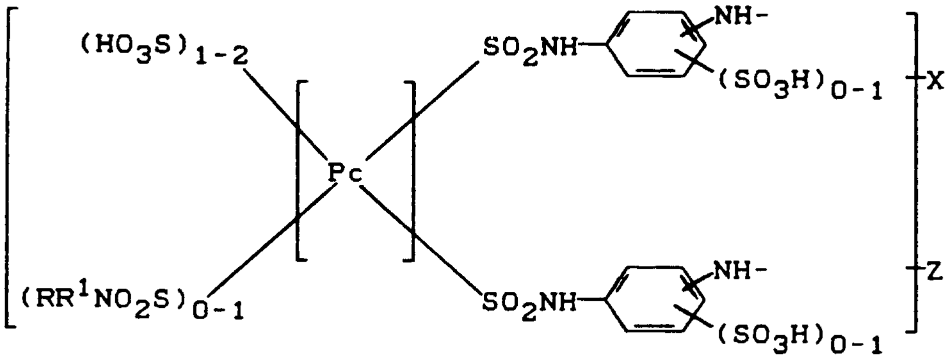

(36)

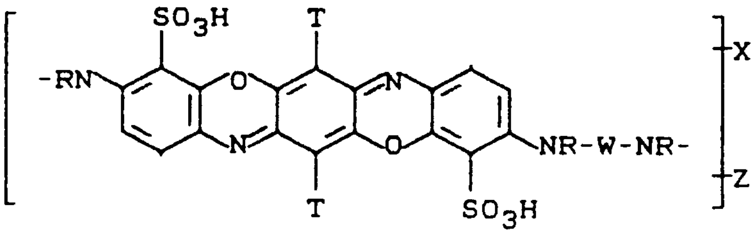

(37)

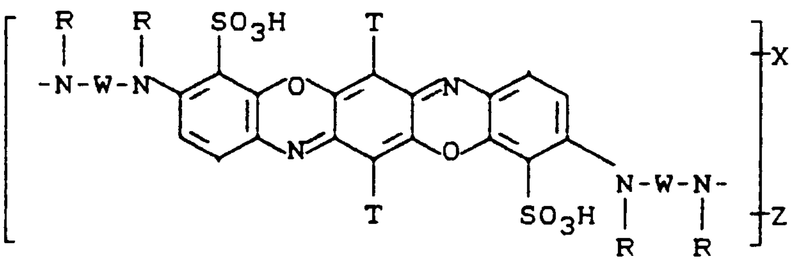

(38)

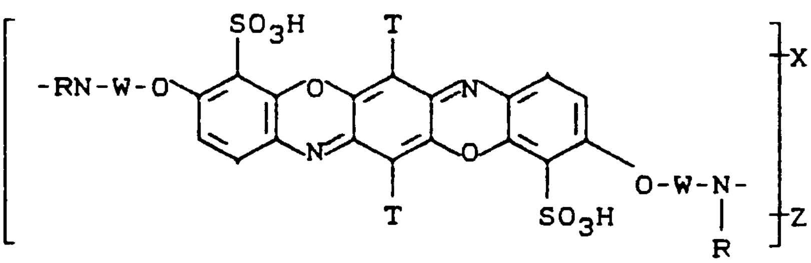

(39)

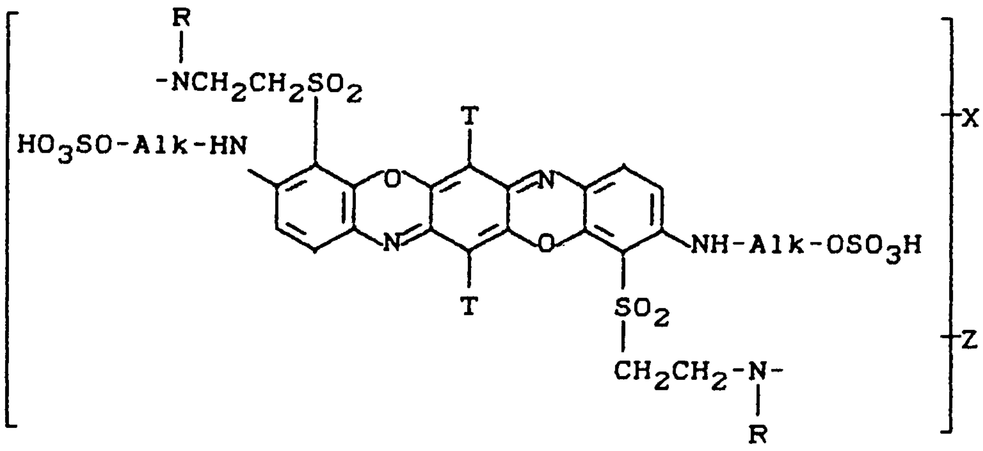

(40)

worin Pc für einen Cu- oder Ni-Phthalocyaninrest steht und die Gesamtzahl der Substituenten am Pc-Gerüst maximal 4 beträgt; R und $R^1$ die obengenannte Bedeutung besitzen,
wobei T = Cl, Br, $OCH_3$ und Z, X, K und Alk die oben angegebenen Bedeutungen haben,

- $R^6$ = H, $C_1$-$C_4$-Alkyl, $C_1$-$C_4$-Alkoxy, Acylamino, insbesondere $C_1$-$C_4$-Alkylcarbonylamino, $C_1$-$C_4$-Alkylsulfonylamino, Aminocarbonylamino, gegebenenfalls substituiertes Phenylcarbonylamino, Cl, Br,
- $R^7$ = H, $C_1$-$C_4$-Alkyl, $C_1$-$C_4$-Alkoxy, OH, $SO_3H$ und
- W = aliphatisches Brückenglied, insbesondere $C_2$-$C_4$-Alkylen.

In den bevorzugten Reaktivfarbstoffen der Formeln (5), (6), (9), (10), (11) und (30) sind die Benzolringe E vorzugsweise ebenfalls nicht weitersubstituiert; als Diazokomponenten werden in diesem Falle vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure verwendet. Der Rest R in Formeln (9) bis (40) ist insbesondere Wasserstoff, Methyl oder Ethyl.

In einer bevorzugten Ausführungsform bedeutet
X =

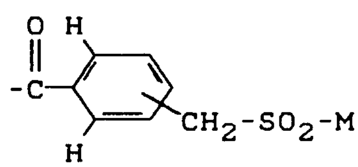

,

mit
M = Vinyl oder $CH_2CH_2Cl$.

Bevorzugt sind vor allem Reaktivfarbstoffe der Formeln (2) bis (40), worin Z ein unsubstituierter oder substituierter Aminofluor-s-triazin-Rest ist, wobei $-NR_4R_5$ vorzugsweise steht für: $-NH_2$, Morpholino, N-$\beta$-Hydroxyethylamino,N,N-Di-$\beta$-hydroxyethylamino, $\beta$-Sulfoethylamino, Phenylamino, das gegebenenfalls im Phenylkern substituiert ist durch Chlor, Methyl, Ethyl, Methoxy, Ethoxy, Acetylamino, Hydroxy, Carboxy, Sulfomethyl oder Sulfo, N-$C_{1-4}$-Alkyl-phenylamino, das gegebenenfalls im Phenylkern substituiert ist durch Chlor, Methyl oder Ethyl, N-(Sulfo-$C_{1-4}$-alkyl)-phenylamino, das gegebenenfalls im Phenylkern substituiert ist durch Chlor, Methyl oder Ethyl, N-(Hydroxy-$C_{1-4}$-alkyl-)-phenylamino oder Sulfonaphthylamino ist, und der zweite Reaktivrest X für den (2-Chlorethylsulfonyl-methyl)benzoyl-Rest steht, wie z.B. Farbstoffe der Formel (41)

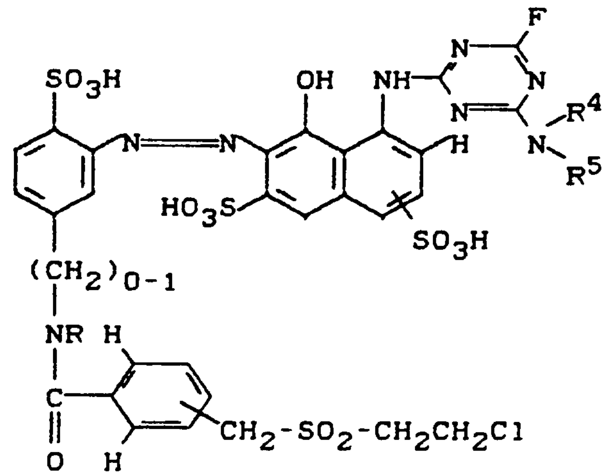

(41)

Bevorzugt sind Reaktivfarbstoffe der Formel (42), worin Z ein faserreaktiver halogenhaltiger Pyrimidyl-Rest ist, z.B.

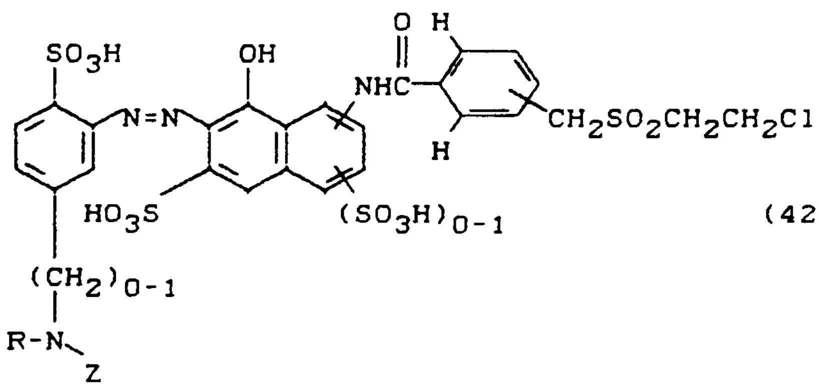

(42)

mit R = H, $CH_3$ oder $C_2H_5$.

Bevorzugt sind Farbstoffe (2) bis (40), in denen

X =

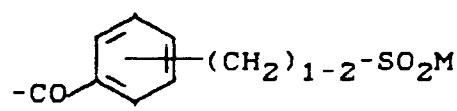

und

Z =

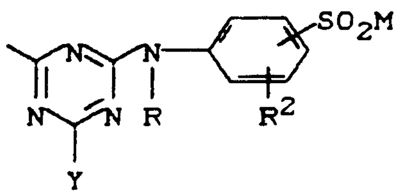

(III)

Ein Verfahren zur Herstellung der Farbstoffe (1) besteht darin, daß man Farbstoffe

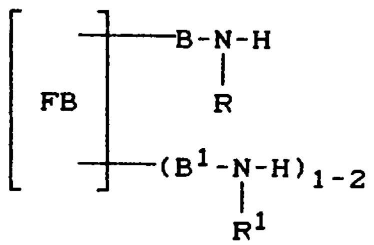

(IV)

bzw. die entsprechenden Farbstoffvorprodukte mit einer Reaktivkomponente

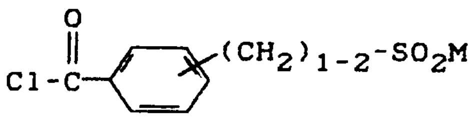

(V)

und anschließend einer Reaktivkomponente

Z - Hal (VI)

worin Hal = Cl, Br oder F, umsetzt und im Falle der Verwendung von Vorprodukten diese anschließend in die gewünschten Endfarbstoffe überführt und gegebenenfalls weitere Umwandlungsreaktionen anschließt.

Bei der Herstellung der bevorzugten Azofarbstoffe müssen die Diazokomponenten und die Kupplungskomponenten zusammen zwei Aminogruppen -N(R)H und -N($R^1$)H, und gegebenenfalls weitere acylierbare Aminogruppen enthalten. Gegebenenfalls verwendet man entsprechende Acetylamino- oder Nitroverbindungen, worin die Acetylamino- bzw. Nitrogruppe vor der Kondensation mit einem Halogentriazin, Halogenpyrimidin oder dergleichen durch Verseifen bzw. Reduzieren in die $NH_2$-Gruppe übergeführt wird. Die Einführung der Reaktivreste X und Z erfolgt durch Kondensation von Farbstoffen oder Farbstoffvorprodukten, welche acylierbare Aminogruppen enthalten, mit faserreaktiven halogenierten Acylierungsmitteln. Bei der Herstellung der Endfarbstoffe aus Vorprodukten handelt es sich meistens um Kupplungen, die zu Azofarbstoffen führen.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzungen schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse eines Halogentriazin-, (2-Chlorethylsulfonyl-methyl)-benzoyl- oder Halogenpyrimidinrestes etc. eintritt, muß ein Zwischenprodukt, welches Acetylaminogruppen enthält, zwecks Abspaltung der Acetylgruppen verseift werden, bevor mit einem Aminodifluortriazin oder Trifluortriazin etc. kondensiert wird. Als weitere Umwandlungsreaktion kommt z.B. die nachträgliche Umsetzung eines Dihalogentriazinylrestes mit einem Amin in Betracht. Welche Reaktion bei der Herstellung eines sekundären Kondensationsproduktes aus Amin $HNR_4R_5$, 2,4,6-Trihalogen-s-triazin und Diaminobenzolsulfonsäure zweckmäßigerweise zuerst ausgeführt wird, die des Trihalogentriazins mit dem Amin oder mit der Diaminobenzolsulfonsäure, ist von Fall zu Fall verschieden und richtet sich vor allem nach der Löslichkeit der beteiligten Aminoverbindungen und der Basizität der zu acylierenden Aminogruppen. Die wichtigsten Verfahrensvarianten sind in den Ausführungsbeispielen dargestellt.

Geeignete Ausgangsverbindungen für die Herstellung von Mono- oder Polyazofarbstoffen (1) sind beispielsweise:

Diazokomponenten (D, $D_1$ und $D_2$)

1,3-Diaminobenzol, 1,4-Diaminobenzol, 1,3-Diamino-4-chlorbenzol, 1,3-Diamino-4-methylbenzol, 1,3-Diamino-4-ethylbenzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2-chlorbenzol, 1,4-Diamino-2,5-dimethylbenzol, 1,4-Diamino-2,5-diethylbenzol, 1,4-Diamino-2-methyl-5-methoxybenzol, 1,4-Diamino-2,5-dimethoxybenzol, 1,4-Diamino-2,5-diethoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenylharnstoff-2,2'-disulfonsäure, 4,4'-Diaminodiphenyloxyethan-2,2'-disulfonsäure, 4,4'-Diaminostilben-2,2'-disulfonsäure, 4,4'-Diaminodiphenylethan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Aminoacetylamino-Verbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der obengenannten Diazokomponenten in Frage, z.B. 1-Acetylamino-3-aminobenzol-4-sulfonsäure oder 1-Acetylamino-4-aminobenzol-3-sulfonsäure.

Falls die beiden Reste -B-N(R)-X und -$B^1$-N($R^1$)-Z in Formel (1) an die gleiche Komponente, z.B. die Kupplungskomponente gebunden sind, wie dies weiter vorn beschrieben ist, können als Diazokomponenten auch solche verwendet werden, die neben der zu diazotierenden Aminogruppe keine acylierbare Aminogruppe enthalten, wie z.B. Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenylether, 1-Aminobenzol-2-, -3- oder -4-sulfonsäureamid, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7-oder -8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8-oder -4,6,8-trisulfonsäure, 4-Aminoazobenzol-3,4'-disulfonsäure, 3-Methoxy-4-amino-6-methyl-azobenzol-2',4'-disulfonsäure oder 3-Methoxy-4-amino-6-methylazobenzol-2',5'-disulfonsäure.

Kupplungskomponenten (K)

1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynapahthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. 2-Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3' Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 1-Amino-8-hydroxynaphthalin-4-sulfonsäure, 2,4,6-Triamino-3-cyanpyridin, 1-$\beta$-Aminoethyl-3-cyan-4-methyl-6-hydroxypyridon-(2), 1- $\gamma$-Aminopropyl-3-sulfomethyl-4-methyl-6-hydroxypyridon-(2), 1,3-Diaminobenzol.

Die Diazotierung der Diazokomponenten bzw. der eine diazotierbare Aminogruppe enthaltenden Zwischenprodukte erfolgt in der Regel durch Einwirkung salpetriger Säure in wäßrig-mineralsaurer Lösung bei tiefer Temperatur. Die Kupplung auf die Kupplungskomponente erfolgt bei stark sauren, neutralen bis schwach alkalischen pH-Werten.

Die Kondensation der Reaktivkomponenten mit den Diazokomponenten und den Kupplungskomponenten und mit den Aminen bzw. mit acylierbaren Monoazo- oder Disazo-Zwischenprodukten bzw. mit den aminogruppenhaltigen Farbstoffen erfolgt vorzugsweise in wäßriger Lösung oder Suspension, bei niedriger Temperatur und bei schwach saurem, neutralem bis schwach alkalischem pH-Wert. Vorteilhaft wird der bei der Kondensation freiwerdende Halogenwasserstoff laufend durch Zugabe wäßriger Alkalihydroxide, -carbonat oder -bicarbonate neutralisiert.

Die angegebenen Formeln sind die der freien Säuren. Bei der Herstellung werden im allgemeinen die Salze erhalten, insbesondere die Alkalisalze wie Natrium-, Kalium- oder Lithiumsalze. Die durch Quarternierung mit Pyridinen entstehende Ladung wird, in Abhängigkeit der Isolierungsbedingungen, durch ein Gegenion z.B. Chlorid, Fluorid oder Sulfat ausgeglichen; oder die Farbstoffe bilden innere Salze mit Sulfo- oder Carboxylgruppen. Die Farbstoffe können auch als konzentrierte Lösungen eingesetzt werden.

Die erfindungsgemäßen Farbstoffe eignen sich hervorragend zum Färben und Bedrucken von natürlichen und synthetischen OH- oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren, sowie zum Bedrucken von Baumwolle und Zellwolle.

Man erhält bei gutem Aufbauvermögen und hohen Fixierausbeuten Färbungen mit guten Allgemeinechtheiten, insbesondere Naßechtheiten.

## Färbevorschriften

Die in den folgenden Beispielen angegebenen Färbungen werden unter folgenden Bedingungen durchgeführt:

### Färbevorschrift 1

2 Teile des Farbstoffes werden in 100 ml Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 50 °C, wobei nach 30 Minuten 40 Teile kalzinierte Soda und nochmals 60 Teile Natriumchlorid zugegeben werden. Man hält die Temperatur 30 Minuten auf 50 °C, spült und seift dann die Färbung während 15 Minuten in einer 0,3 %igen kochenden Lösung eines ionenfreien Waschmittels, spült und trocknet.

### Färbevorschrift 2

4 Teile des Reaktivfarbstoffes werden in 50 Teilen Wasser gelöst. Dazu gibt man 50 Teile einer Lösung, die pro Liter 5 g Natriumhydroxid und 10 g kalziniertes Soda enthält. Mit der erhaltenen Lösung wird ein Baumwollgewebe foulardiert, so daß es um 70 % seines Gewichtes zunimmt, und dann auf eine Kaule aufgewickelt. Das Baumwollgewebe wird so während 3 bis 12 h bei Raumtemperatur gelagert. Danach wird die gefärbte Ware gespült, während einer Viertelstunde mit einem nichtionogenen Waschmittel kochend geseift, nochmals gespült und getrocknet.

### Beispiel 1

a) 0,2 Mol 1-Amino-8-hydroxynaphthalin-3,6-disulfonsäure werden in 350 ml Wasser bei pH 6,5 gelöst und mit 350 g Eis auf 0 °C abgekühlt. 0,21 Mol 2,4,6-Trifluor-1,3,5-triazin (Cyanurfluorid) werden zugegeben und der pH mit $Na_2CO_3$-Lösung zwischen 3,5 und 4 gehalten. Nach 5 Minuten setzt man 0,2 Mol Morpholin zu und stellt den pH mit Sodalösung auf 7 ein. Die Temperatur steigt dabei auf ca. 10 °C an.

b) 0,2 Mol 3-[4'-($\beta$-Chlorethylsulfonyl-methyl)-benzoylaminol-anilin-4-sulfonsäure (aus 2,4-Diaminobenzolsulfonsäure und 4-($\beta$-Chlorethylsulfonyl-methyl)-benzoylchlorid hergestellt) werden in Wasser suspendiert und mit 65 ml 30 %iger Salzsäure und 300 g Eis versetzt. Danach werden 46 ml 30 %ige Natriumnitritlösung zugegeben und 1 Stunde bei 0 °C gerührt. Überschüssiges Natrium-nitrit wird mit Amidosulfonsäure vernichtet und die so erhaltene Diazotierung zur Lösung der Kupplungskomponente a)

gegeben. Mit Sodalösung wird ein pH von 6-7 eingestellt.
Nach beendeter Kupplung wird der Farbstoff ausgesalzen, isoliert, getrocknet und gemahlen. Der so erhaltene Farbstoff der Formel

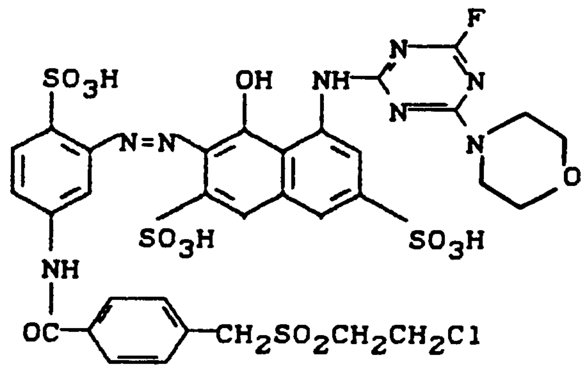

$\lambda_{max}$ = 515 und 532 nm ($H_2O$)
färbt Baumwolle in klaren roten Tönen.

Beispiel 2

a) 0,2 Mol 1,4-Diaminobenzoldisulfonsäure-2,5 werden in 500 ml Wasser mit konz. Natronlauge neutral gelöst, Man heizt auf 50 °C auf und gibt 0,3 Mol 3-(β-Chlorethylsulfonyl-methyl)-benzoylchlorid zu. Durch gleichzeitige Zugabe von Sodalösung (20 g/100 ml) wird pH 7 gehalten. Die Reaktion ist nach 3 Std. beendet. Man kühlt auf 0 °C ab und gibt 55 ml 30 %ige HCl zu. Innerhalb von 30 Minuten tropft man bei 0 °C-5 °C 47 ml Natriumnitritlösung (30 g/100 ml) ein. Die Diazotierung rührt 30 Minuten bei 0-5 °C nach, Anschließend wird überschüssiges Nitrit mit Amidosulfonsäure zerstört.
b) 0,2 Mol 6-Amino-1-naphthol-3-sulfonsäure werden in 600 ml Wasser unter Zusatz von 38 ml 11 %iger Lithiumhydroxydlösung bei pH 7-7,5 gelöst. In 30 Minuten tropft man 0,21 Mol Cyanurfluorid zu. Man hält dabei durch gleichzeitiges Eintropfen von 11 %iger Lithiumhydroxidlösung einen pH-Wert von 3,7-4,1. Man rührt 5 Minuten nach und gibt 0,2 Mol Morpholin zu. Mit Sodalösung (20 g/100 ml) stellt man pH 7 ein. T = 5-8 °C. Man rührt 15 Minuten nach und tropft innerhalb von 1 Stunde obige Diazotierung a) zu. Mit 1 molarer Nariumhydrogencarbonatlösung wird ein pH-Wert von 5,5-6,5 gehalten. Nach beendeter Kupplung salzt man mit NaCl aus, isoliert und trocknet. Der Farbstoff der Formel

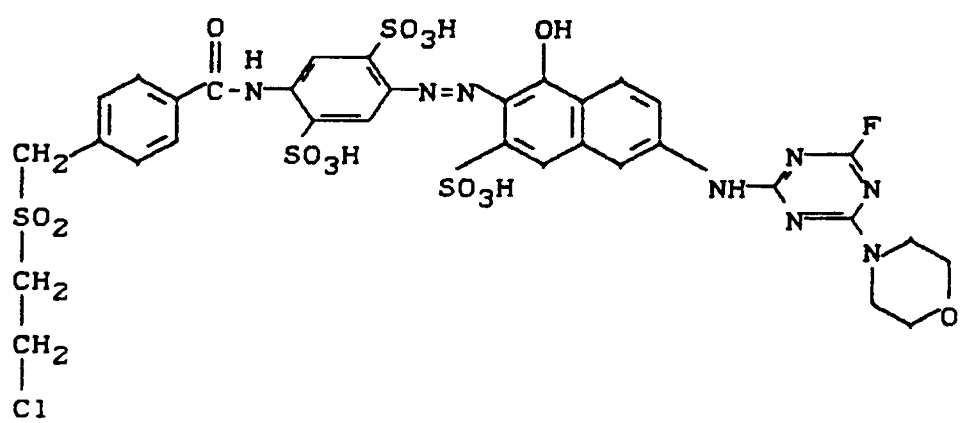

färbt Baumwolle in roten Tönen.
Die Farbstoffe der folgenden Beispiele 3-31 der allgemeinen Formel

X{D}N=N{K}Z

lassen sich auf analoger Weise herstellen unter Verwendung der aufgeführten Diazo- bzw. Kupplungskomponenten und Amine. Sie färben Baumwolle in den aufgeführten Farbtönen.

In den folgenden Beispielen steht für X jeweils

$X^1$ =

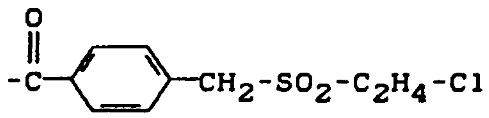

$X^2$ =

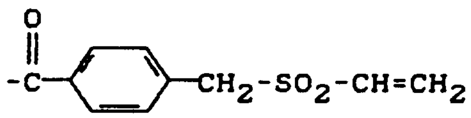

$X^3$ =

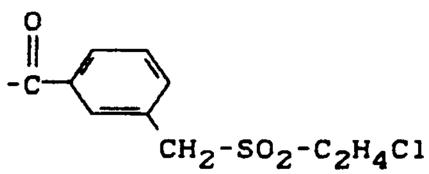

$X^4$ =

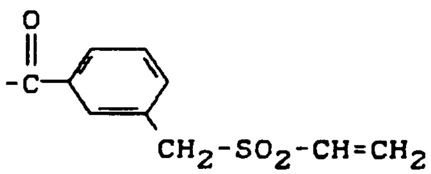

| | Diazokomponente | Kupplungskomponente | Z | Farbton |
|---|---|---|---|---|
| 3 | 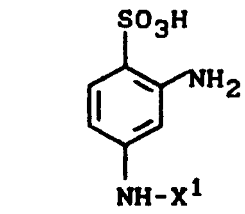 | 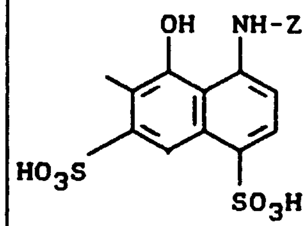 | 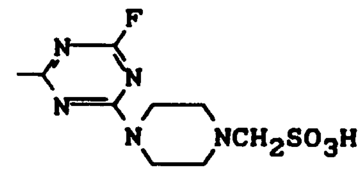 | Rot |
| 4 | 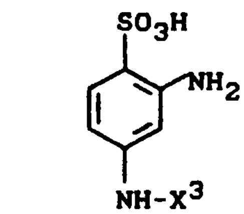 | " | 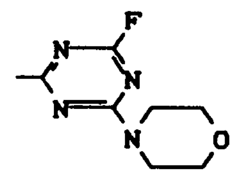 | Rot |
| 5 | 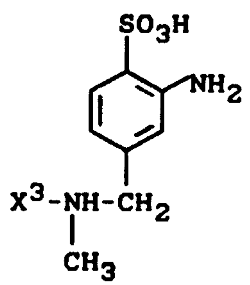 | " | " | Rot |
| 6 | 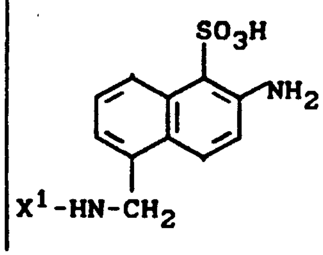 | " | 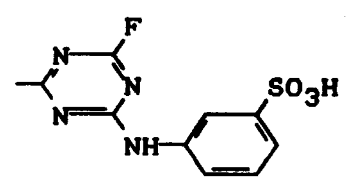 | Rot |

| | Diazokomponente | Kupplungskomponente | Z | Farbton |
|---|---|---|---|---|
| 7 | 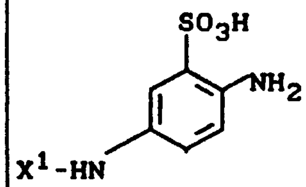 | 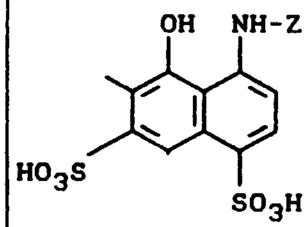 | 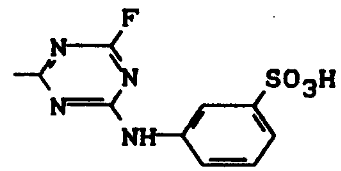 | Blaust. Rot |
| 8 | 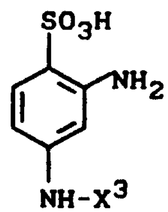 | 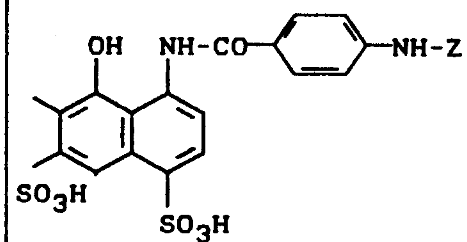 | " | Rot |
| 9 | 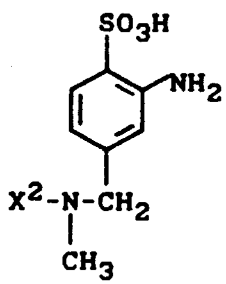 | " | " | gelbst. Rot |

| | Diazokomponente | Kupplungskomponente | Z | Farbton |
|---|---|---|---|---|
| 10 | 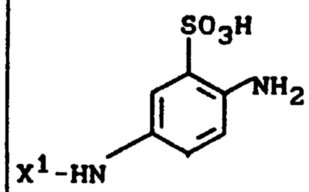 | 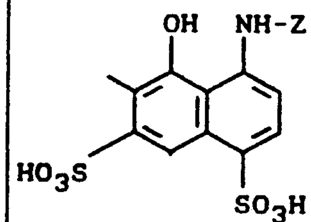 | 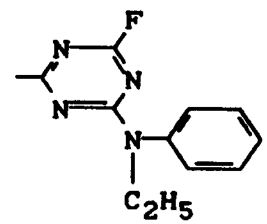 | Blaust. Rot |
| 11 | 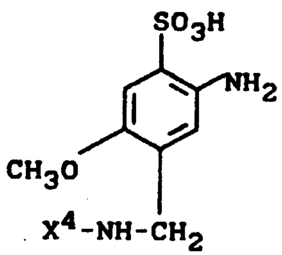 | " | 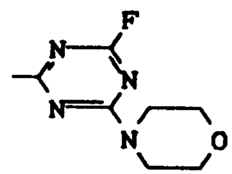 | Rot |
| 12 | 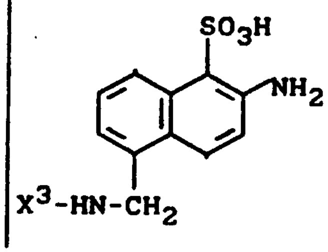 | " | 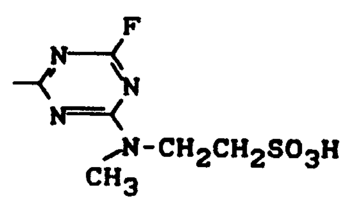 | Rot |

| | Diazokomponente | Kupplungskomponente | Z | Farbton |
|---|---|---|---|---|
| 13 | 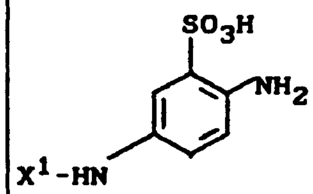 | 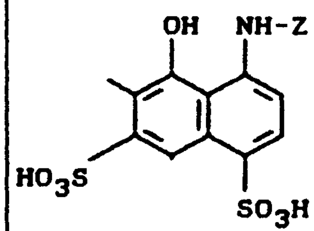 | 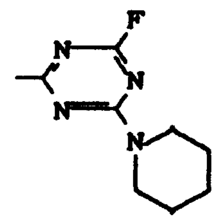 | Rotviolett |
| 14 | 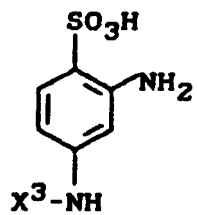 | " | 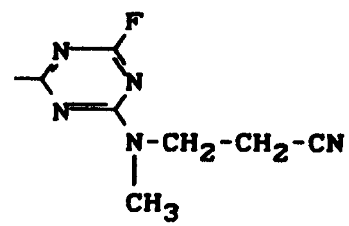 | Rot |
| 15 | " | 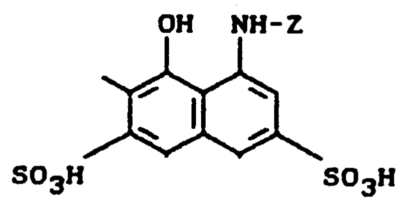 | 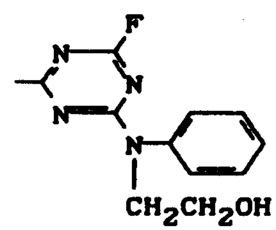 | Rot<br>$\lambda_{max}$=514nm,<br>Sh 530 nm |

| | Diazokomponente | Kupplungskomponente | Z | Farbton |
|---|---|---|---|---|
| 16 | 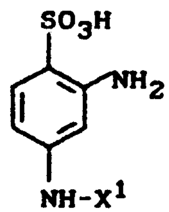 | 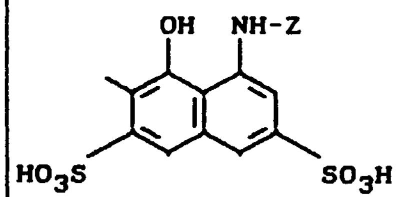 | 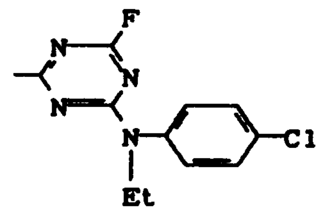 | Rot |
| 17 | 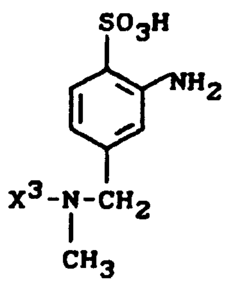 | " | 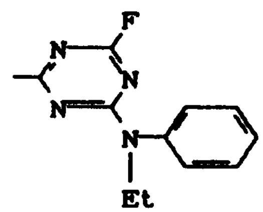 | Rot<br>$\lambda_{max}$=512 nm,<br>534 nm |
| 18 | 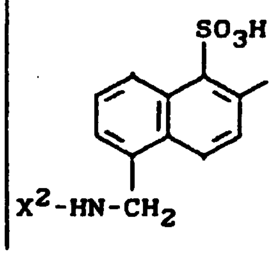 | " | 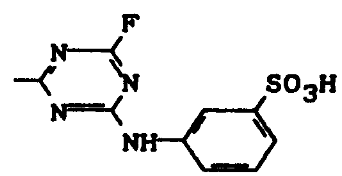 | Blaust. Rot |

| | Diazokomponente | Kupplungskomponente | Z | Farbton |
|---|---|---|---|---|
| 19 | 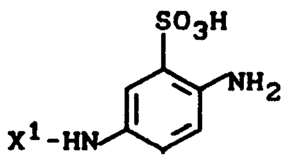 | 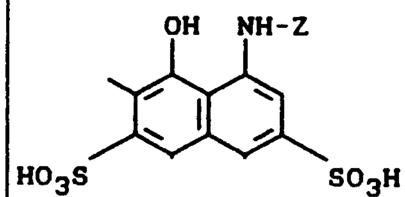 | 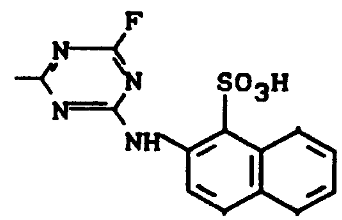 | Rotviolett |
| 20 | 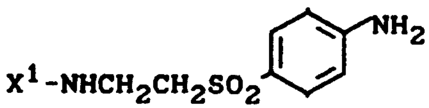 | " | 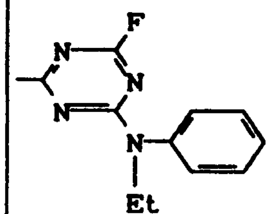 | Rot |
| 21 | 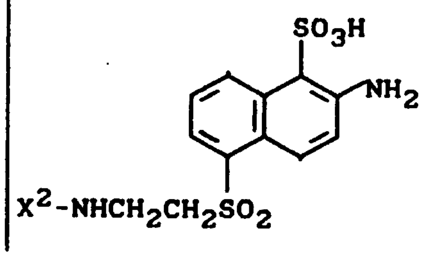 | " | 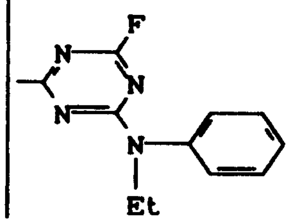 | Rot |

| | Diazokomponente | Kupplungskomponente | Z | Farbton |
|---|---|---|---|---|
| 22 | 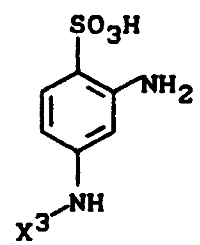 | 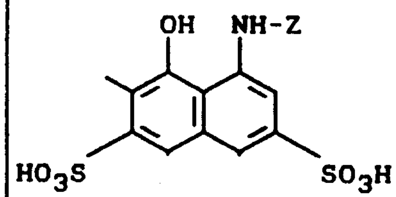 | 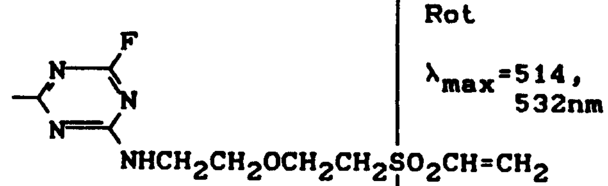 | Rot $\lambda_{max}$=514, 532nm |
| 23 | 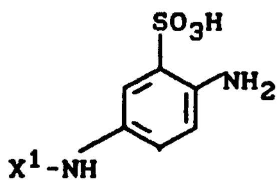 | " | 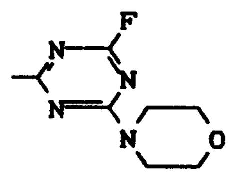 | Rotviolett |
| 24 | 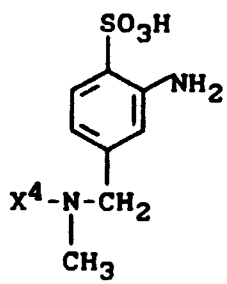 | " | " | Rot $\lambda_{max}$=514, 533nm |

| | Diazokomponente | Kupplungskomponente | Z | Farbton |
|---|---|---|---|---|
| 25 | 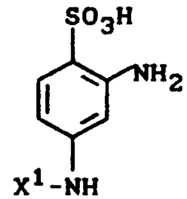 | 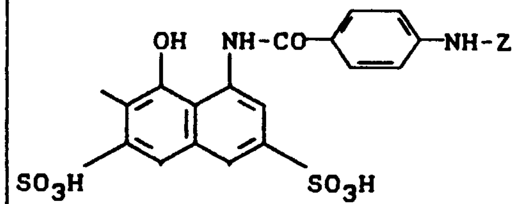 | 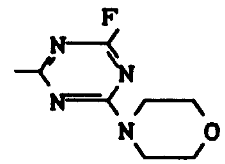 | Rot |
| 26 | 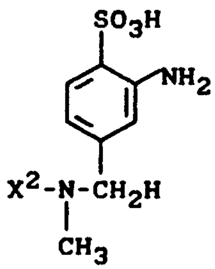 | " | 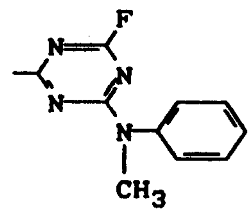 | Rot $\lambda_{max}$= 512nm, 535nm |
| 27 | 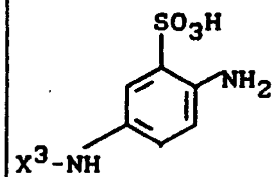 | 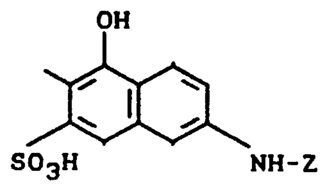 | 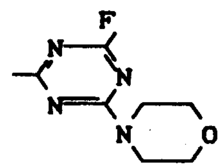 | Schar-lach |

| | Diazokomponente | Kupplungskomponente | Z | Farbton |
|---|---|---|---|---|
| 28 | 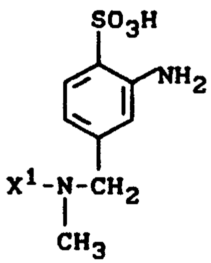 | 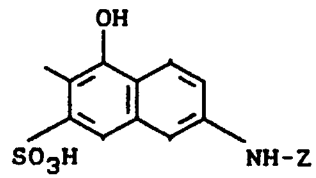 | 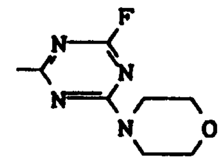 | Orange |
| 29 | 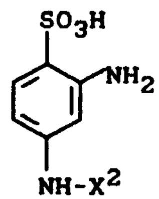 | " | 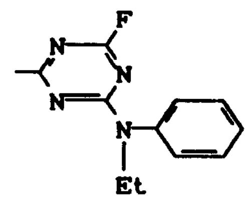 | Orange |
| 30 | 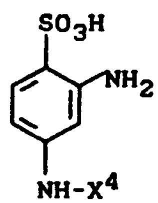 | 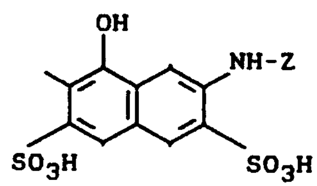 | " | Scharlach-rot $\lambda_{max}$ = 506 nm |

| | Diazokomponente | Kupplungskomponente | Z | Farbton |
|---|---|---|---|---|
| 31 | 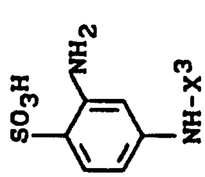 | 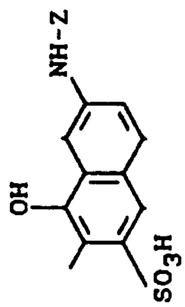 | 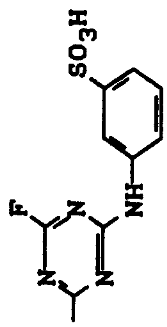 | Orange |

Beispiel 32

0,2 Mol 1-Amino-8-hydroxynaphthalin-3,6-disulfonsäure werden in 450 ml Wasser mit Natronlauge bei pH 8-9 gelöst und mit 0,22 Mol 2,4,6-Trifluorpyrimidin versetzt. Die Kondensation erfolgt bei 35-40 °C,

wobei der pH mit Sodalösung gehalten wird.

Kuppelt man mit der in Beispiel 1 beschriebenen Diazotierung unter gleichen Bedingungen, so erhält man nach Aussalzen, Isolieren, Trocknen den Farbstoff der Formel

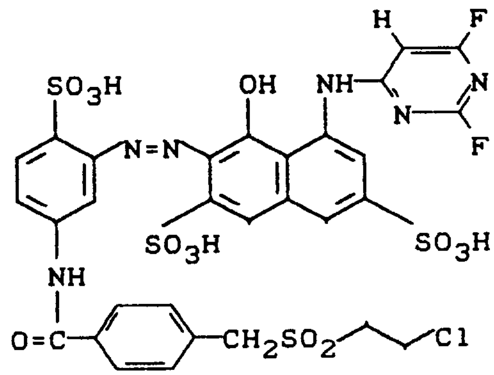

der Baumwolle in roten Tönen färbt.

Beispiel 33

0,2 Mol 8-(4'-Amino-benzoylamino)-1-naphthol-3,6-disulfonsäure werden in 800 ml Wasser mit Sodalösung (20 g/100 ml) bei einem pH-Wert von 7 gelöst. Mit 10 %iger HCl-Lösung wird pH 4,5 eingestellt. Man gibt 0,2 Mol 2,4,6-Trifluorpyrimidin zu und heizt auf 30 ° C auf. Mit Sodalösung (20 g/100 ml) wird ein pH-Wert von 4,5-6 gehalten. Die Umsetzung ist nach 4 Stunden beendet.

Man gibt nun 0,2 Mol des Diazoniumsalzes aus Beispiel 1 zu und hält gleichzeitig durch Zutropfen von Sodalösung (20 g/100 ml) einen pH-wert von 7,5-8. Nach beendeter Kupplung salzt man mit NaCl aus, isoliert und trocknet. Der Farbstoff der Formel

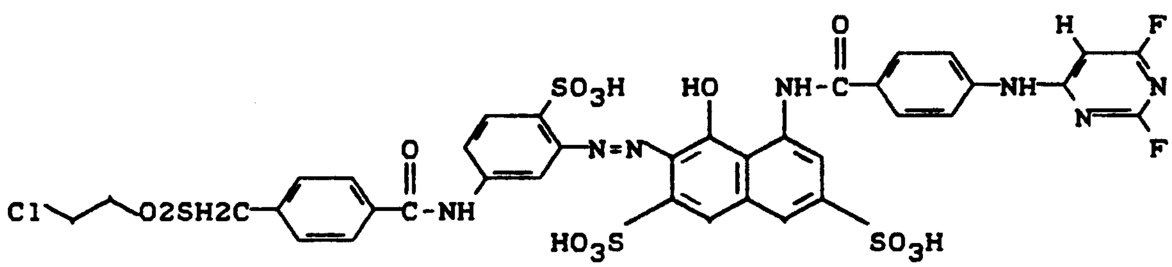

färbt Baumwolle in roten Tönen.

Die Beispiele 34-68 der Formel

X{D}N = N{K}Z

lassen sich wie in Beispiel 32 bez 33 beschrieben herstellen, wenn die entsprechenden Zwischenprodukte eingesetzt werden. Sie färben Baumwolle in den angegebenen Farbtönen. Für X steht $X^1$ bis $X^4$ mit den oben angegebenen Bedeutungen.

| | Diazokomponente | Kupplungskomponente | Z | Farbton |
|---|---|---|---|---|
| 34 | 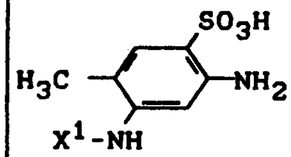 | 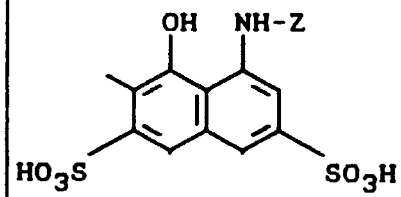 | 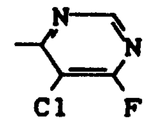 | Rot |
| 35 | 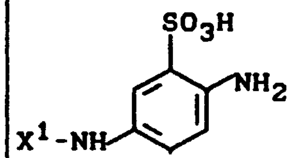 | 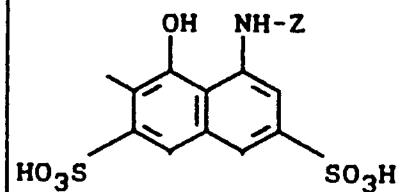 | 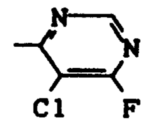 | Rotviolett |
| 36 | 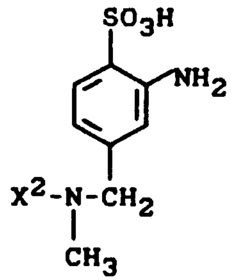 | " | " | Rot |
| 37 | 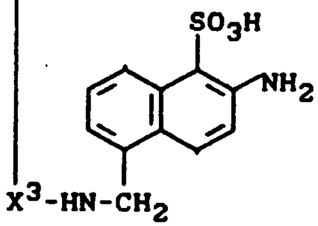 | " | " | Blaust. Rot |

| | Diazokomponente | Kupplungskomponente | Z | Farbton |
|---|---|---|---|---|
| 38 | 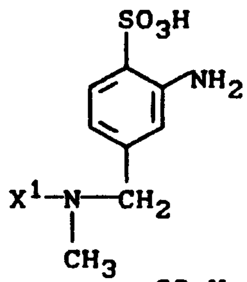 | 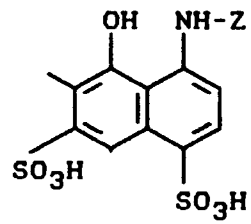 | 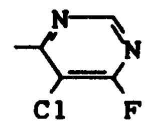 | Rot |
| 39 | 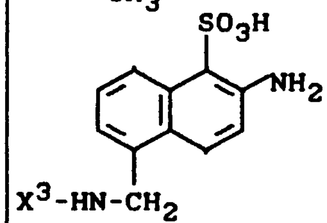 | " | " | Rot |
| 40 | 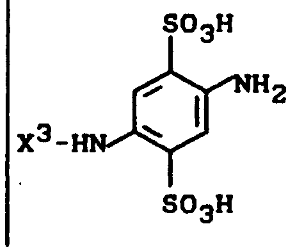 | " | " | Blaust. Rot |

| | Diazokomponente | Kupplungskomponente | Z | Farbton |
|---|---|---|---|---|
| 41 | 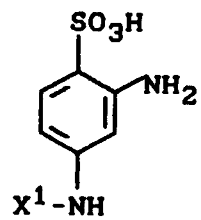 | 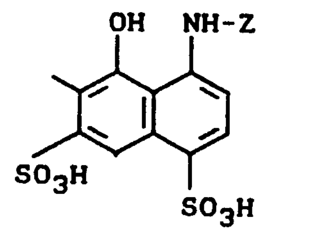 | 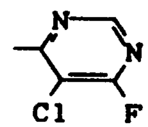 | Rot |
| 42 | 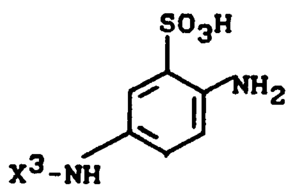 | 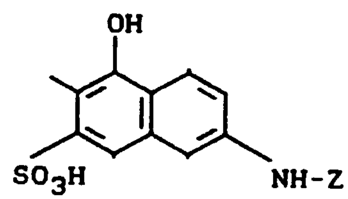 | " | Scharlach |
| 43 | 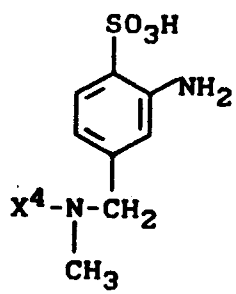 | " | " | Orange |

| | Diazokomponente | Kupplungskomponente | Z | Farbton |
|---|---|---|---|---|
| 44 | 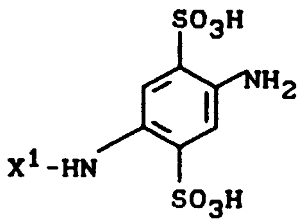 | 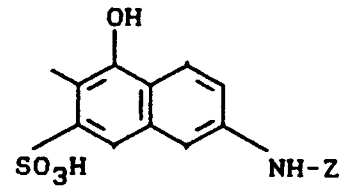 | 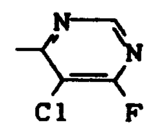 | Rot |
| 45 | 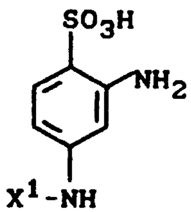 | 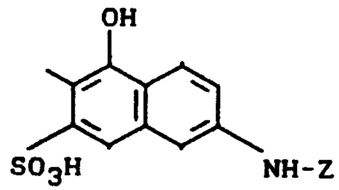 | " | Orange |
| 46 | 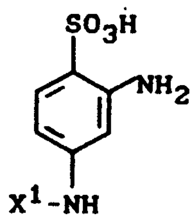 | 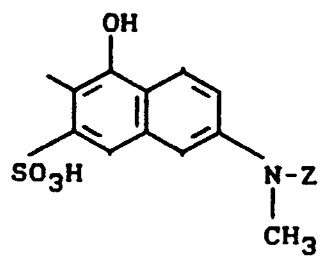 | 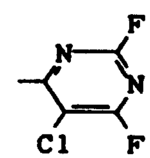 | Orange |

| | Diazokomponente | Kupplungskomponente | Z | Farbton |
|---|---|---|---|---|
| 47 | 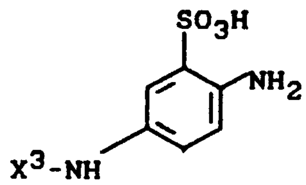 | 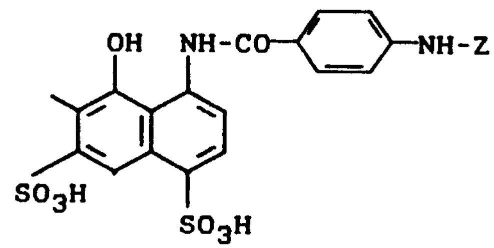 | 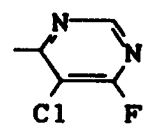 | Blaust. Rot |
| 48 | 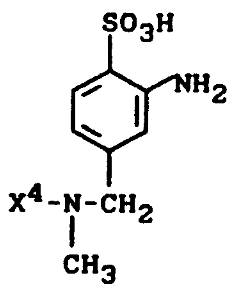 | " | " | Rot |
| 49 | 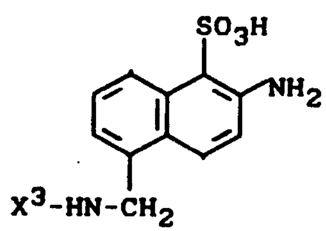 | " | 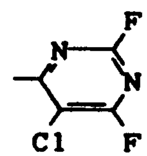 | Rot |

| | Diazokomponente | Kupplungskomponente | Z | Farbton |
|---|---|---|---|---|
| 50 | 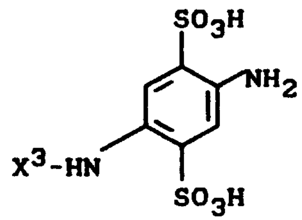 | 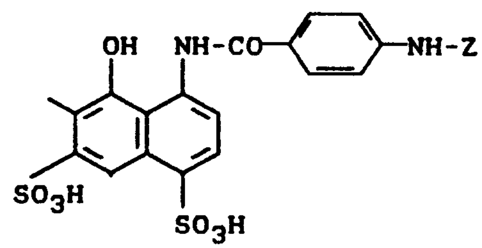 | 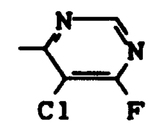 | Blaust. R |
| 51 | 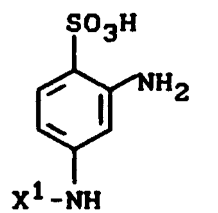 | 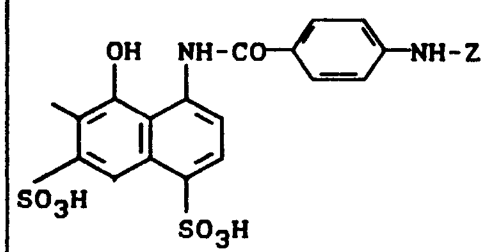 | " | Rot |
| 52 | 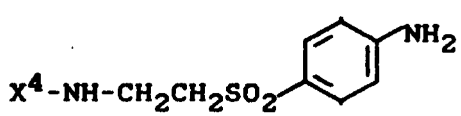 | 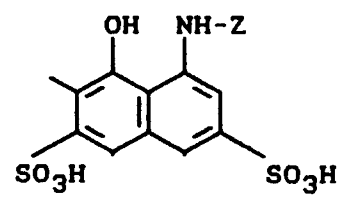 | " | Rot |

| | Diazokomponente | Kupplungskomponente | Z | Farbton |
|---|---|---|---|---|
| 53 | 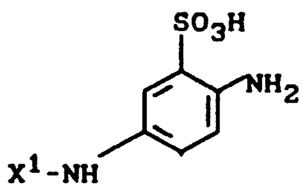 | 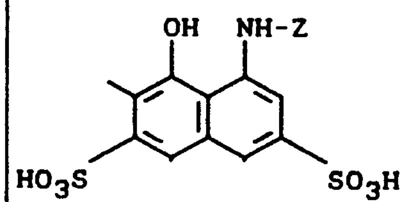 | 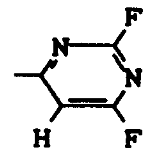 | Rotviolett |
| 54 | 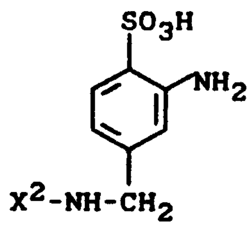 | " | " | Rot |
| 55 | 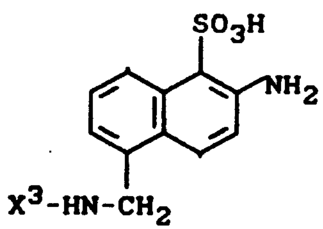 | " | " | Blaust. Rot |

| | Diazokomponente | Kupplungskomponente | Z | Farbton |
|---|---|---|---|---|
| 56 | 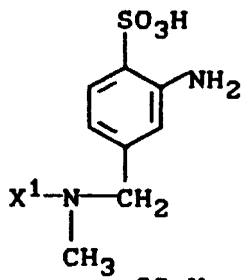 | 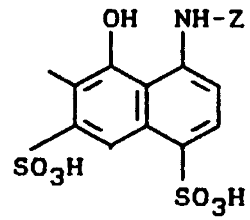 | 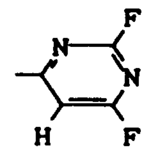 | Rot |
| 57 | 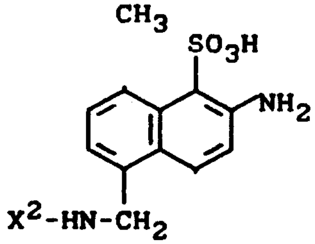 | " | " | Rot |
| 58 | 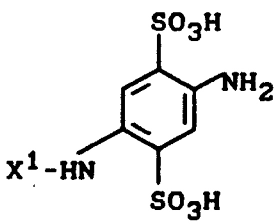 | " | " | Blaust. Rot |

| | Diazokomponente | Kupplungskomponente | Z | Farbton |
|---|---|---|---|---|
| 59 | 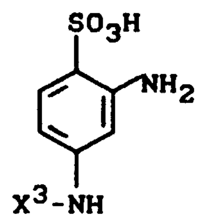 | 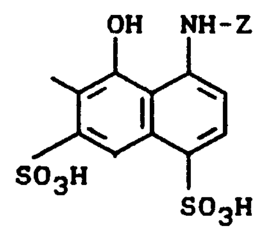 | 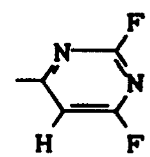 | Rot |
| 60 | 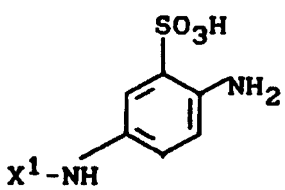 | 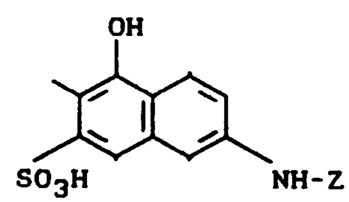 | " | Scharlach |
| 61 | 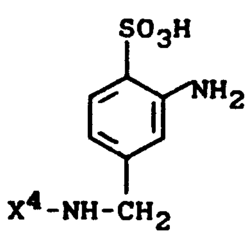 | " | " | Orange |

| | Diazokomponente | Kupplungskomponente | Z | Farbton |
|---|---|---|---|---|
| 62 | 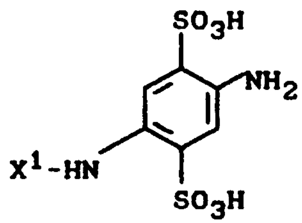 | 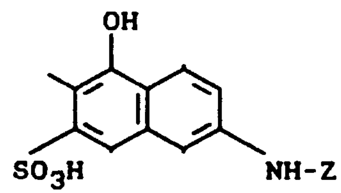 | 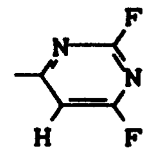 | Rot |
| 63 | 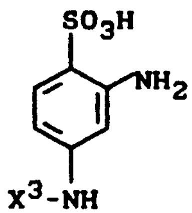 | 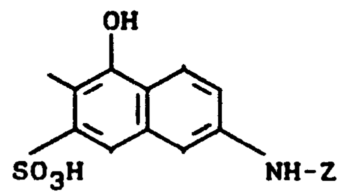 | " | Orange |
| 64 | 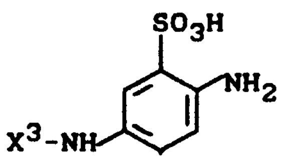 | 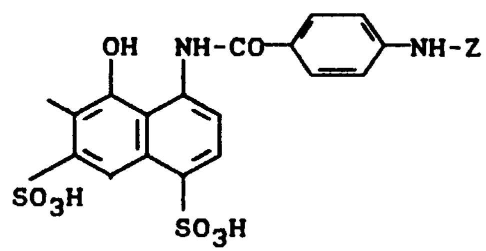 | 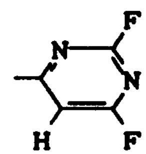 | Blaust. Rot |
| 65 | 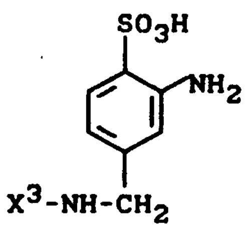 | " | " | Rot |

| | Diazokomponente | Kupplungskomponente | Z | Farbton |
|---|---|---|---|---|
| 66 | 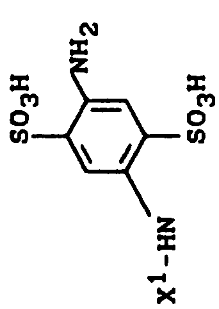 | 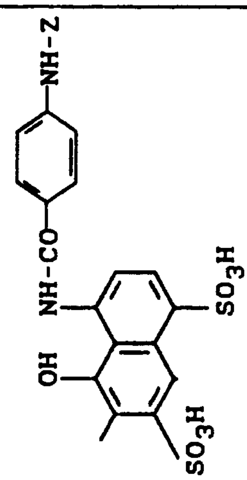 | 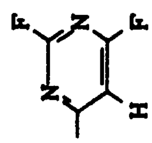 | Blaust. Rot |
| 67 | 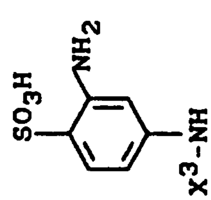 | 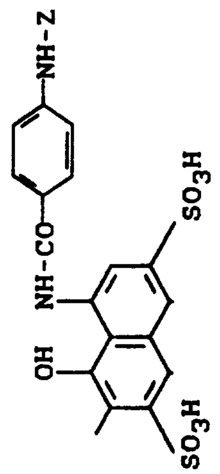 | " | Rot |
| 68 | 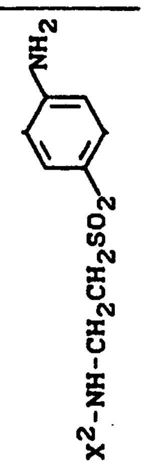 | 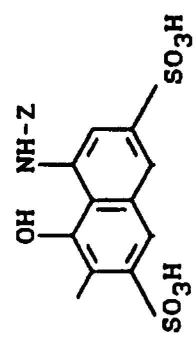 | " | Rot |

Beispiel 69

0,2 Mol 1-Amino-8-hydroxynaphthalin-3,6-disulfonsäure werden in 650 ml Wasser mit Natronlauge bei pH 6,5 gelöst und auf 35 °C erwärmt. Zu dieser Lösung werden 0,21 Mol 2,3-Dichlorchinoxalin-6-carbonsäurechlorid hinzugefügt und der pH mit Sodalösung auf 6-7 eingestellt und ca, 6 h bei 35 °C kondensiert.

Danach wird mit 3-[4-(β-Chlorethylsulfonyl-methyl)-benzoylaminol-anilin-4-sulfonsäure-Diazotierung analog Beispiel 1 gekuppelt.

Der Farbstoff wird ausgesalzen, isoliert, getrocknet und gemahlen. Er hat folgende Formel

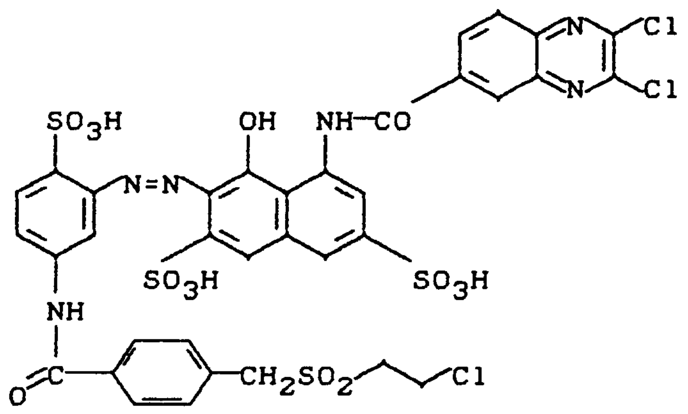

und färbt Baumwolle in roten Tönen.

Wie oben beschrieben, können die Farbstoffe der Beispiele 70-80 der Formel

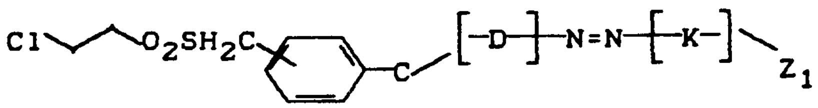

mit den angeführten Diazo- und Kupplungskomponenten (K) herstellt werden, wobei

$Z_1$ =

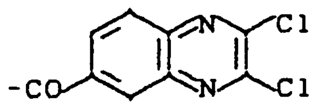

und X = $X^1$ bis $X^4$ die oben angegebene Bedeutung hat.

| Bsp. | Diazokomponente | K | Farbton |
|---|---|---|---|
| 70 | 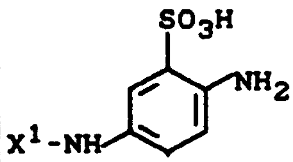 | 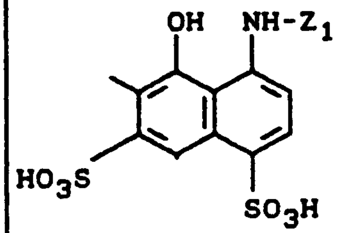 | Blaust. Rot |
| 71 | 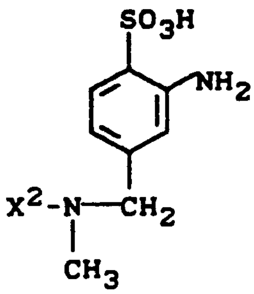 | " | Rot |
| 72 | 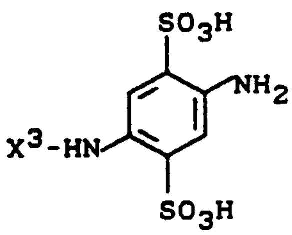 | " | Blaust. Rot |
| 73 | 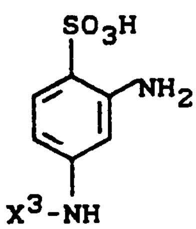 | " | Rot |
| 74 | 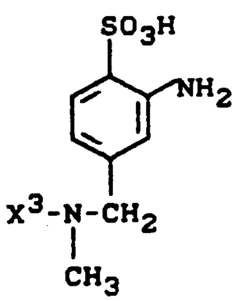 | 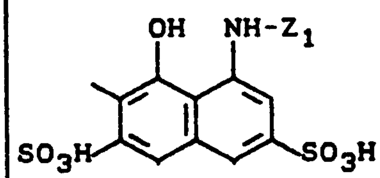 | Rot |

| Bsp. | Diazokomponente | K | Farbton |
|---|---|---|---|
| 75 | 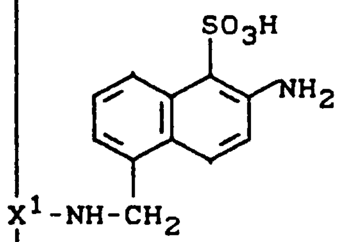 | 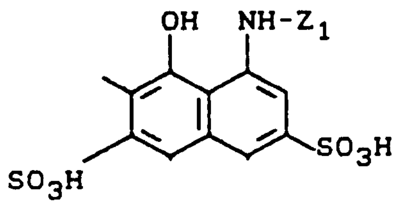 | Blaust. Rot |
| 76 | 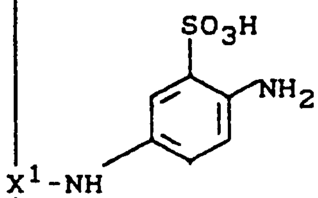 | 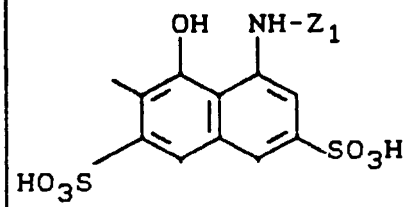 | Rotviolett |
| 77 | 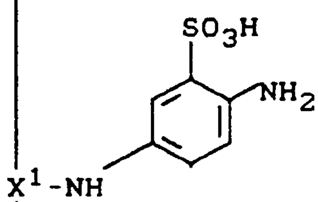 | 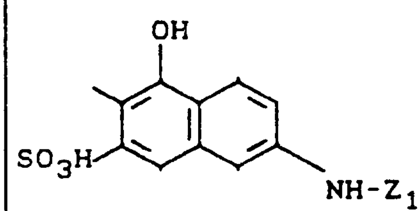 | Scharlach |
| 78 | 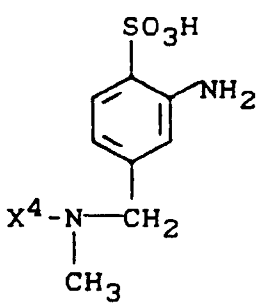 | " | Orange |
| 79 | 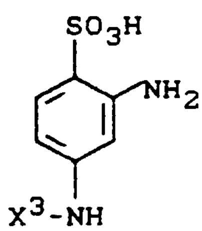 | " | Orange |

| Bsp. | Diazokomponente | K | Farbton |
| --- | --- | --- | --- |
| 80 | 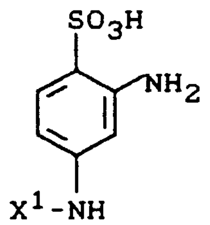 | 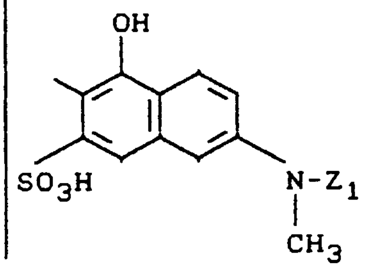 | Orange |

Beispiel 81

0,26 Mol 3-(2-Sulfatoethyl)sulfonyl-anilin werden in 250 ml Wasser mit 1 molarer Natriumhydrogencarbonatlösung neutral gelöst. Man gibt 250 g Eis zu und tropft 0,27 Mol Cyanurfluorid ein, Mit 1 molarer Natriumhydrogencarbonatlösung wird ein pH-Wert von 4-5 gehalten.

Man rührt 10 Minuten nach.

0,2 Mol 8-(4'-Amino-benzoylamino)-1-naphthol-3,6-disulfonsäure werden in 300 ml Wasser verrührt und mit 11 %iger Lithiumhydroxydlösung neutral gelöst. Diese Lösung gibt man zur obigen Kondensationslösung zu. Mit Sodalösung wird ein pH-Wert von 6,5-7 gehalten, die Temperatur steigt auf ca, 10 °C. Nach beendeter Reaktion gibt man 0,2 Mol des Diazoniumsalzes aus Beispiel 1 zu und hält gleichzeitig durch Zutropfen von Sodalösung (20 g/100 ml) einen pH-Wert von 7,5-8. Nach 3 Stunden salzt man mit NaCl aus, isoliert und trocknet. Der erhaltene Farbstoff der Formel

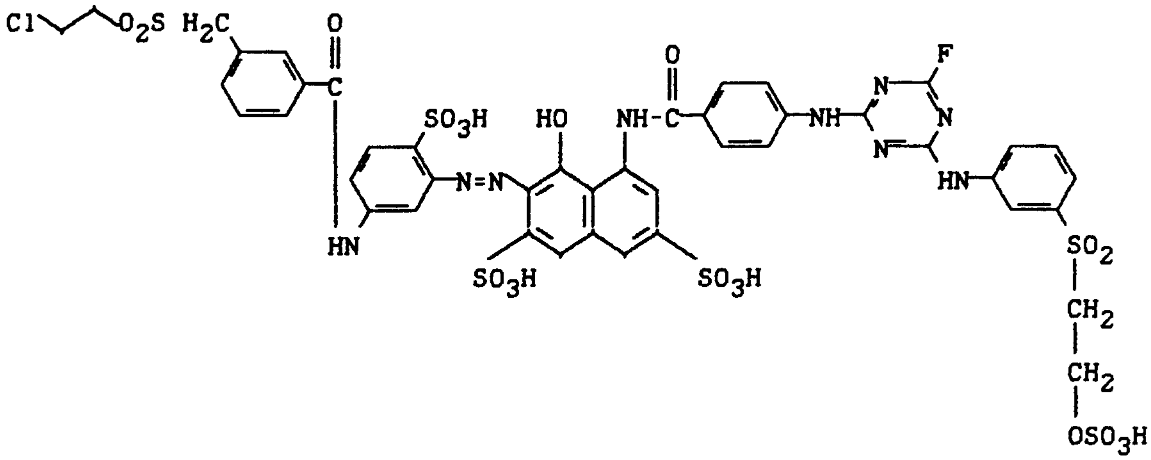

färbt Baumwolle in roten Tönen.

Die Farbstoffe der Beispiele 81-90 erhält man analog unter Verwendung der entsprechenden Diazokomponenten, Kupplungskomponenten und Amine. Sie besitzen die allgemeine Formel

$X\{D\}N=N\{K\}Z$ ,

wobei

X = $X^1$ bis $X^4$ mit der oben angegebenen Bedeutung.

| Bsp. | Diazokomponente | Kupplungskomponente | Z | Farbton |
|---|---|---|---|---|
| 81a | 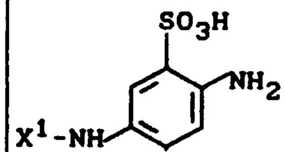 | 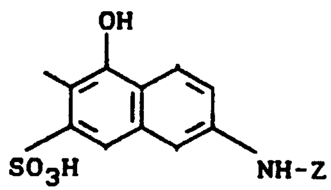 | 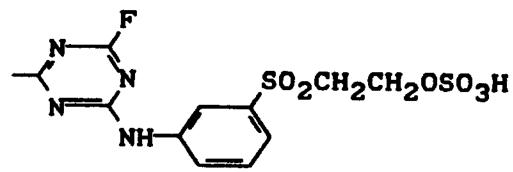 | Scharlach |
| 82 | 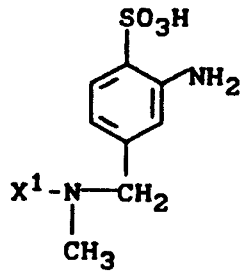 | " | " | Orange |
| 83 | 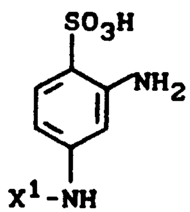 | 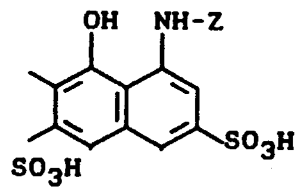 | 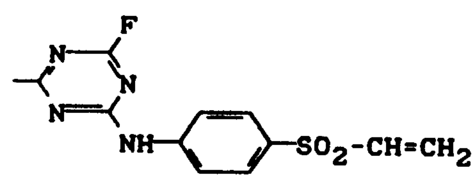 | Rot $\lambda_{max}$= 515nm, SH 535nm |

| Bsp. | Diazokomponente | Kupplungskomponente | Z | Farbton |
|---|---|---|---|---|
| 84 | 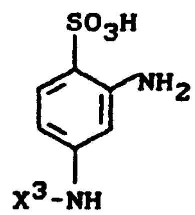 | 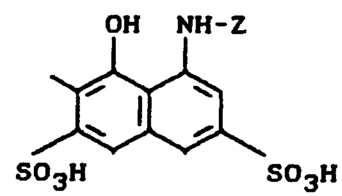 | 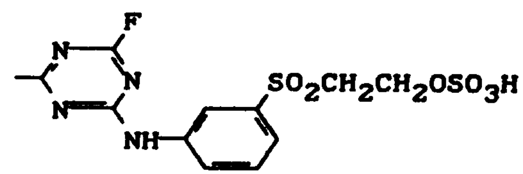 | Rot |
| 85 | 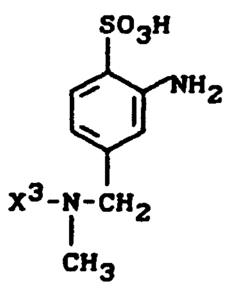 | " | " | Rot |
| 86 | 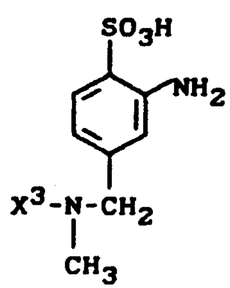 | 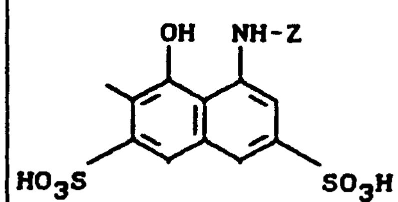 | 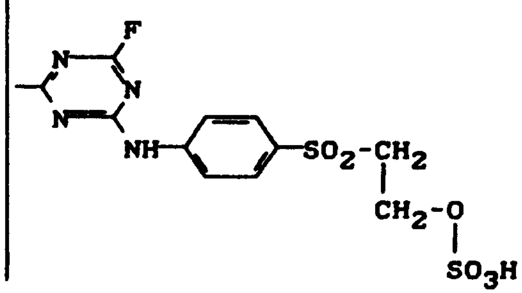 | Rot |

| Bsp. | Diazokomponente | Kupplungskomponente | Z | Farbton |
|---|---|---|---|---|
| 87 | 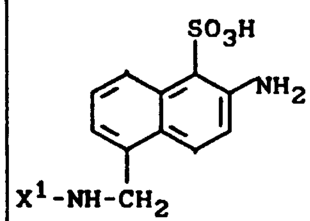 | 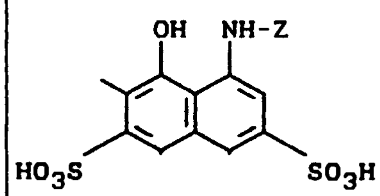 | 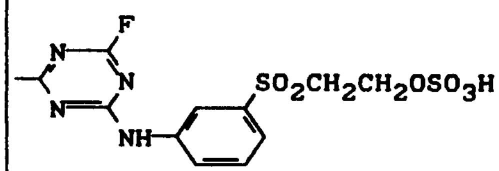 | Rot |
| 88 | 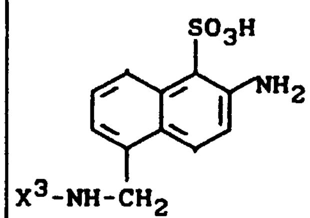 | " | 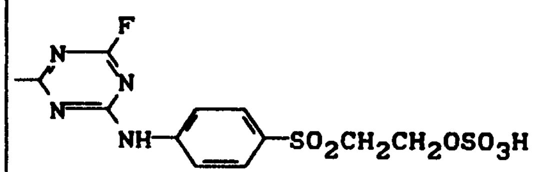 | Blaust. Rot |
| 89 | 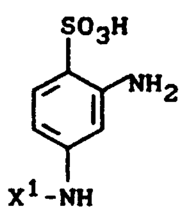 | 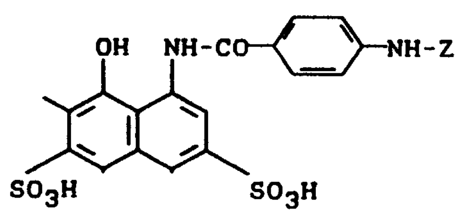 | " | Rot |

| Bsp. | Diazokomponente | Kupplungskomponente | Z | Farbton |
|---|---|---|---|---|
| 90 | 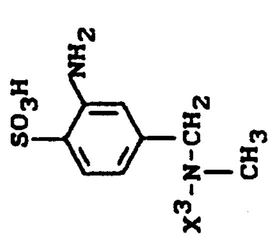 | 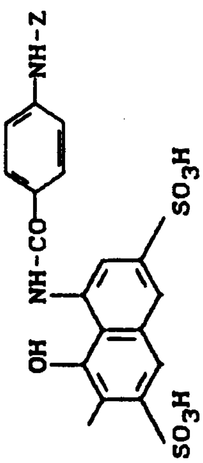 | 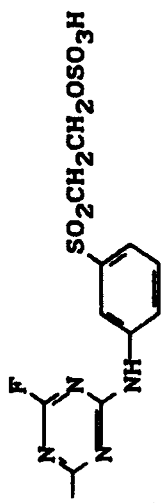 | Rot |

Beispiel 91

a) 0,2 Mol 2-Amino-4-(aminomethyl)-benzolsulfonsäure werden in 500 ml Wasser mit konz. Natronlauge bei einem pH-Wert von 8 gelöst. Man gibt 0,25 Mol 3-($\beta$-Chlorethylsulfonyl-methyl)-benzoylchlorid zu.

Durch gleichzeitige Zugabe von 11 %iger Lithiumhydroxydlösung wird ein pH-Wert von 7-7,5 gehalten. T = 30 ° C - 40 ° C. Man kühlt auf 0 ° C ab und gibt 56 ml 30 %ige Salzsäure zu.

Innerhalb von 1 Stunde tropft man bei 0-5 ° C 47 ml Natriumnitritlösung (30 g/100 ml) ein. Die Diazotierung rührt 1 Stunde bei 0-5 ° C nach. Anschließend wird überschüssiges Nitrit durch Zugabe von Amidosulfonsäure zerstört.

b) 0,2 Mol 1-Amino-8-hydroxynaphthalin-4,6-disulfonsäure werden in 300 ml Wasser durch Zugabe von konz. Natronlauge bei pH = 5-7 gelöst. Man gibt 300 g Eis zu und streut 0,21 Mol Cyanurchlorid ein. Mit Sodalösung (20 g/100 ml) wird ein pH-Wert von 4-4,5 bei 0 ° C gehalten. Nach beendeter Kondensation gibt man 0,2 Mol einer neutralen Lösung von 4-Chloranilin in ca, 200 ml Wasser zu. Man heizt auf 20-30 ° C auf und hält mit Sodalösung (20 g/100 ml) pH 6-7. Nach ca. 1 Stunde kühlt man auf 10 ° C ab und gibt die obige Diazotierung a) zu.

Gleichzeitig hält man mit Sodalösung (20 g/100 ml) pH 7-7,5.

Nach beendeter Kupplung salzt man mit NaCl aus, isoliert und trocknet. Der erhaltene Farbstoff der Formel

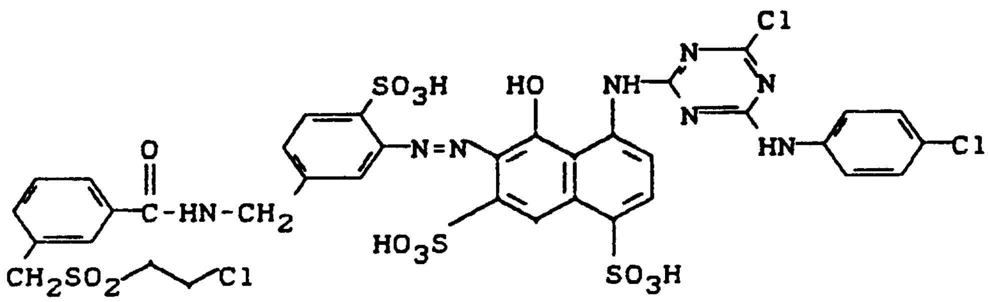

färbt Baumwolle in roten Tönen.

Durch Variation der Diazokomponenten, Kupplungskomponenten und Amine erhält man die Farbstoffe der folgenden Beispiele 92-111 der allgemeinen Formel

X-[D]-N = N-[K]-Z

Sie färben Baumwolle in den angegebenen Tönen.

$X^1$ und $X^3$ haben die oben angegebene Bedeutung.

| Bsp. | Diazokomponente | Kupplungskomponente | Z | Farbton |
|---|---|---|---|---|
| 92 | 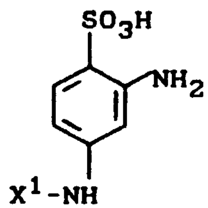 | 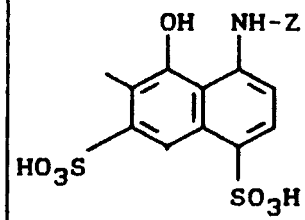 | 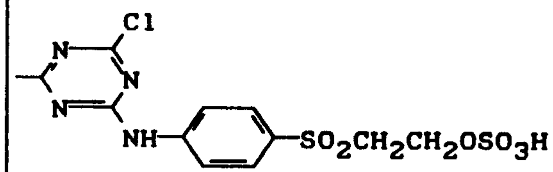 | Gelbst. Rot |
| 93 | 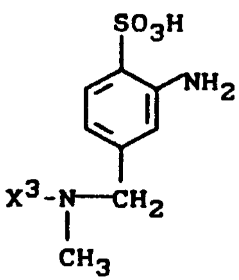 | 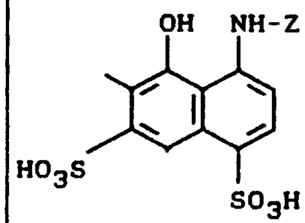 | 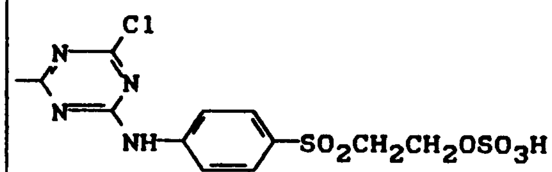 | Gelbst. Rot |
| 94 | 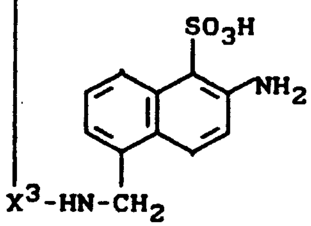 | 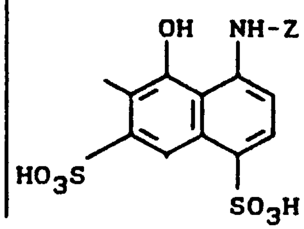 | 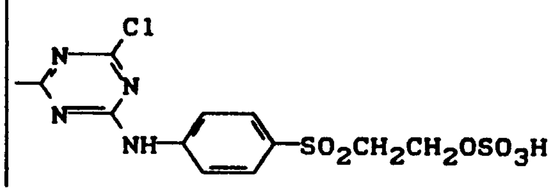 | Rot |

| Bsp. | Diazokomponente | Kupplungskomponente | Z | Farbton |
|---|---|---|---|---|
| 95 | 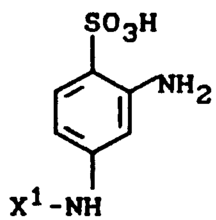 | 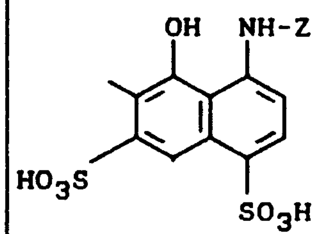 | 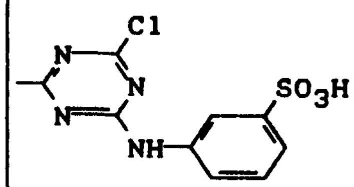 | Gelbst. Rot |
| 96 | 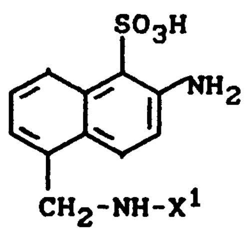 | 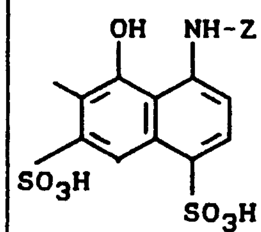 | 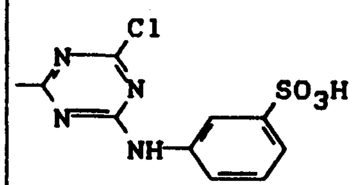 | Rot |
| 97 | 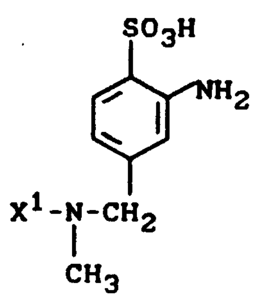 | " | 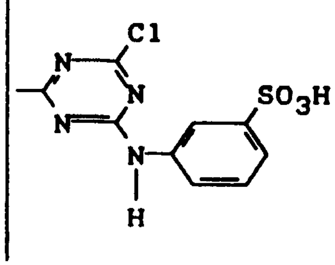 | Gelbst. Rot |

| Bsp. | Diazokomponente | Kupplungskomponente | Z | Farbton |
|---|---|---|---|---|
| 98 | 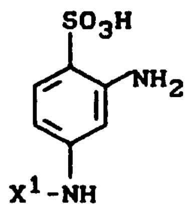 | 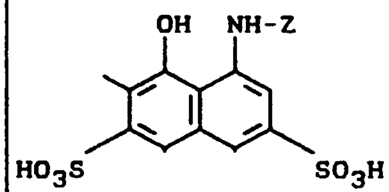 | 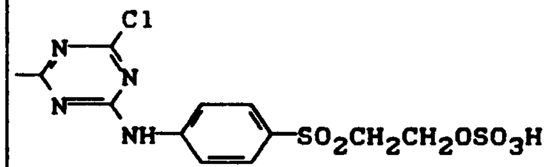 | Rot |
| 99 | 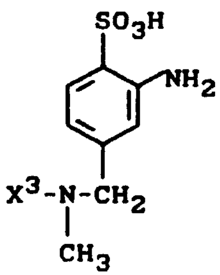 | 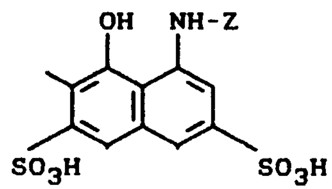 | " | Rot |
| 100 | 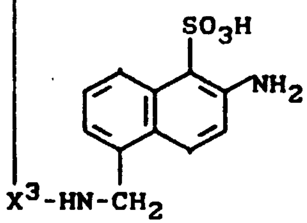 | " | 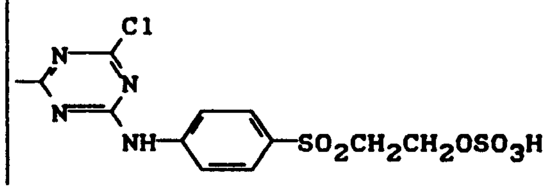 | Blaust. Rot |

| Bsp. | Diazokomponente | Kupplungskomponente | Z | Farbton |
|---|---|---|---|---|
| 101 | 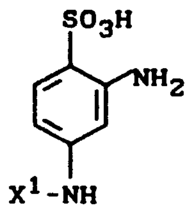 | 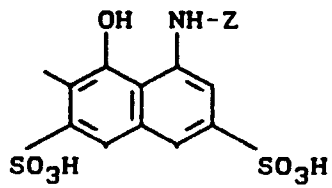 | 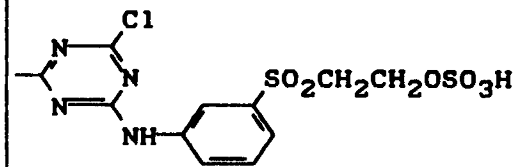 | Rot |
| 102 | 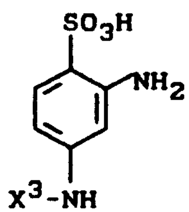 | 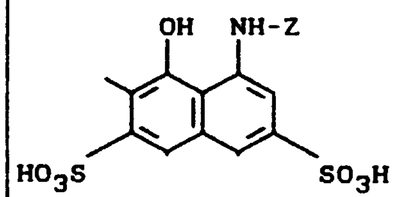 | 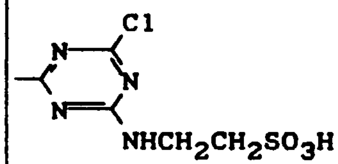 | Rot |
| 103 | 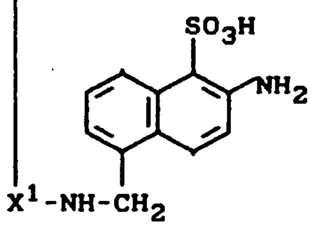 | " | 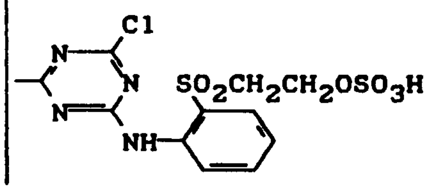 | Rot |

| Bsp. | Diazokomponente | Kupplungskomponente | Z | Farbton |
|---|---|---|---|---|
| 104 | 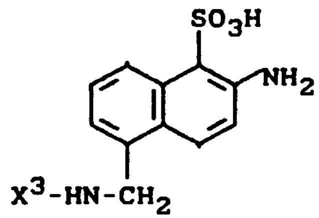 | 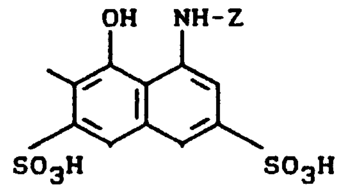 | 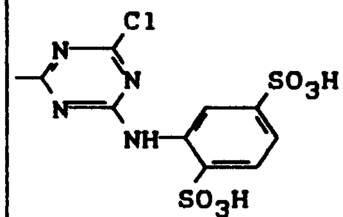 | Blaust. Rot |
| 105 | 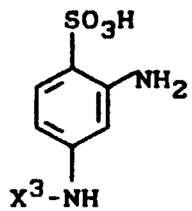 | 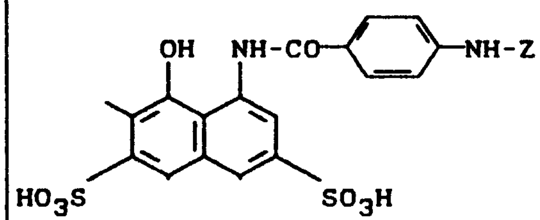 | 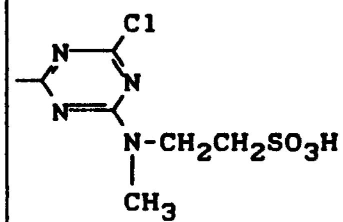 | Rot |
| 106 | 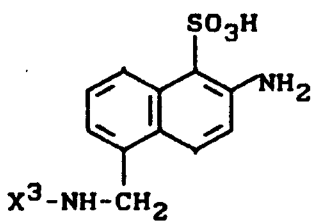 | " | 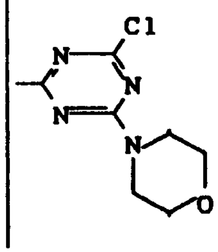 | Rot |

| Bsp. | Diazokomponente | Kupplungskomponente | Z | Farbton |
|---|---|---|---|---|
| 107 | 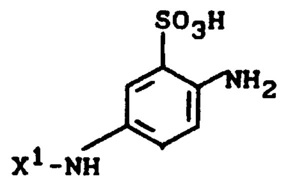 | 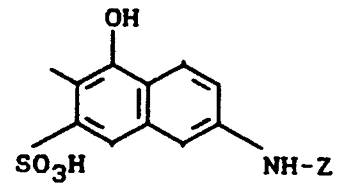 | 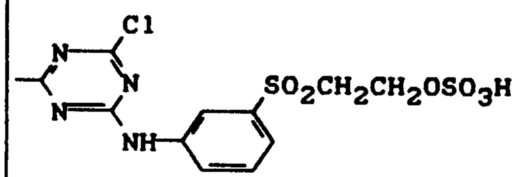 | Scharlach |
| 108 | 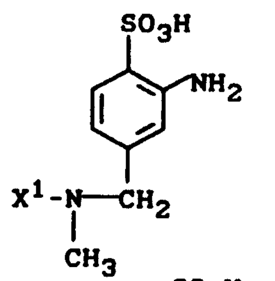 | " | " | Orange |
| 109 | 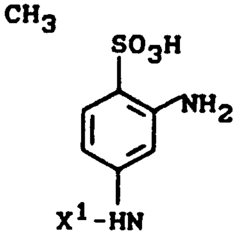 | " | 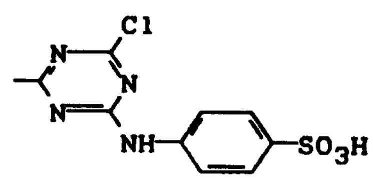 | Orange |

| Bsp. | Diazokomponente | Kupplungskomponente | Z | Farbton |
|---|---|---|---|---|
| 110 | 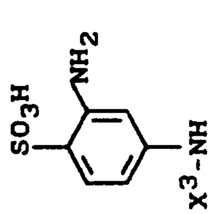 | 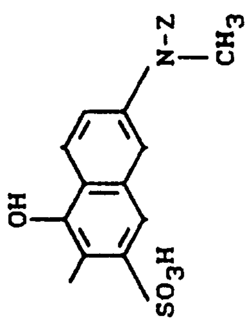 | 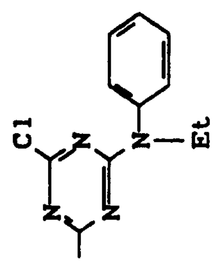 | Orange |
| 111 | 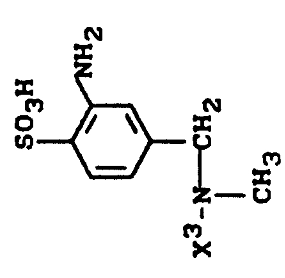 | " | 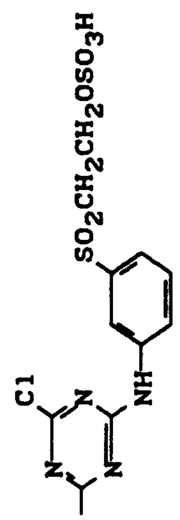 | Orange |

Beispiel 112

0,2 Mol 2-Aminonapthalinsulfonsäure werden in 280 ml Wasser mit Lithiumhydroxyd bei pH 7 gelöst und 250 g Eis zugegeben. Danach werden 0,21 Mol Cyanurfluorid zugegeben und der pH mit Sodalösung

bei ca. 4 gehalten. Zu der so entstandenen Suspension wird eine neutrale Lösung von 2,4-Diaminobenzolsulfonsäure gegeben und der pH auf 7-7,5 angehoben. Die Reaktionstemperatur wird auf 20 °C angehoben und ca. 1 Stunde gerührt. Die Reaktionsmischung wird auf 0 °C gekühlt und mit HCl und Natriumnitritlösung bei pH 2-2,2 diazotiert. Nach dem Vernichten des Nitritübarschußes mit Amidosulfonsäure kuppelt man auf 1-[4'-(β-Chlorethylsulfonyl-methyl)-benzoylamino]-8-naphthol-3,6-disulfonsäure, hergestellt aus 4-(β-Chlorethylsulfonyl-methyl)-benzoylchlorid und 1-Amino-8-hydroxynaphthalin-3,6-disulfonsäure, bei pH 5-6 und 10-15 °C. Aussalzen, Isolieren und Trocknen ergibt den Farbstoff der Formel

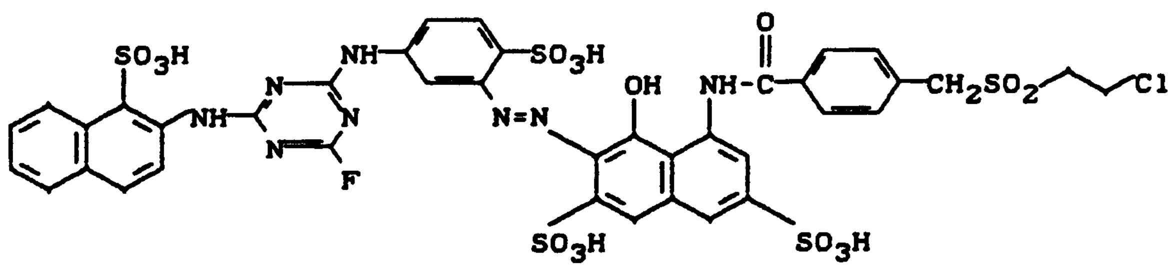

der Baumwolle in roten Tönen färbt.

Die Farbstoffe der Beispiele 113-124 der allgemeinen Formel

$Z\{D\}N=N\{K\}X$

mit $X^1$ und $X^3$ der oben angegebenen Bedeutung lassen sich auf analoge Weise herstellen unter Verwendung der angegebenen Diazo- und Kupplungskomponenten.

In einigen Fällen ist es jedoch günstiger, zunächst das Azochromophor zu synthetisieren und dann die Reaktivkomponenten oder eine davon (Z) anzukondensieren. Sie färben Baumwolle in den angegebenen Farbtönen.

| Bsp. | Diazokomponente | Kupplungskomponente | Z | Farbton |
|---|---|---|---|---|
| 113 | 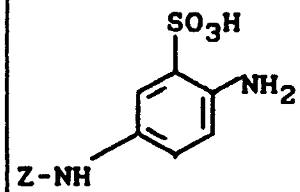 | 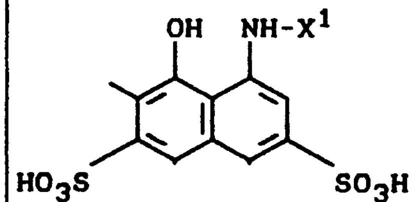 | 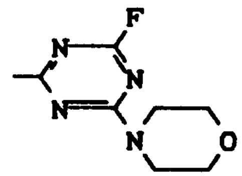 | Rotviolett |
| 114 | 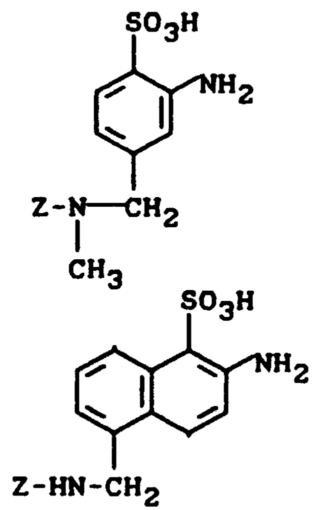 | " | " | Rot |
| 115 |  | " | 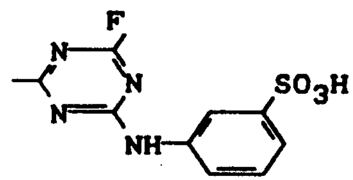 | Blaust. Rot |

| Bsp. | Diazokomponente | Kupplungskomponente | Z | Farbton |
|---|---|---|---|---|
| 116 | 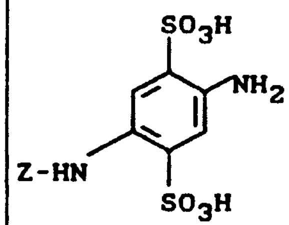 | 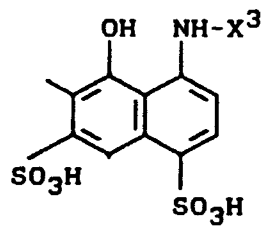 | 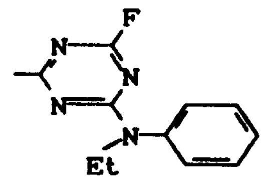 | Blaust. Rot |
| 117 | 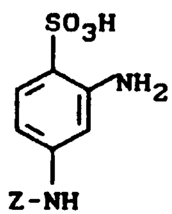 | 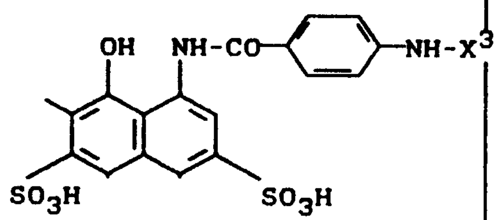 | " | Rot |
| 118 | 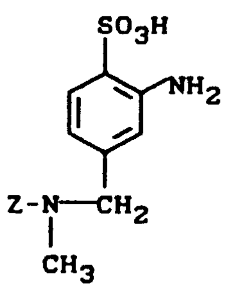 | " | 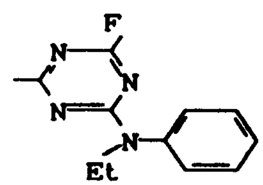 | Rot |

| Bsp. | Diazokomponente | Kupplungskomponente | Z | Farbton |
|---|---|---|---|---|
| 119 | 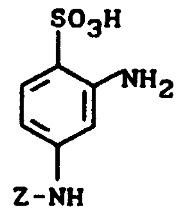 | 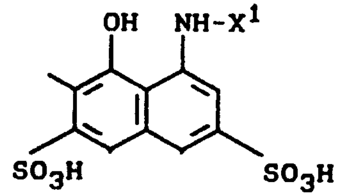 | 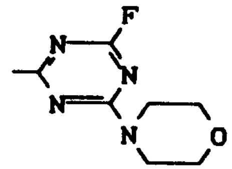 | Rot |
| 120 | 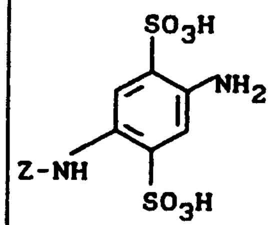 | 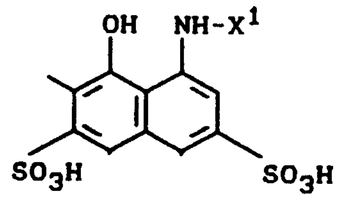 | 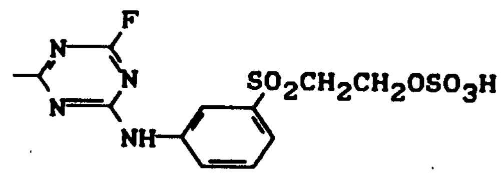 | Rotviolett |
| 121 | 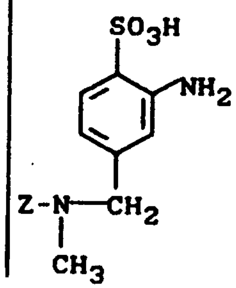 | " | | Rot |

| Bsp. | Diazokomponente | Kupplungskomponente | Z | Farbton |
|---|---|---|---|---|
| 122 | 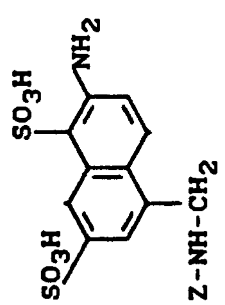 | 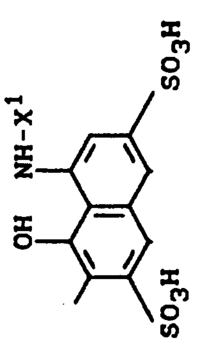 | 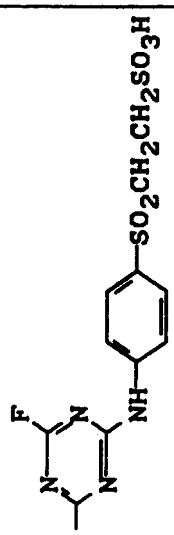 | Blaust. Rot |
| 123 | 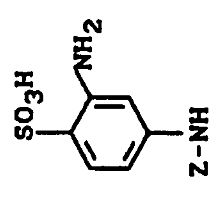 | 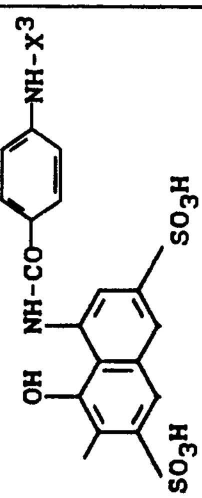 | " | Rot |
| 124 | 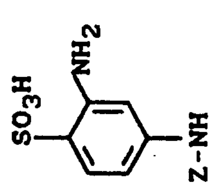 | 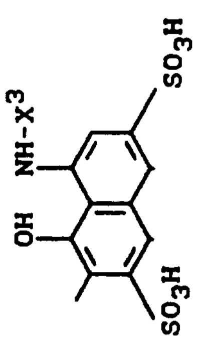 | 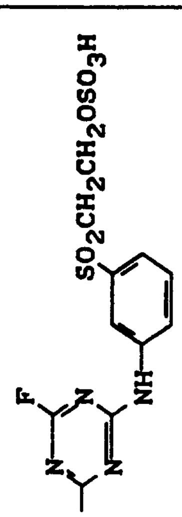 | Rot |

Beispiel 125

0,22 Mol N-Ethylanilin werden in 200 ml Wasser bei pH 7 gelöst. Man gibt 200 g Eis zu und streut 0,24 Mol Cyanurchlorid ein. Mit Sodalösung (20 g/100 ml) hält man einen pH-Wert von 6-7. Nach ca. 1 Stunde bei 0 °C ist die Kondensation beendet. 0,2 Mol 2,4-Diamino-benzolsulfonsäure werden in 250 ml Wasser

durch Zugabe von konz. Natronlauge gelöst und zu 1 Stufe der Kondensation zugesetzt. Mit Sodalösung (20 g/100 ml) wird ein pH-Wert von 6-7 gehalten. Man heizt auf 25-35 ° C auf. Nach beendeter Kondensation kühlt man auf 0 ° C ab. Es werden 56 ml 30 %iger Salzsäure zugegeben. Man tropft 47 ml Natriumnitritlösung (30 g/100 ml) zu und rührt 1 Stunde bei 0 ° C. Natriumnitrit wird mit Amidosulfonsäure vernichtet und die so erhaltene Diazotierung zur Kupplungskomponente aus Beispiel 112 gegeben. Mit Sodalösung (20 g/100 ml) wird ein pH-Wert von 7-8 gehalten. T = 10-15 ° C. Nach beendeter Kupplung salzt man mit NaCl aus, isoliert und trocknet. Der erhaltene Farbstoff der Formel

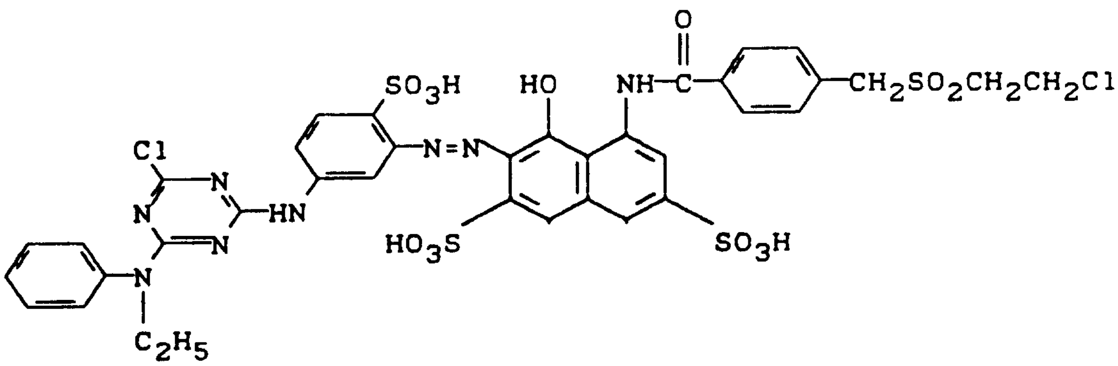

färbt Baumwolle in roten Tönen.

Die Farbstoffe der Beispiele 126-131 der allgemeinen Formel

Z{D}N = N{K}X ,

wobei X = $X^1$ oder $X^3$ mit der oben angegebenen Bedeutung, lassen sich unter Verwendung der entsprechenden Diazo-, Kupplungskomponenten und Amine analog herstellen. In einigen Fällen ist es günstiger die Kondensation mit Cyanurchlorid und Amin an den Schluß der Synthese-Sequenz zu stellen.

| Bsp. | Diazokomponente | Kupplungskomponente | Z | Farbton |
|---|---|---|---|---|
| 126 | 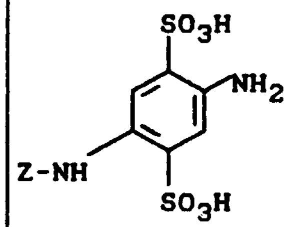 | 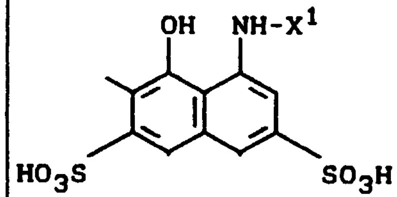 | 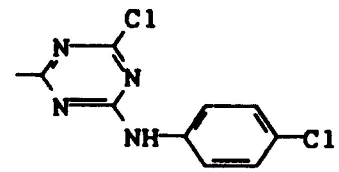 | Rotviolett |
| 127 | 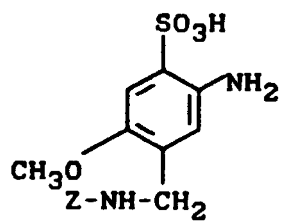 | " | 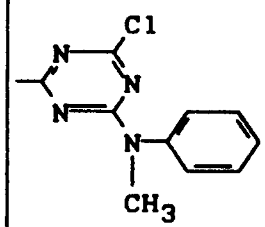 | Blaust. Rot |
| 128 | 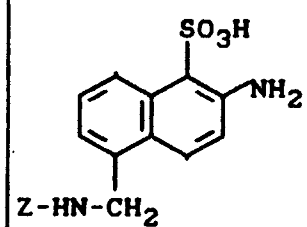 | " | 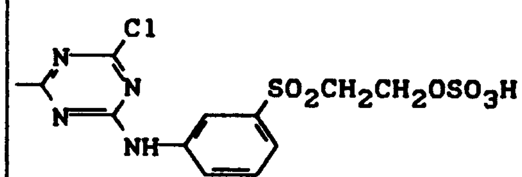 | Blaust. Rot |

| Bsp. | Diazokomponente | Kupplungskomponente | Z | Farbton |
|---|---|---|---|---|
| 129 | 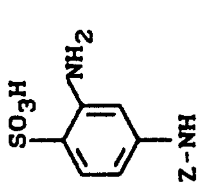 | 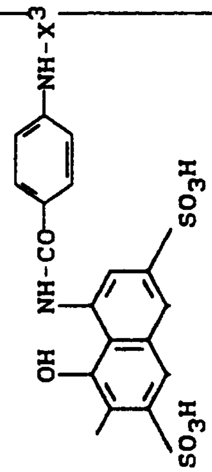 | 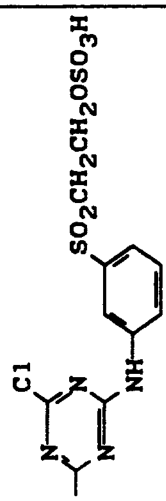 | Rot |
| 130 | 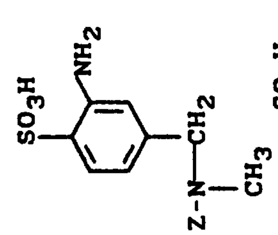 | „ | 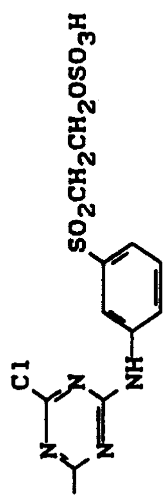 | Rot |
| 131 | 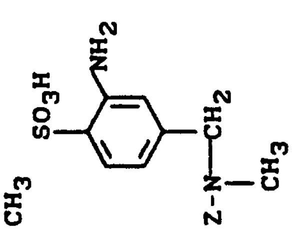 | 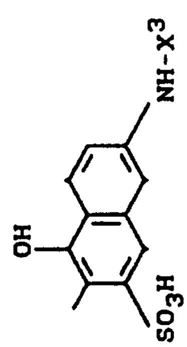 | 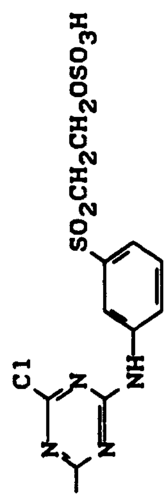 | Orange |

Beispiel 132

0,2 Mol 6-Fluor-5-chlor-4-(3'-amino-4'-sulfophenyl)-amino-pyrimidin (aus 2,4-Diaminobenzolsulfonsäure und 4,6-Difluor-5-chlorpyrimidin hergestellt) werden in Wasser suspendiert und mit 65 ml 30 %iger

Salzsäure und 300 g Eis versetzt. Danach werden 46 ml 30 %ige Natriumnitritlösung zugegeben und 1 Stunde bei 0 °C gerührt. Überschüssiges Natriumnitrit wird mit Amidosulfonsäure vernichtet und die so erhaltene Diazotierung zur Lösung der Kupplungskomponente aus Beispiel 112 gegeben. Mit Sodalösung (20 g/100 ml) wird ein pH-Wert von 7-8 gehalten. T = 10-15 °C. Nach beendeter Kupplung salzt man mit NaCl aus, isoliert und trocknet. Der erhaltene Farbstoff der Formel

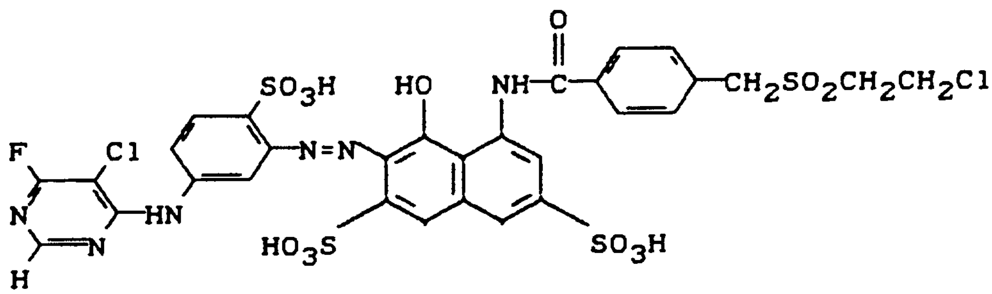

$\lambda_{max}$ = 514 nm, 534 nm,
färbt Baumwolle in roten Tönen.

Die Farbstoffe der Beispiele 133-151 der allgemeinen Formel

Z{D}N=N{K}X ,

wobei X = $X^1$ oder $X^3$ mit der oben angegebenen Bedeutung, lassen sich unter Verwendung der entsprechenden Diazo- und und Kupplungskomponenten und Amine analog herstellen.

| Bsp. | Diazokomponente | Kupplungskomponente | Z | Farbton |
|---|---|---|---|---|
| 133 | 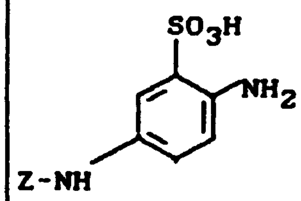 | 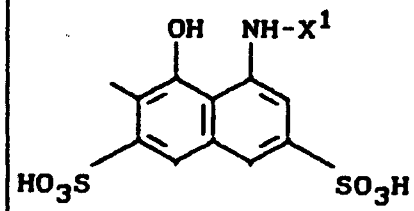 | 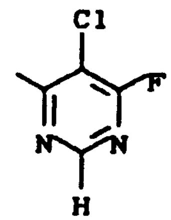 | Rotviolett |
| 134 | 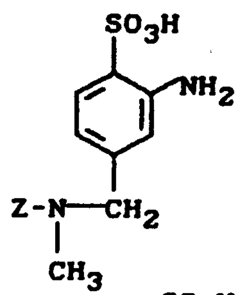 | " | " | Rot |
| 135 | 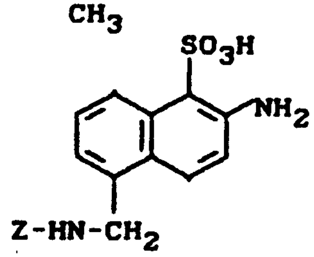 | 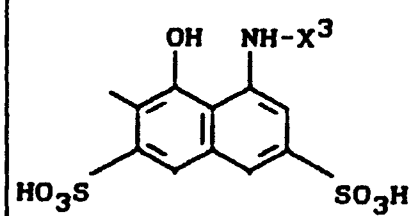 | " | Blaust. Rot |

| Bsp. | Diazokomponente | Kupplungskomponente | Z | Farbton |
|---|---|---|---|---|
| 136 | 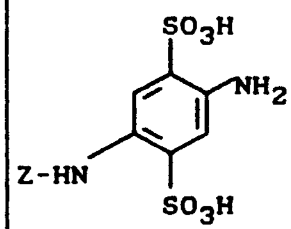 | 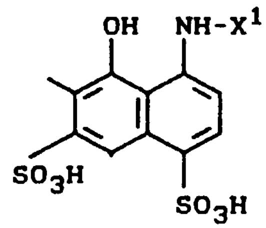 | 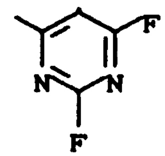 | Blaust. Rot |
| 137 | 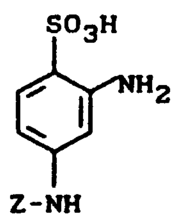 | 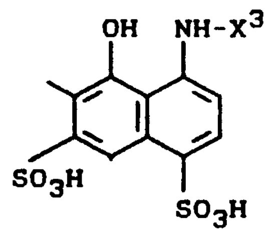 | " | Rot |
| 138 | 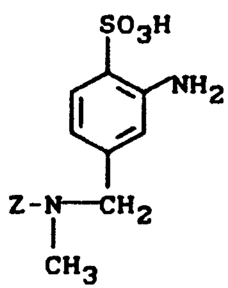 | " | 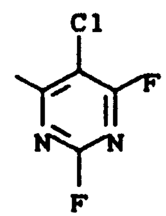 | Rot |

| Bsp. | Diazokomponente | Kupplungskomponente | Z | Farbton |
|---|---|---|---|---|
| 139 | 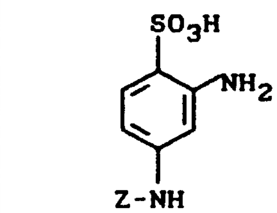 | 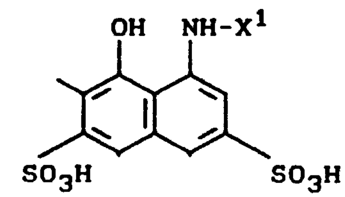 | 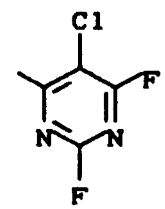 | Rot |
| 140 | 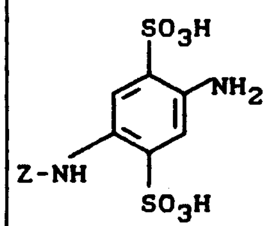 | 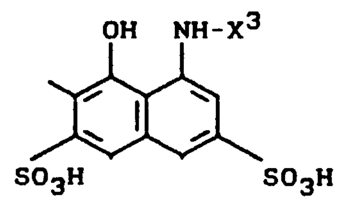 | " | Rotviolett |
| 141 | 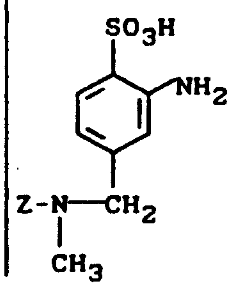 | " | " | Rot |

| Bsp. | Diazokomponente | Kupplungskomponente | Z | Farbton |
| --- | --- | --- | --- | --- |
| 142 | 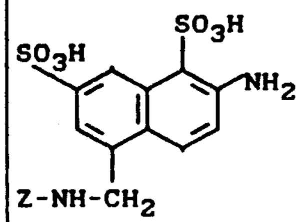 | 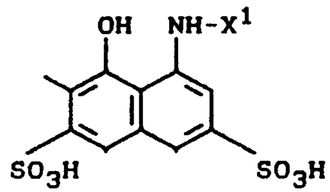 | 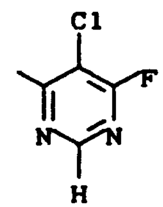 | Blaust. Rot |
| 143 | 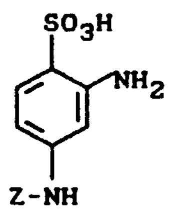 | 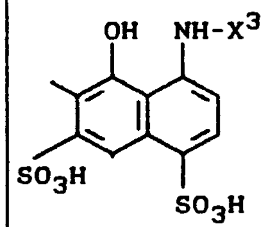 | " | Rot |
| 144 | 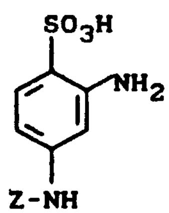 | 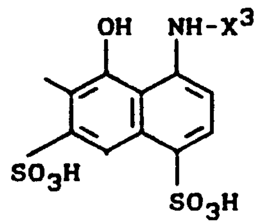 | " | Rot |

| Bsp. | Diazokomponente | Kupplungskomponente | Z | Farbton |
|---|---|---|---|---|
| 146 | 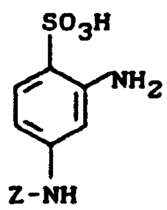 | 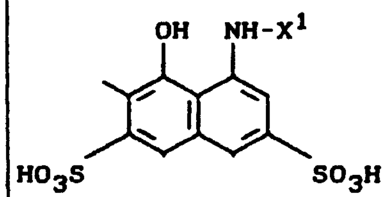 | 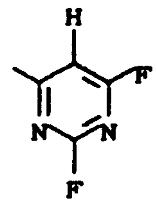 | Rotviolett<br>λ max = 514 nm, 535 nm |
| 147 | 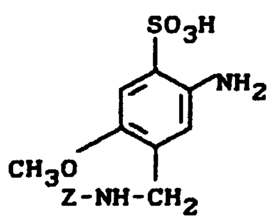 | " | " | Blaust. Rot |
| 148 | 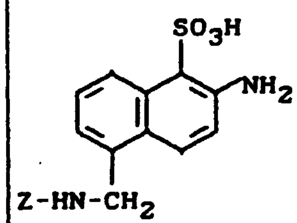 | 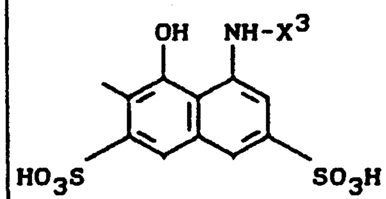 | 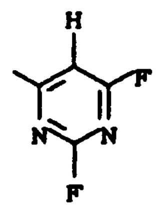 | Blaust. Rot |

| Bsp. | Diazokomponente | Kupplungskomponente | Z | Farbton |
|---|---|---|---|---|
| 149 | 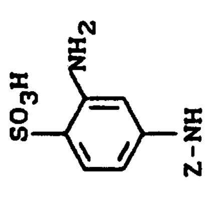 | 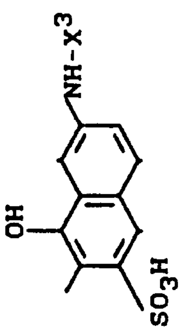 | 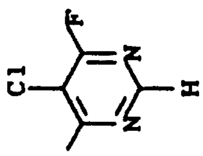 | Rot |
| 150 | 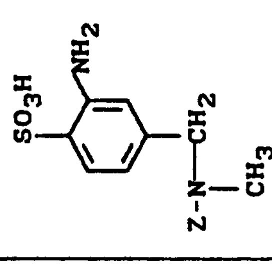 | 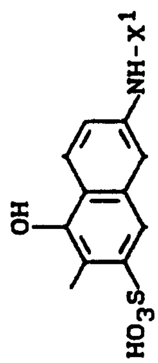 | 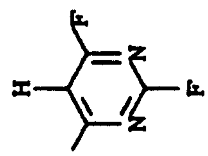 | Rot |
| 151 | 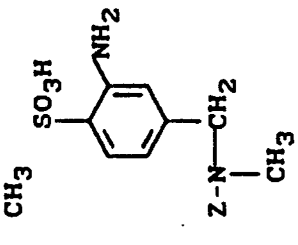 | 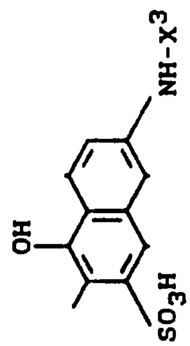 | 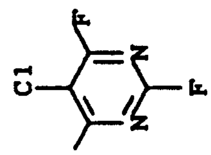 | Orange |

Weitere wertvolle Farbstoffe der Formeln

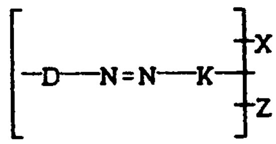

und

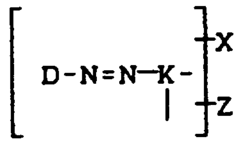

sind die der Beispiele 152-163, die sich nach bekannten Methoden, wie bsp. oben dargestellt, herstellen lassen und Baumwolle in den angegebenen Tönen färben.

| Bsp. | X | Diazokomponente | K | Z | Farbton |
|---|---|---|---|---|---|
| 152 | 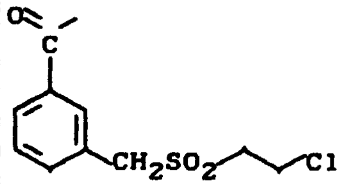 | 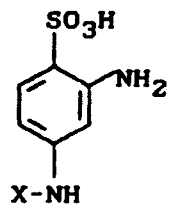 | 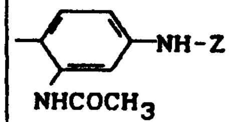 | 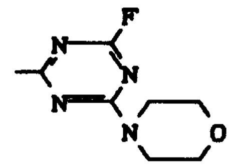 | Goldgelb |
| 153 | 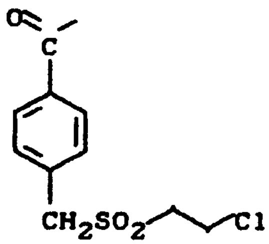 | 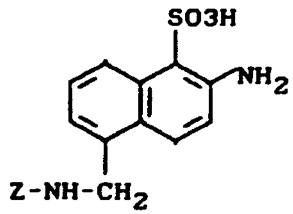 | 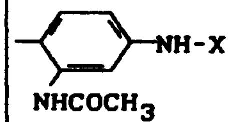 | 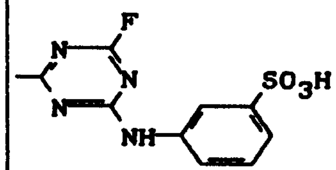 | Goldgelb |
| 154 | " | 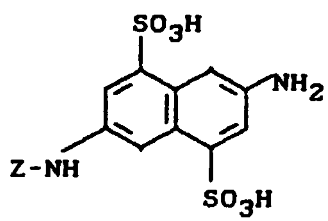 | 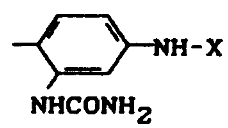 | 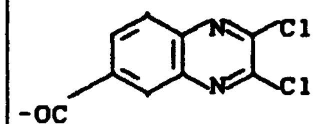 | rotst. Gelb |

| Bsp. | X | Diazokomponente | K | Z | Farbton |
|---|---|---|---|---|---|
| 155 | 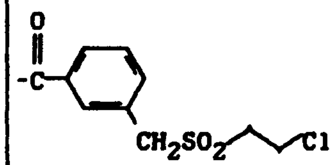 | 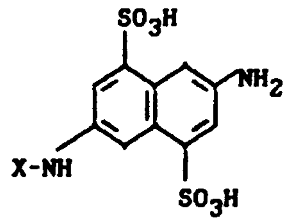 | 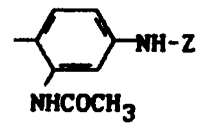 | 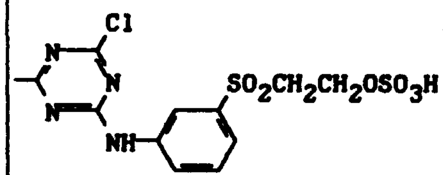 | Rotst. Gelb |
| 156 | " | " | 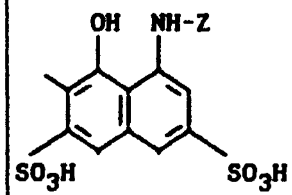 | 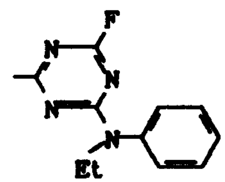 | Blaust. Rot |
| 157 | 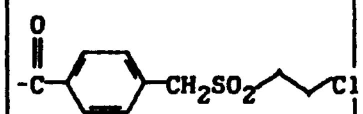 | 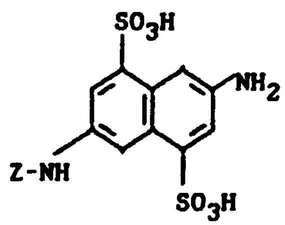 | 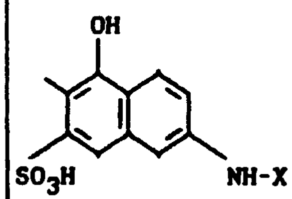 | 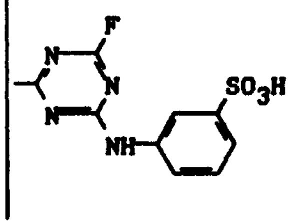 | |

| Bsp. | X | Diazokomponente | K | Z | Farbton |
|---|---|---|---|---|---|
| 158 | 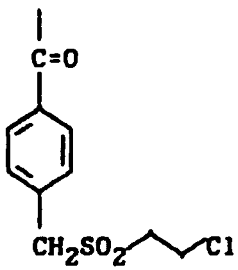 | 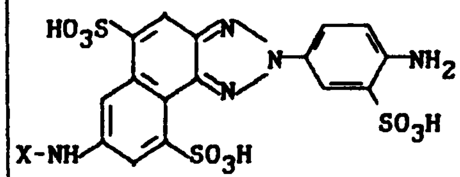 | 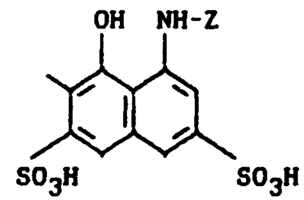 | 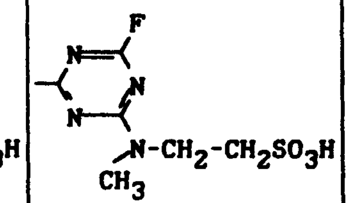 | Violett |
| 159 | " | " | 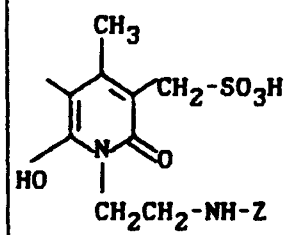 | " | Gelb |
| 160 | " | 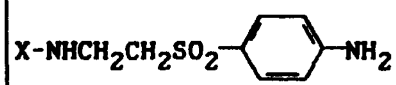 | 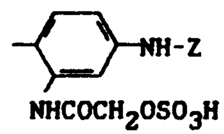 | " | Goldgelb |

| Bsp. | X | Diazokomponente | K | Z | Farbton |
|---|---|---|---|---|---|
| 161 | 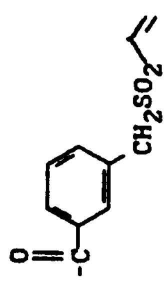 | 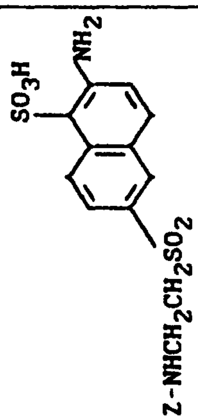 | 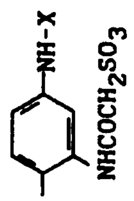 | 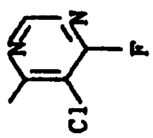 | Goldgelb |
| 162 | 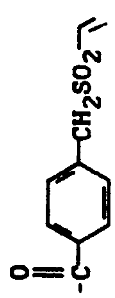 | 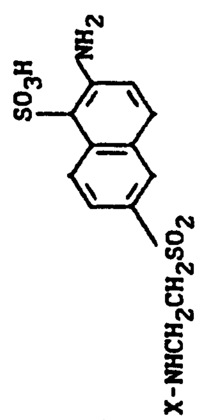 | 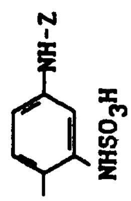 | 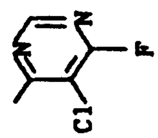 | Goldgelb |
| 163 | 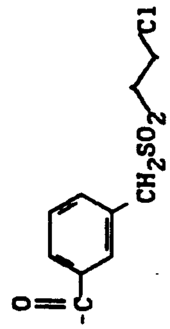 | 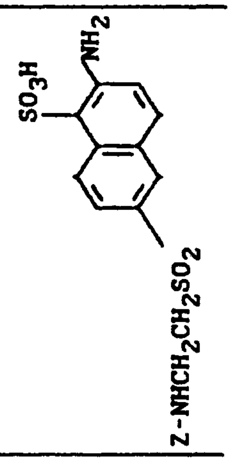 | 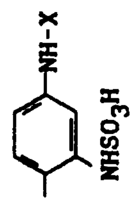 | 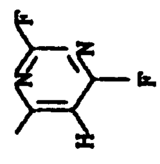 | Goldgelb |

Analog den oben beschriebenen Herstellungsverfahren bzw. nach üblichen Verfahren lassen sich unter Verwendung der entsprechenden Ausgangskomponenten die Farbstoffe der Beispiele 164-189 erhalten.

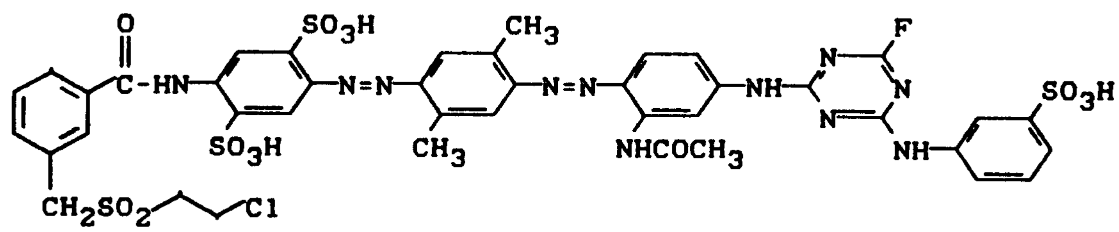

164 Gelbbraun

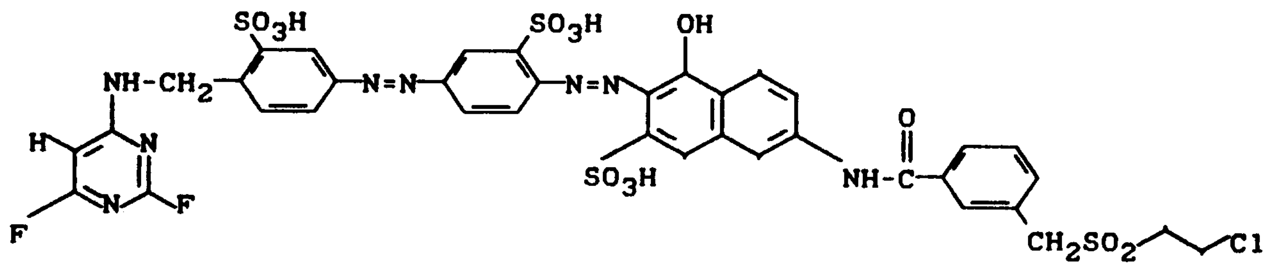

165 Rot

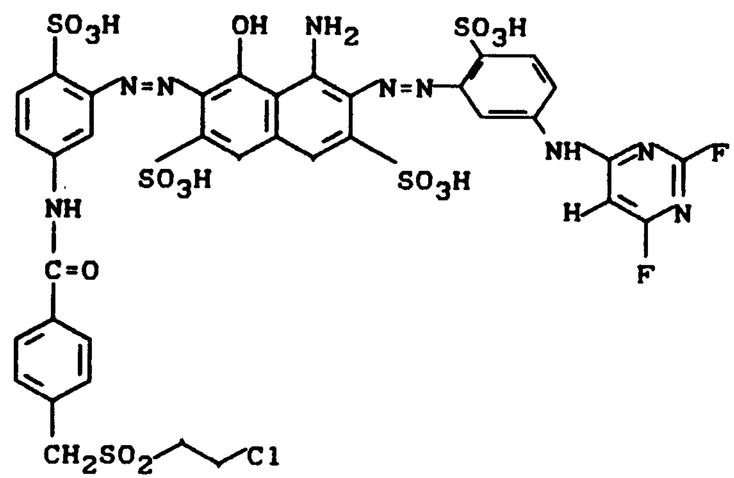

166 Marineblau bzw. Schwarz

167 Rot

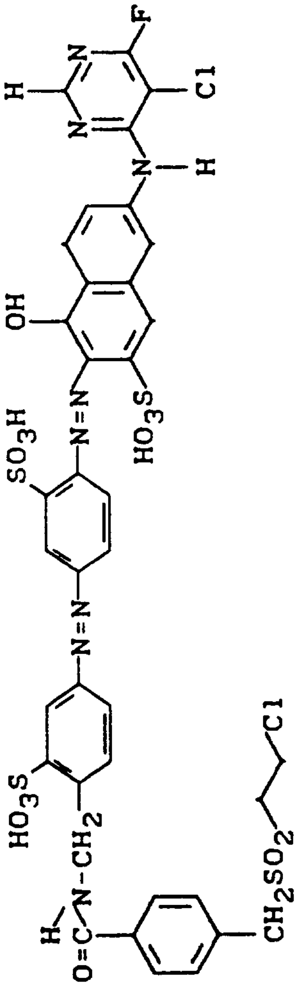

168 Rot

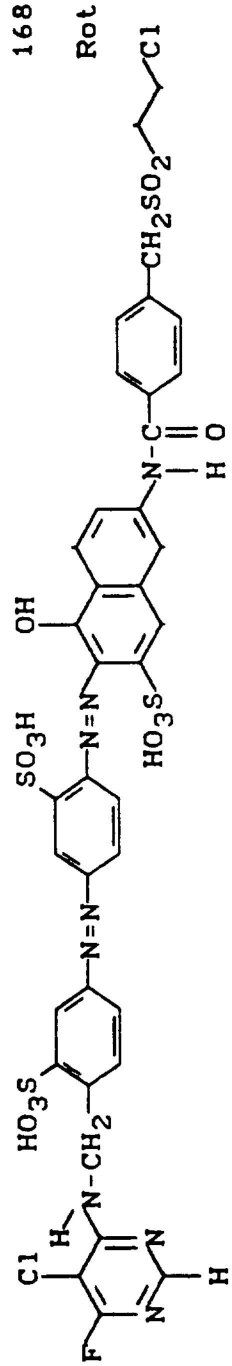

169 Marineblau bzw. Schwarz

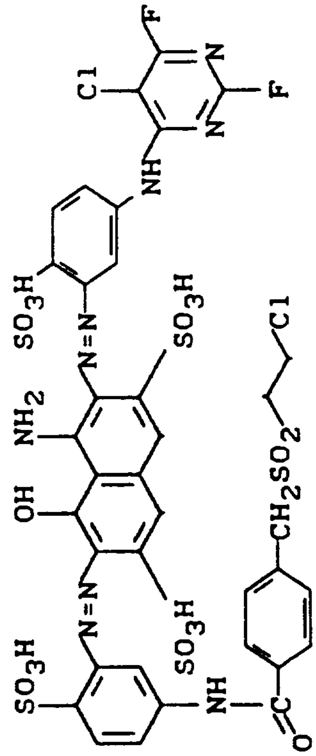

170 Marineblau bzw. Schwarz

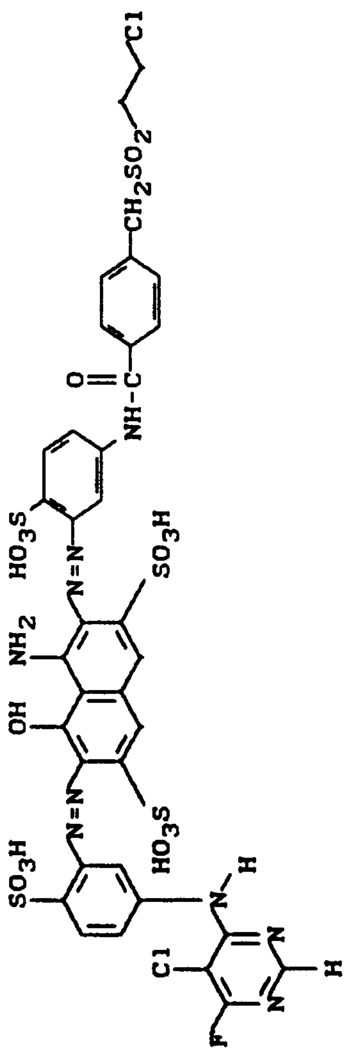

171 Marineblau

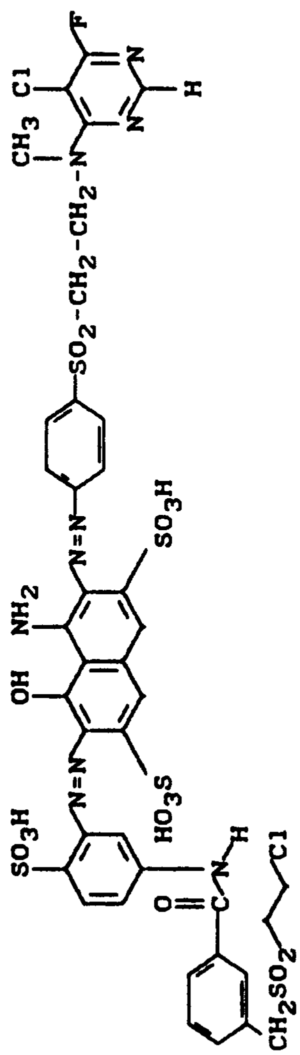

172 Marineblau

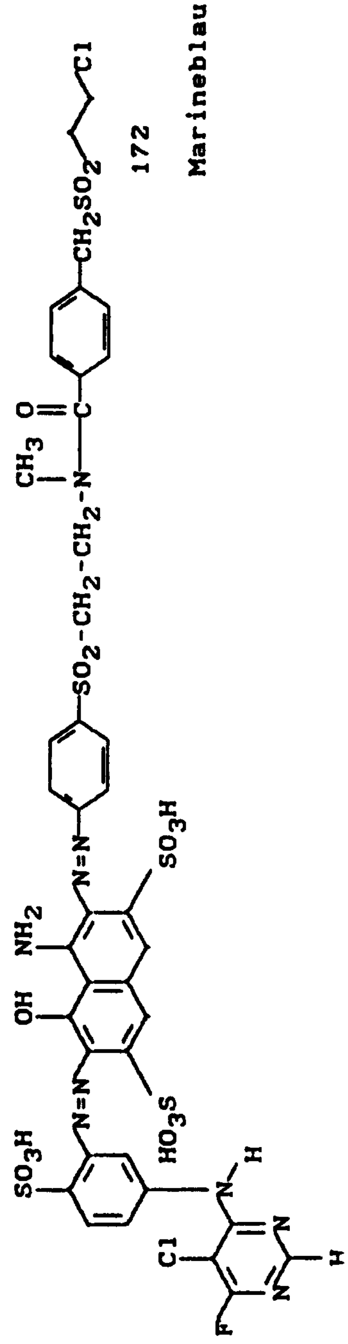

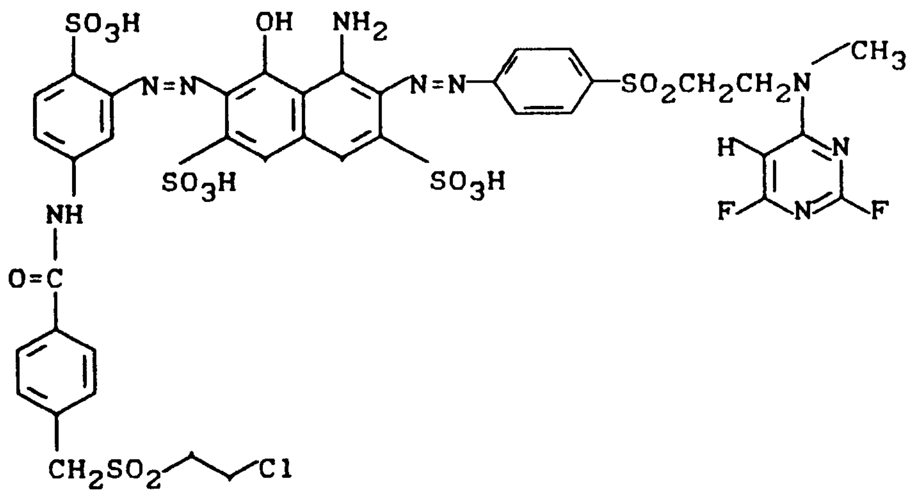

173

Marineblau

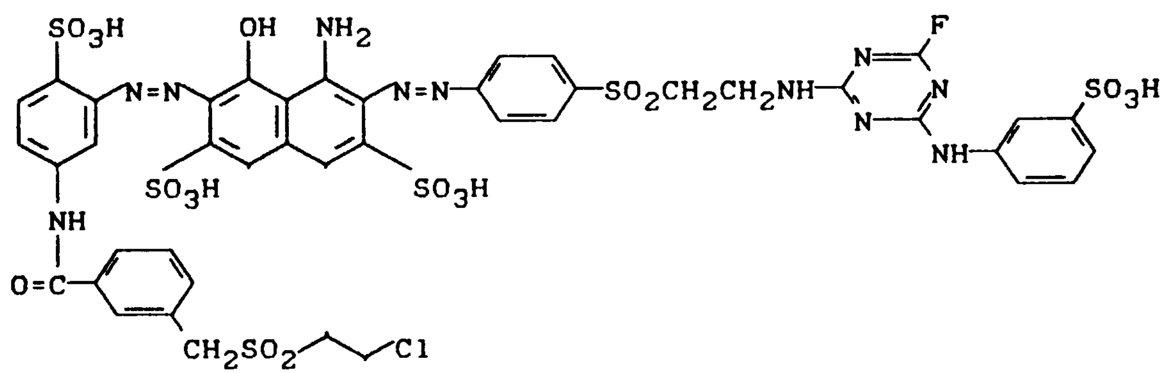

174

Marineblau

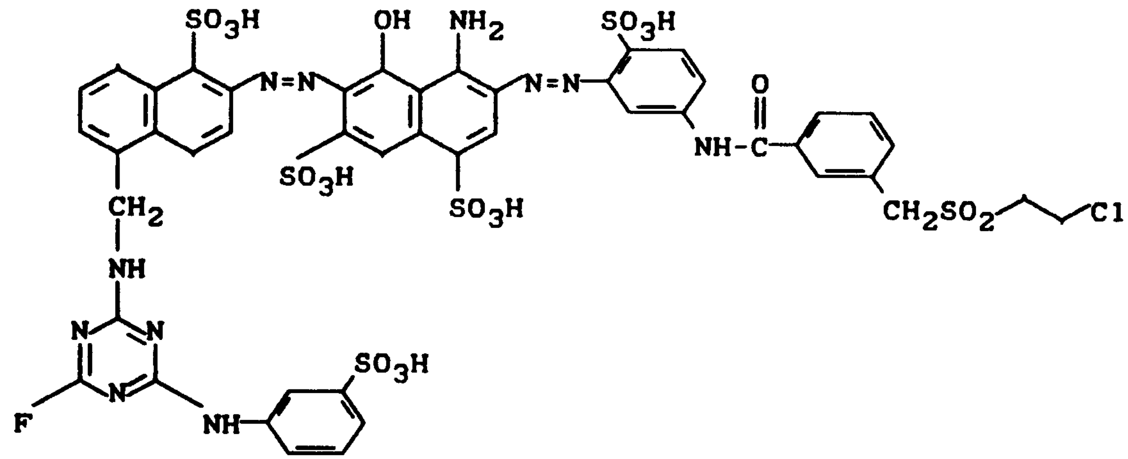

175 Marineblau bzw. Schwarz

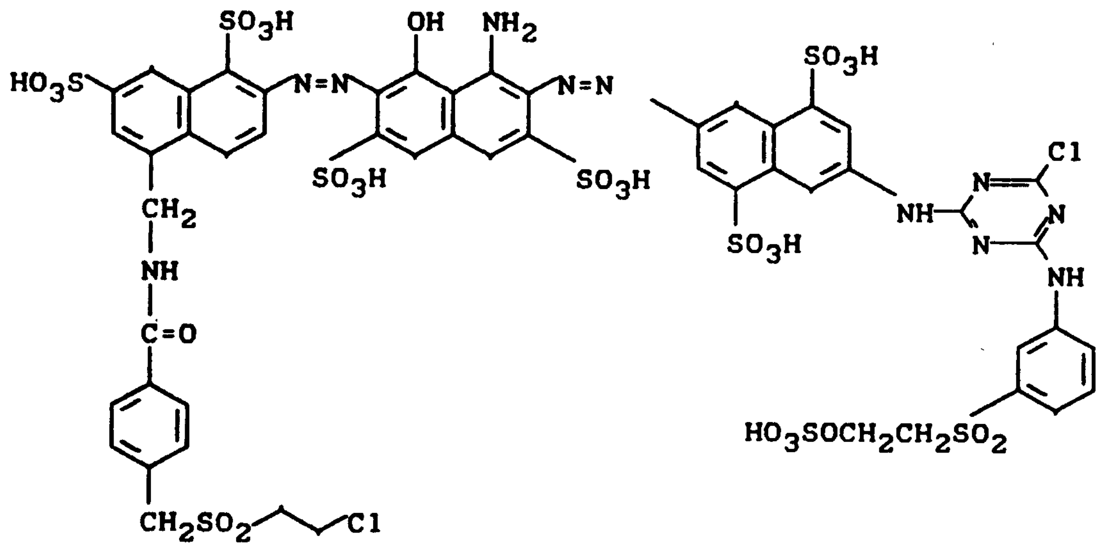

176 Schwarz

177 Marineblau bzw. Schwarz

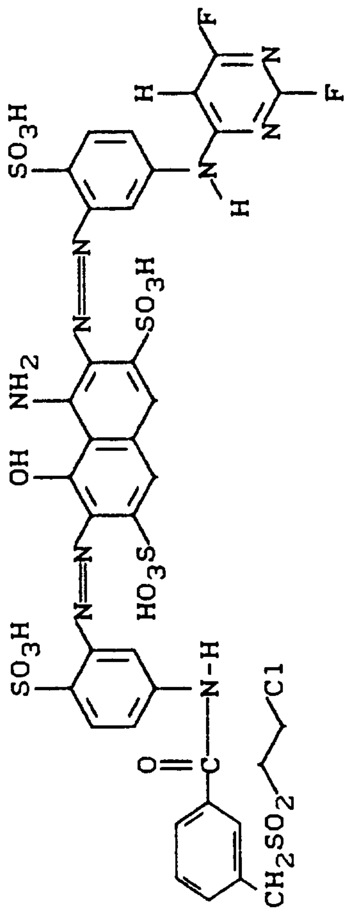

178 Marineblau bzw. Schwarz

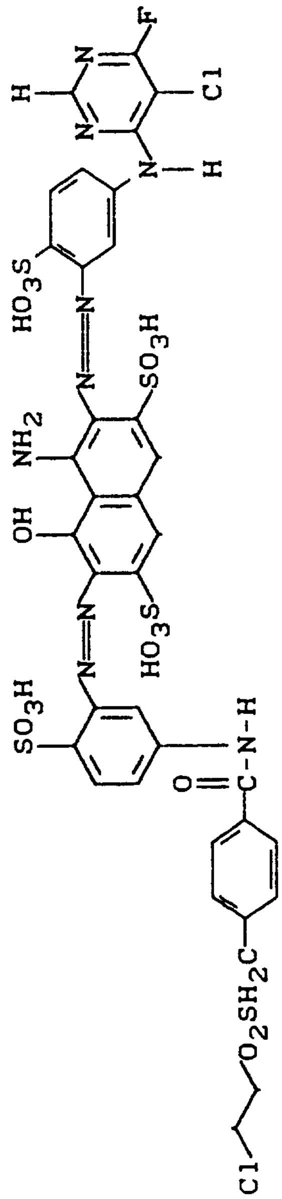

179 Marineblau bzw. Schwarz

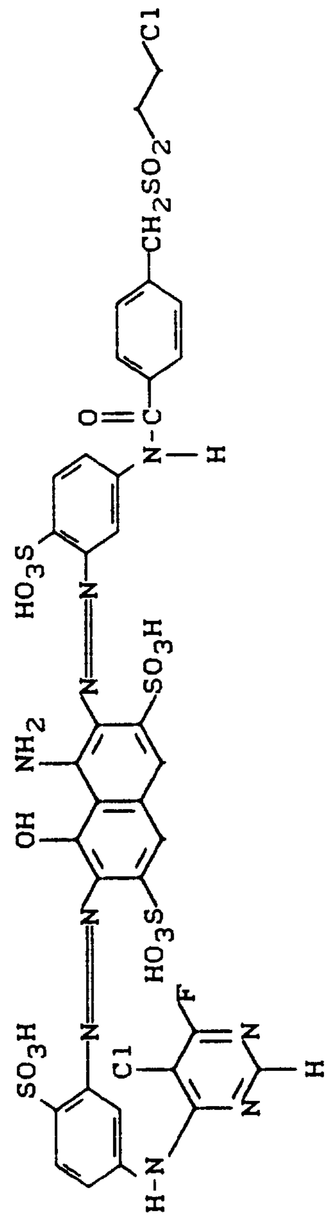

180 Braun

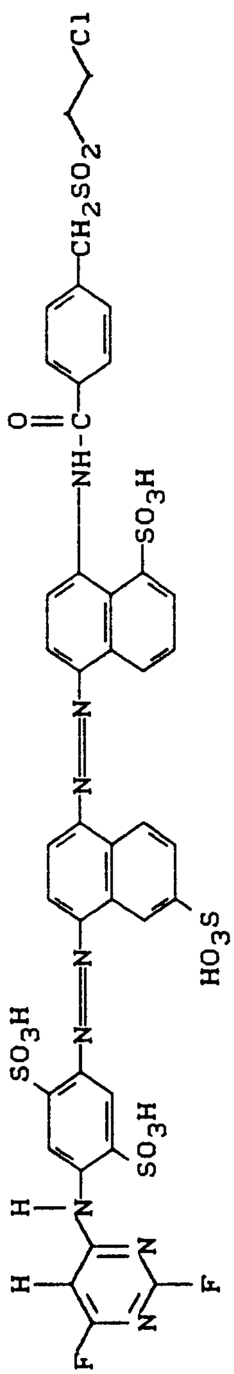

181 Braun

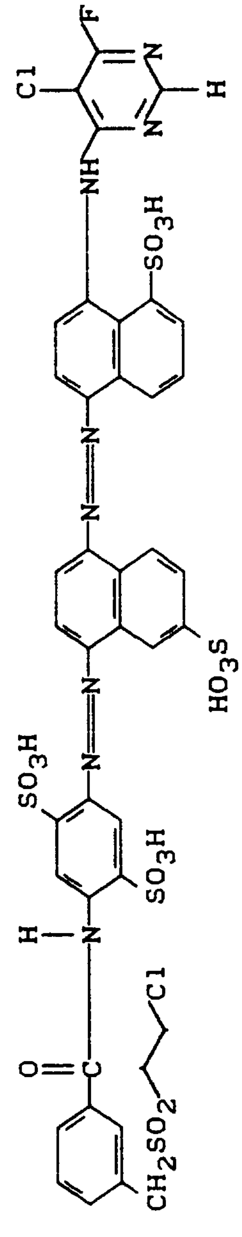

182 Braun

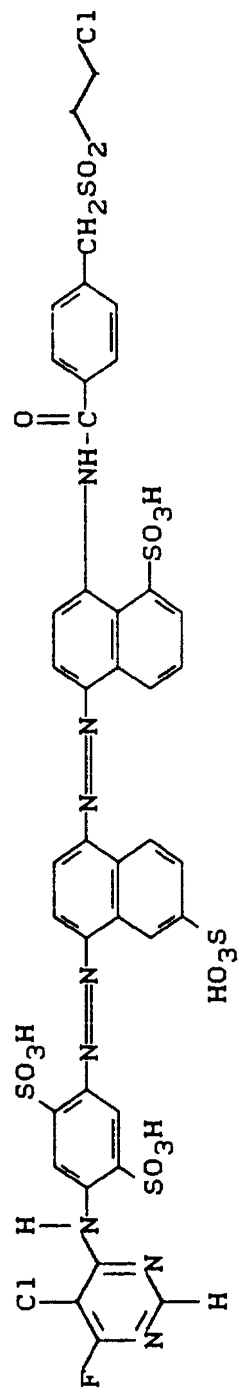

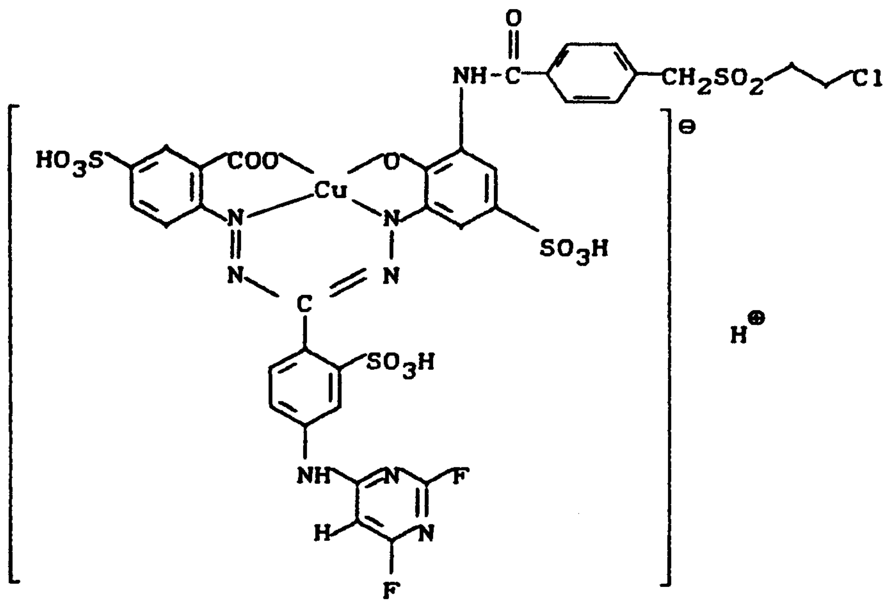

183

Blau

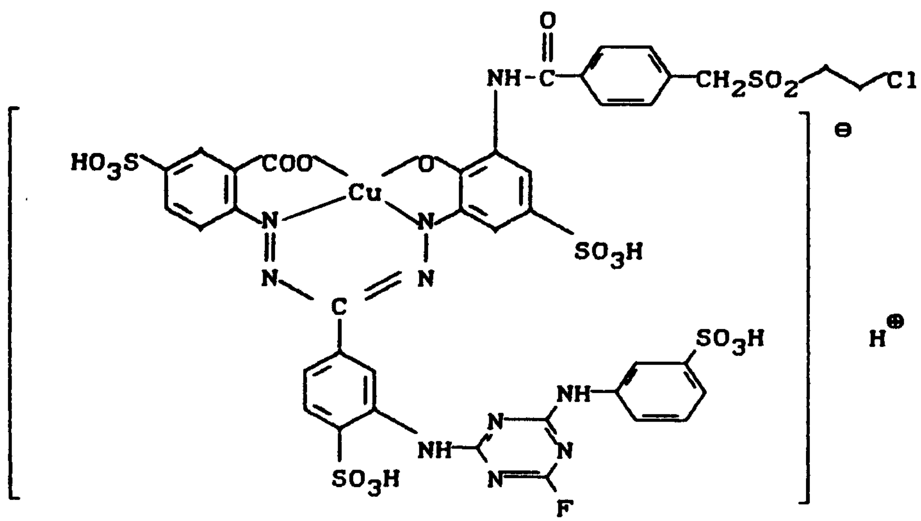

184

Blau

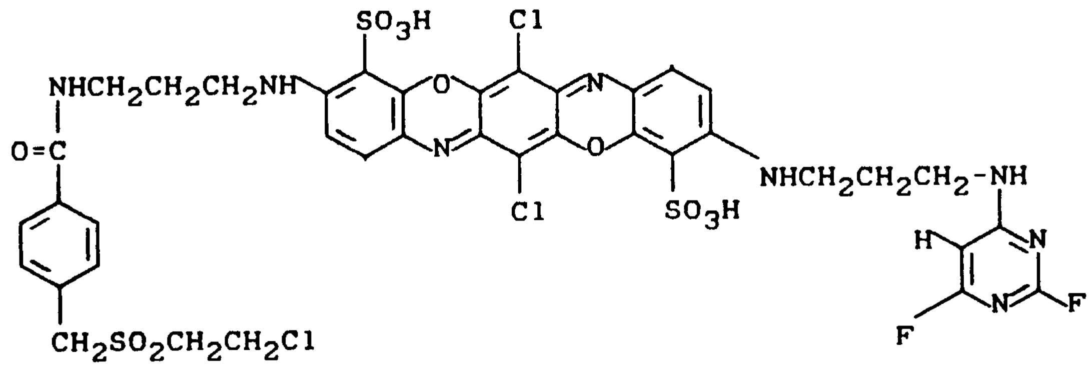

185 Blau

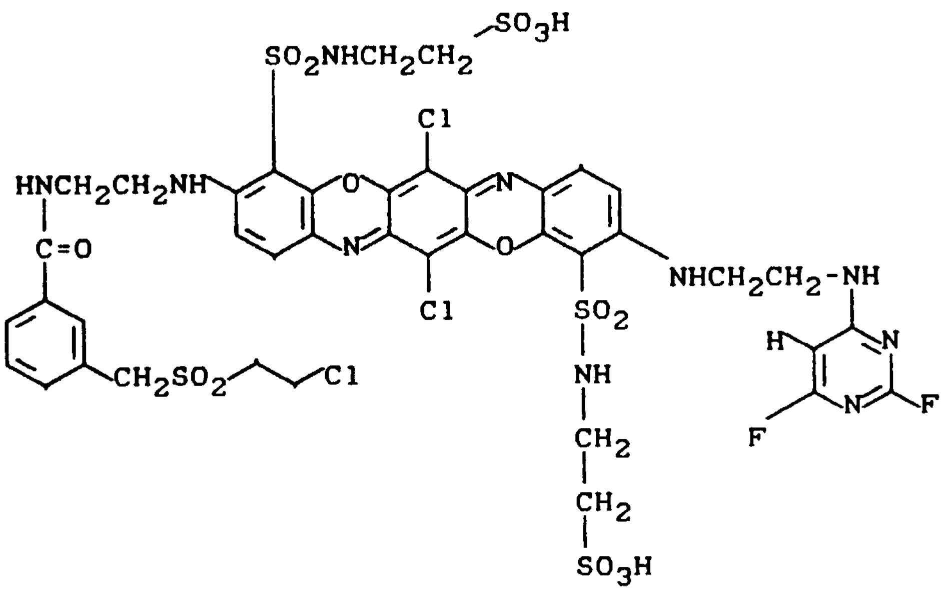

186 Blau

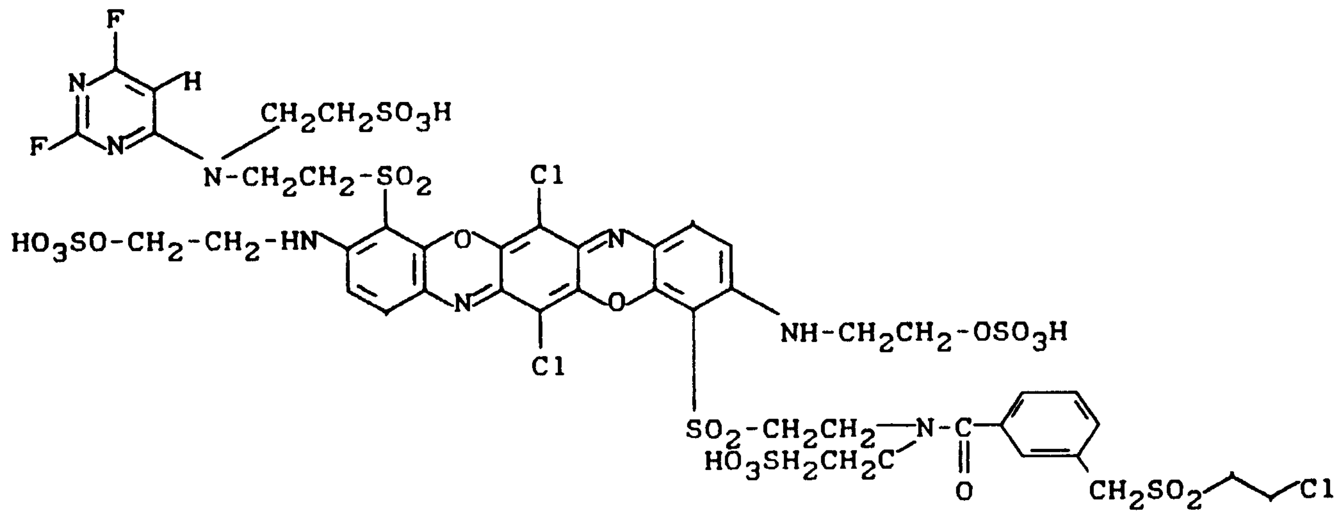

187

Blau

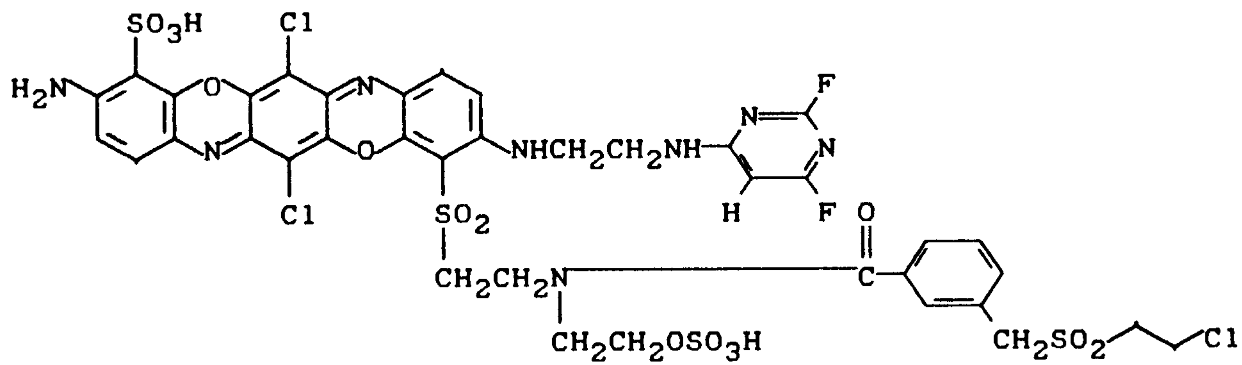

188

Blau

189

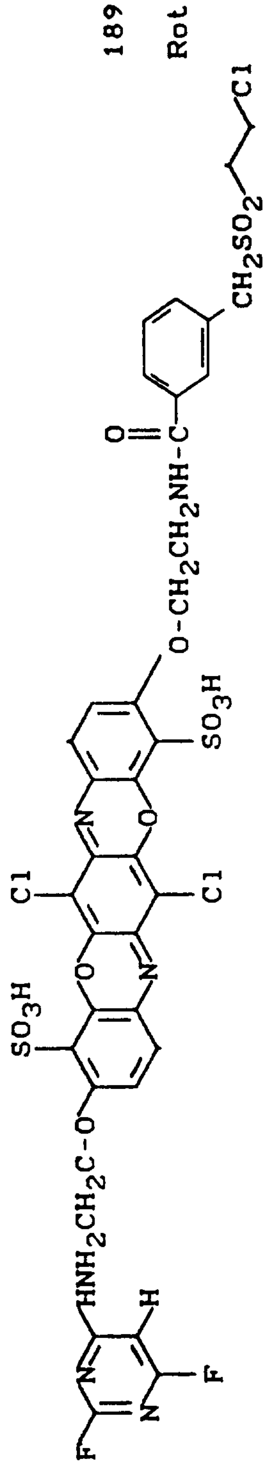

Rot

## Patentansprüche

**1.** Reaktivfarbstoffe der Formel

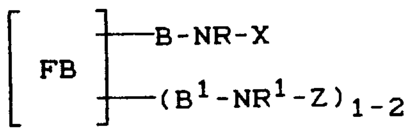

mit
X =

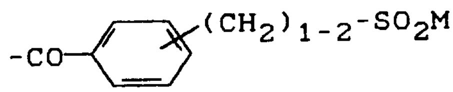

FB = der Rest eines Farbstoffes insbesondere der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe,

B, $B^1$ = gleich oder verschieden, direkte Bindung oder Brückenglied an ein Ring C-Atom eines aromatisch-carbocyclischen oder an ein Ring-C-oder -N-Atom eines aromatisch-heterocyclischen Ringes in FB,

M = $CH=CH_2$ oder $CH_2CH_2$-V, worin

V = OH oder alkalisch eliminierbarer Rest,

Z = heterocyclischer faserreaktiver Rest ohne weiteren chromophoren Teil und

R, $R^1$ = unabhängig voneinander H, substituiertes oder unsubstituiertes $C_1$-$C_6$-Alkyl.

**2.** Farbstoffe des Anspruchs 1 worin B und $B^1$ eine einfache Bindung sind und
X =

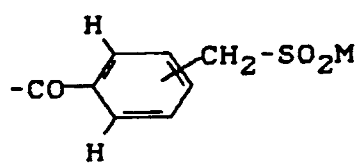

**3.** Farbstoffe des Anspruchs 1 der Formel

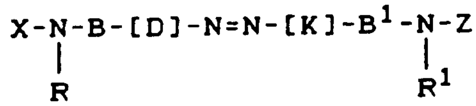

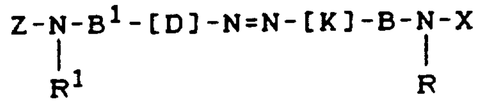

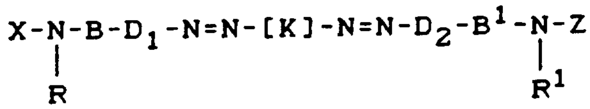

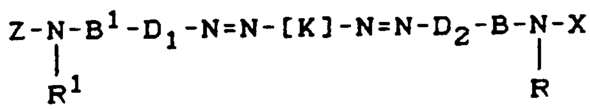

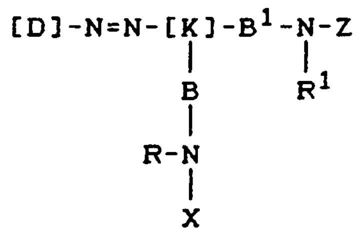

worin -X für

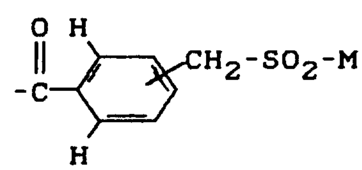

steht und

| | |
|---|---|
| D, $D_1$, $D_2$ = | unabhängig voneinander Rest einer Diazokomponente der Benzol- oder Naphthalinreihe, |
| K = | Rest einer Kupplungskomponente der Benzol-, Naphthalin-, Acetessigsäurearylid- oder heterocyclischen Reihe und in den Formeln (1d) und (1e) = Rest einer zweifach kuppelnden Kupplungskomponente, worin |
| M, B und $B^1$ | die in Anspruch 1 angegebene Bedeutung haben. |

**4.** Farbstoffe der Ansprüche 1 bis 3 mit
Z = faserreaktivem fluorhaltigem Pyrimidyl-4-Rest oder mit Z =

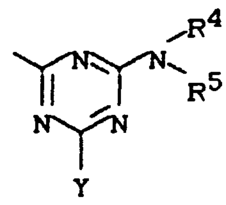

worin $R^4$ und $R^5$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenethyl, Cyclohexyl, Phenyl oder $-NHCH_2CH_2OCH_2CH_2-SO_2M$ wobei M die in Anspruch 1 angegebene Bedeutung hat, Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo, oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo, ist, bedeuten
oder worin $R^4$ und $R^5$ zusammen mit dem Aminostickstoffatom einen Morpholino-, Piperidino- oder Piperazinorest bilden, und worin
Y = Cl, F oder gegegebenenfalls substituierter Pyridiniumrest.

**5.** Farbstoffe gemäß wenigstens einem der vorhergehenden Ansprüche, dadurch gekennzeichnet, daß
M = $CH=CH_2$ oder $CH_2CH_2Cl$.

**6.** Farbstoffe der Ansprüche 1 bis 3, worin Z für

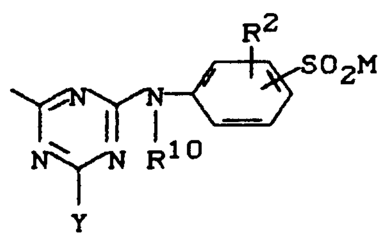

steht, worin

Y = Cl, F oder gegebenenfalls substituierter Pyridiniumrest,
M = $CH=CH_2$ oder $CH_2CH_2$-V, worin
V = alkalisch eliminierbarer Rest,
$R^{10}$ = H, gegebenenfalls substituiertes $C_1$-$C_6$-Alkyl,
$R^2$ = H, Cl, Br, $C_1$-$C_4$-Alkyl, $C_1$-$C_4$-Alkoxy, $CO_2H$ oder $SO_3H$.

**7.** Farbstoffe des Anspruchs 1 der Formeln

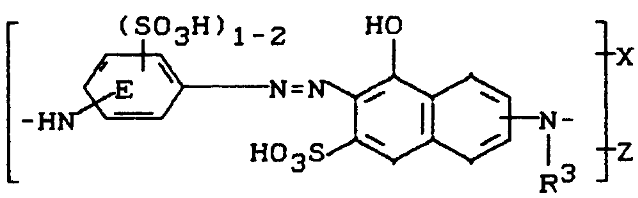
,

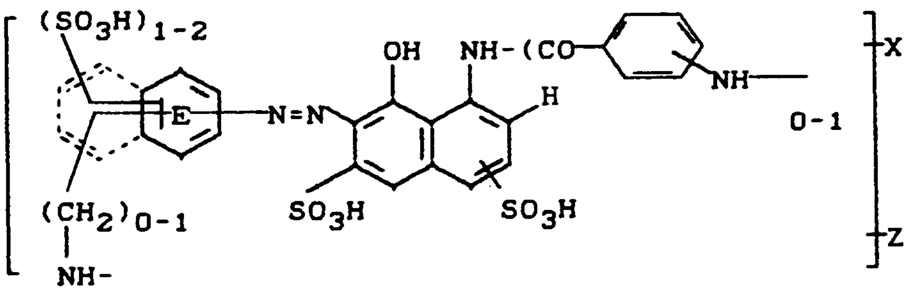

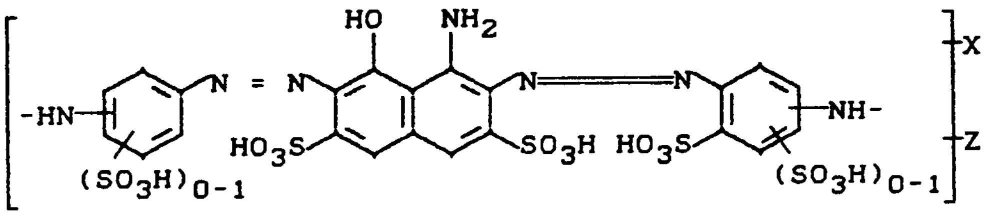

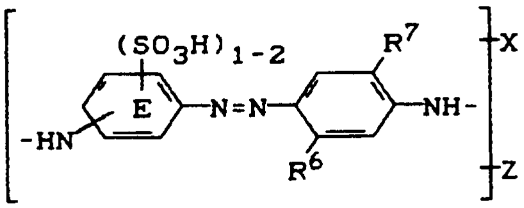

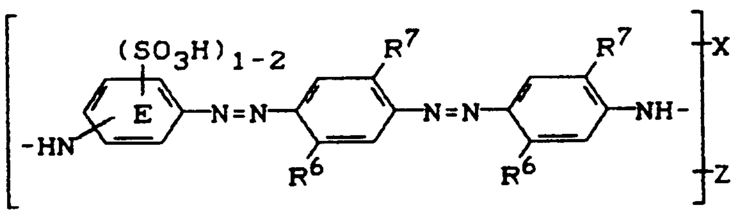

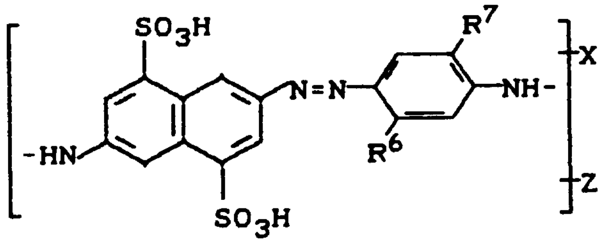

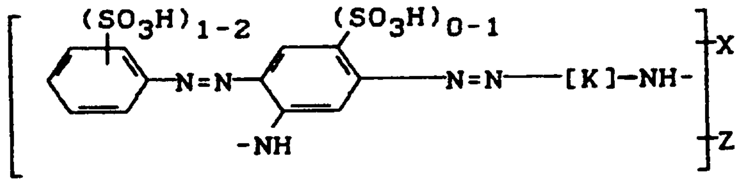

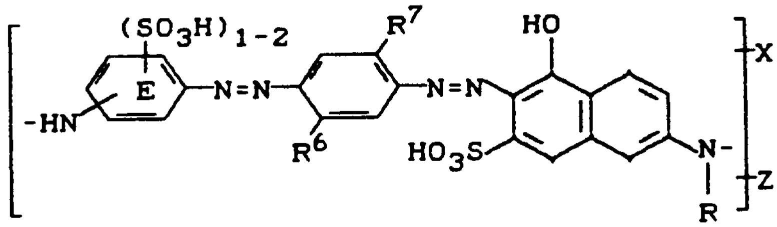

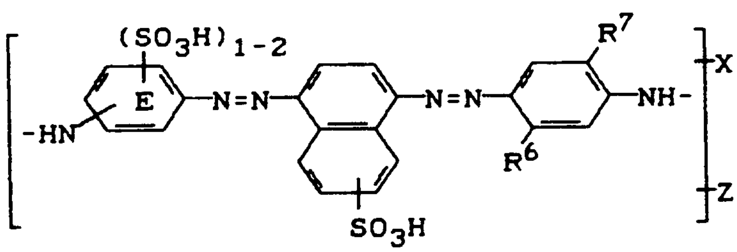

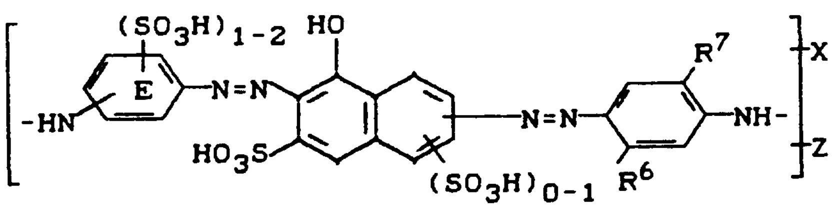

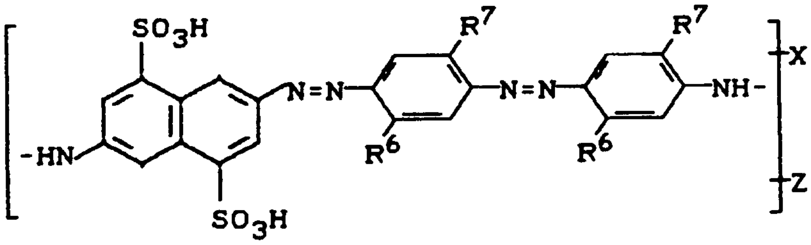

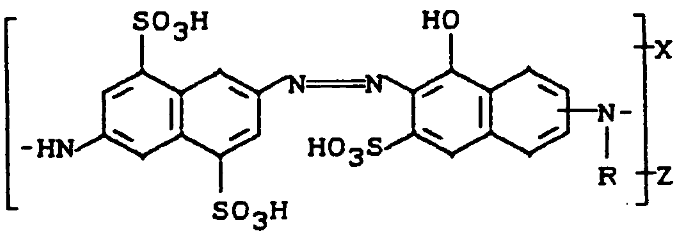

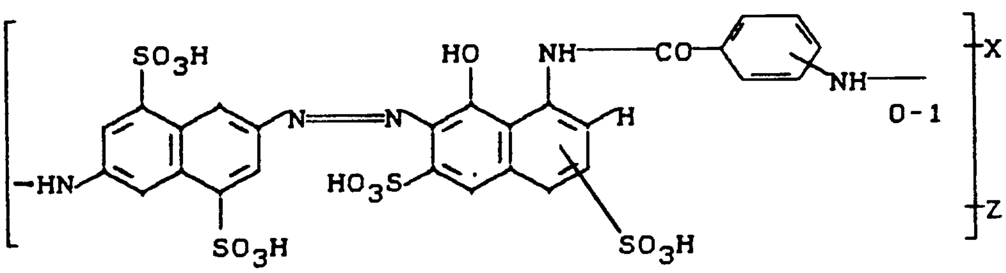

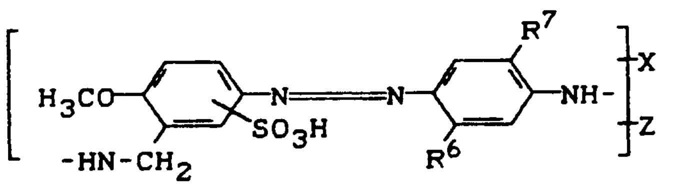

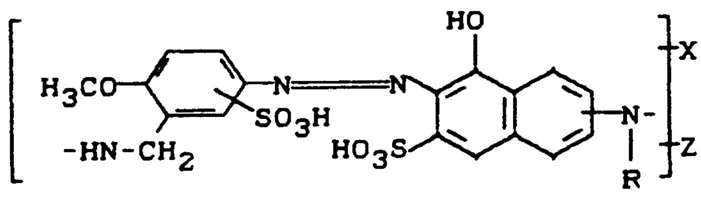

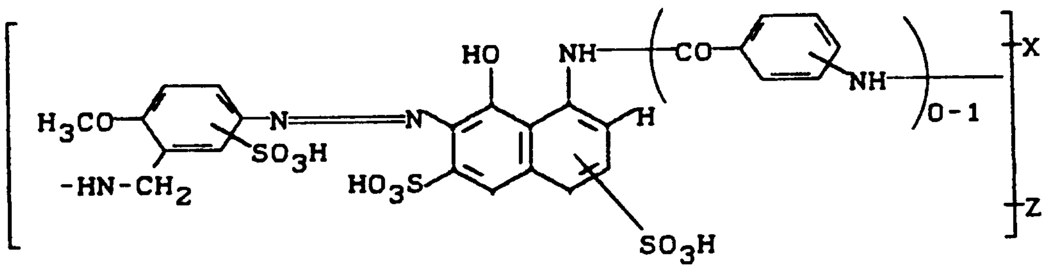

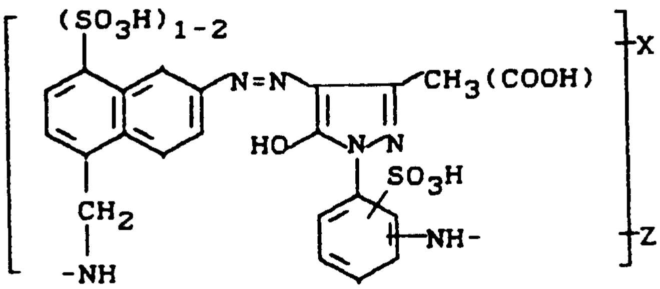

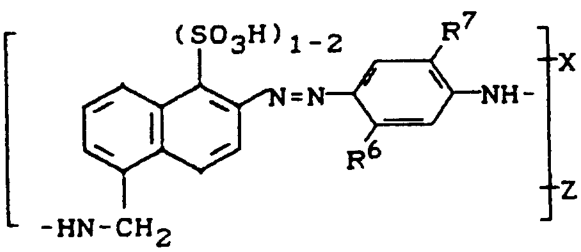

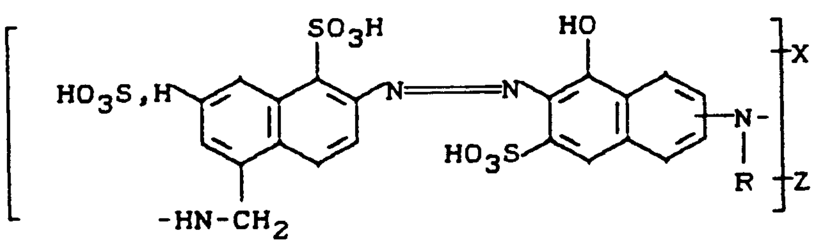

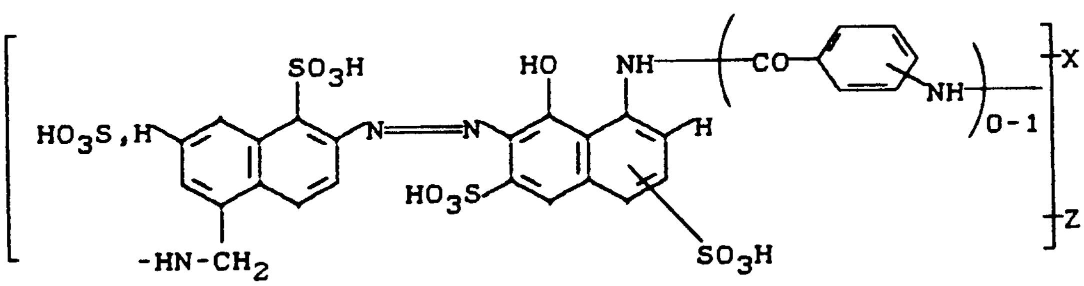

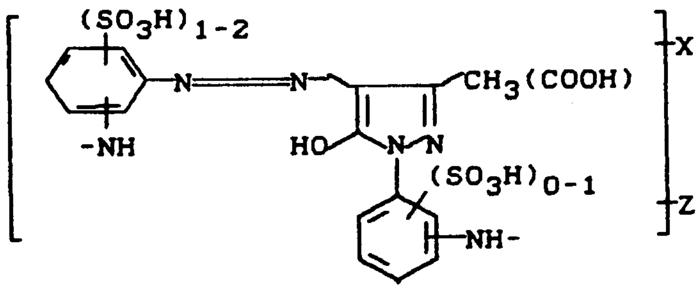

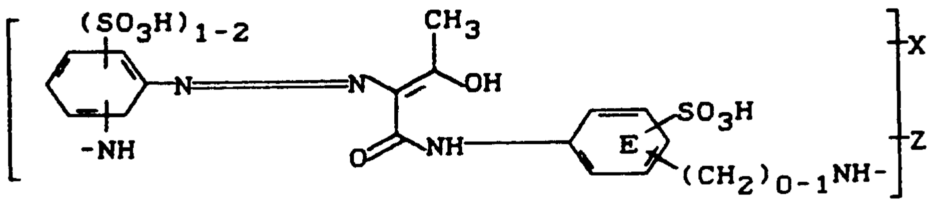

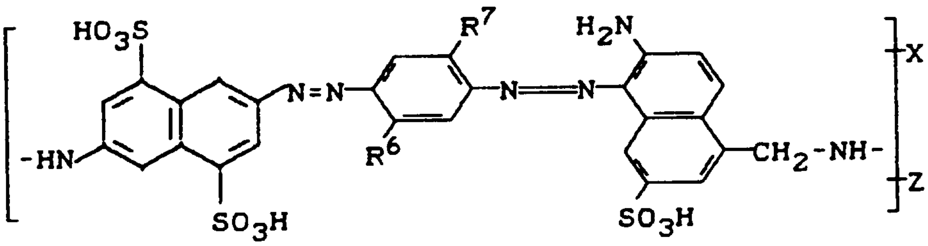

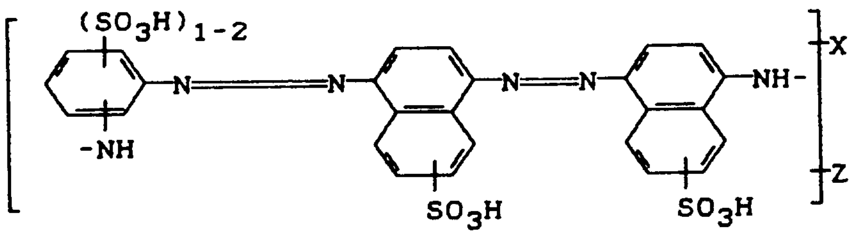

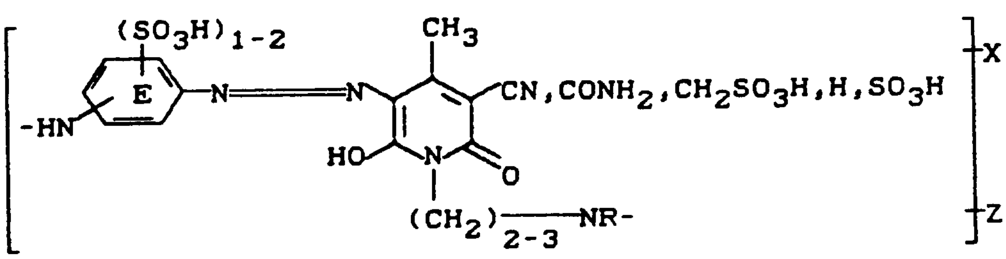

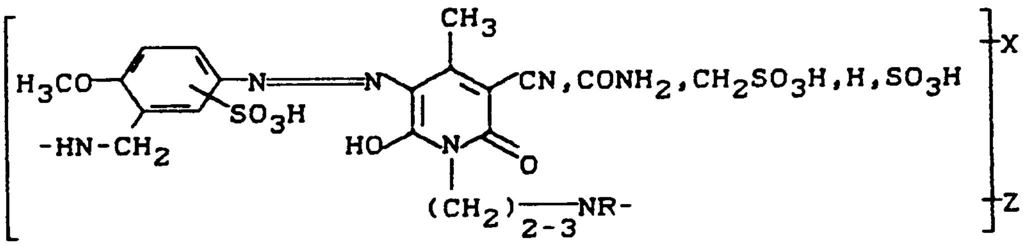

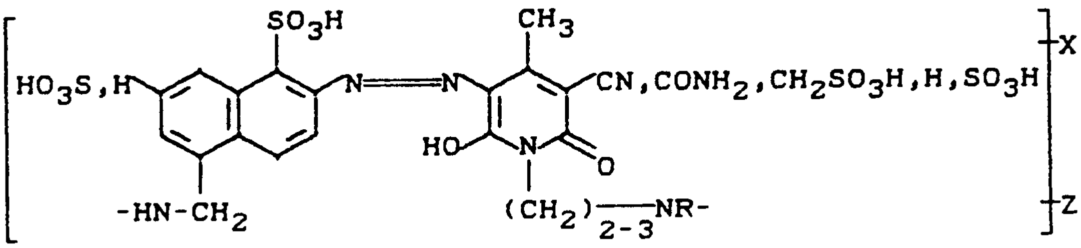

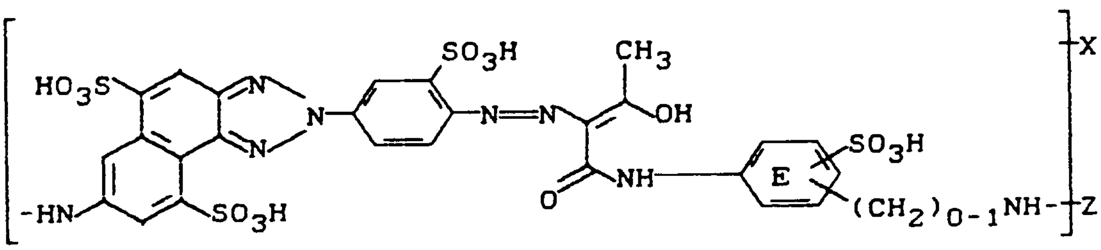

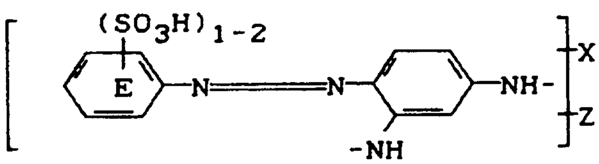

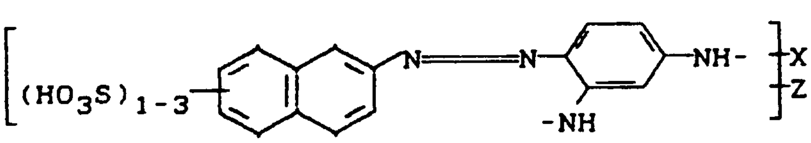

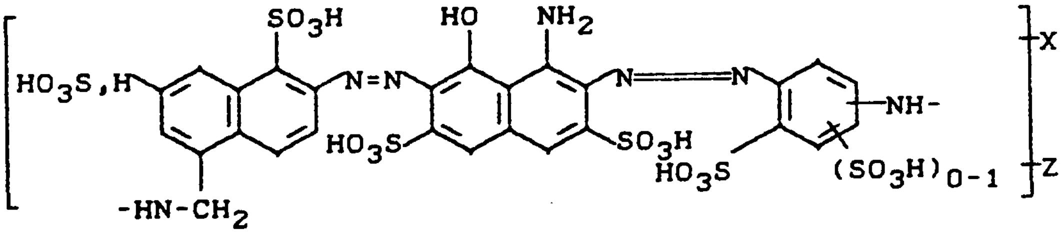

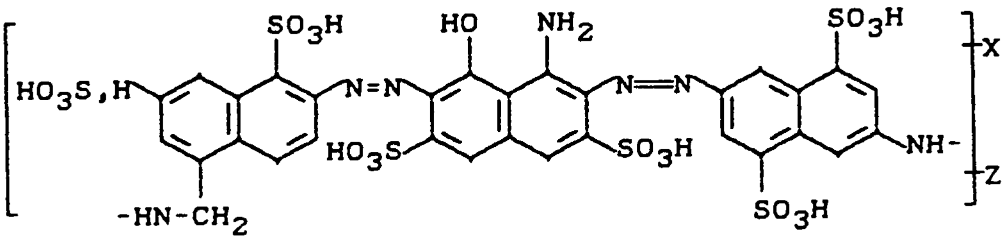

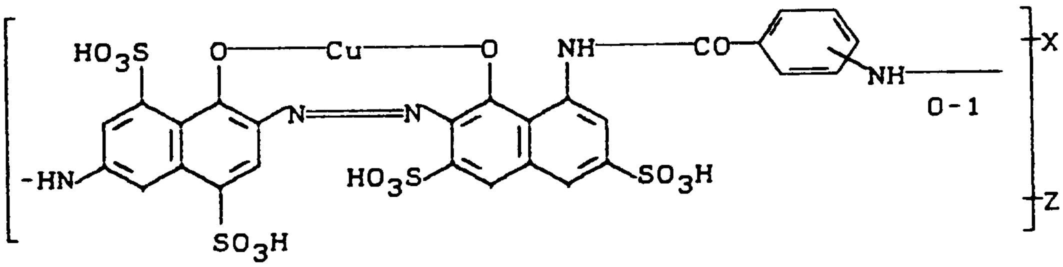

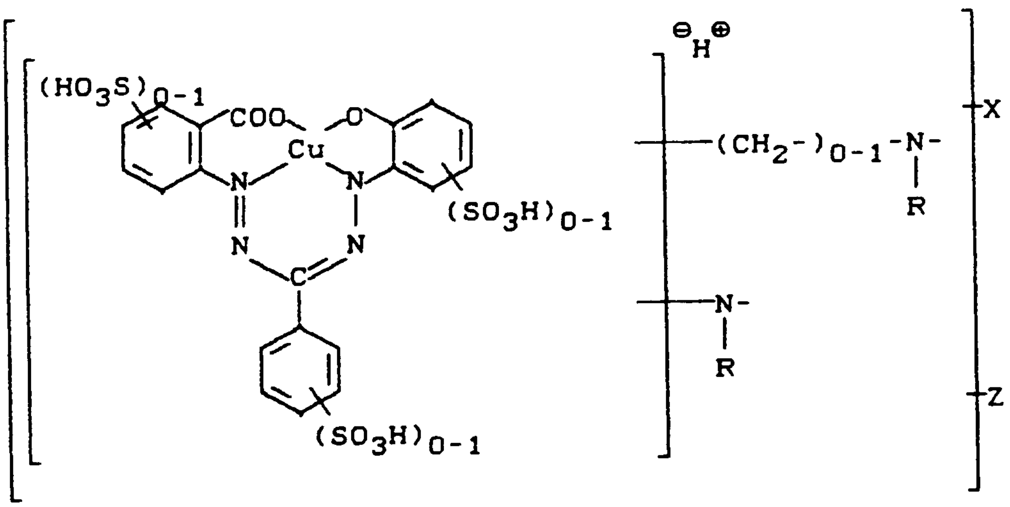

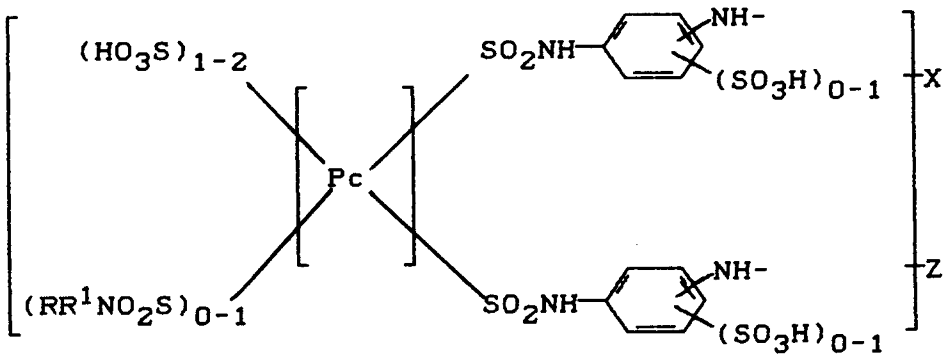

worin Pc für einen Cu- oder Ni-Phthalocyaninrest steht und die Gesamtzahl der Substituenten am Pc-Gerüst maximal 4 beträgt,

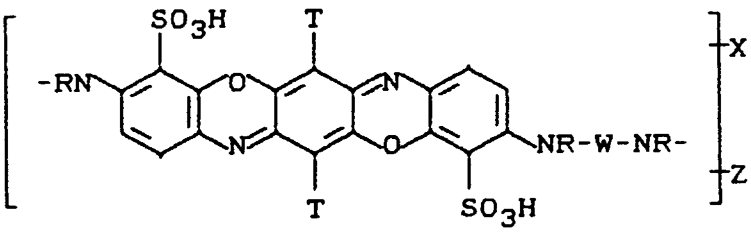

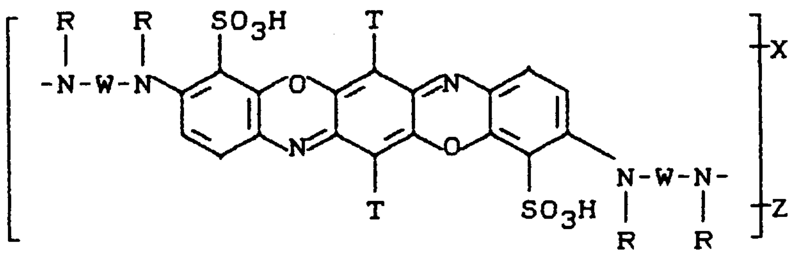

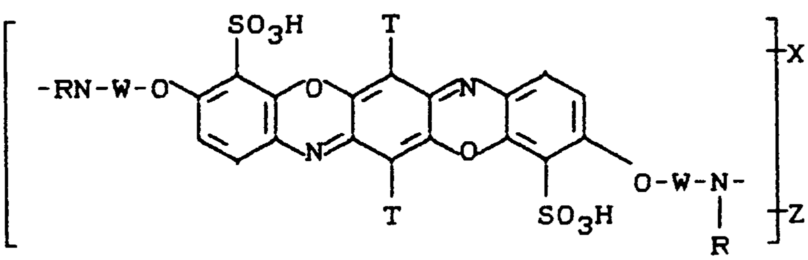

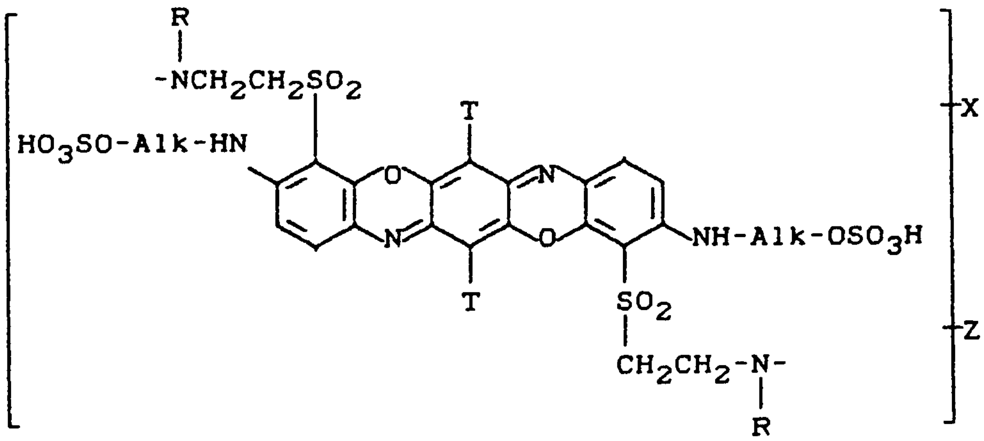

wobei

T = Cl, Br, $OCH_3$,

R, $R^3$ = H, $CH_3$ oder $C_2H_5$,

$R^6$ = H, $C_1$-$C_4$-Alkyl, $C_1$-$C_4$-Alkoxy, Acylamino, $C_1$-$C_4$-Alkylsulfonylamino, Aminocarbonylamino, gegebenenfalls substituiertes Phenylcarbonylamino, Cl, Br,

$R^7$ = H, $C_1$-$C_4$-Alkyl, $C_1$-$C_4$-Alkoxy, OH, $SO_3H$,

K = Rest einer Kupplungskomponente der Benzol-, Naphthalin-, Acetessigsäureanilid- oder heterocyclischen Reihe und

X die Bedeutung wie in Anspruch 1 mit M = $CH=CH_2$ oder $CH_2CH_2Cl$ und

Z die Bedeutung wie in Anspruch 4 und 6 mit M = $CH=CH_2$ oder $CH_2CH_2Cl$ hat,

W = aliphatisches Brückenglied

Alk = gegebenenfalls durch Heteroatome oder Heteroatome wie NR, O oder S enthaltende Gruppierungen unterbrochenes, geradkettiges oder verzweigtes $C_1$-$C_6$-Alkylen wobei

die Benzolringe E substituiert oder unsubstituiert sind.

**8.** Farbstoffe des Anspruchs 1 der Formel

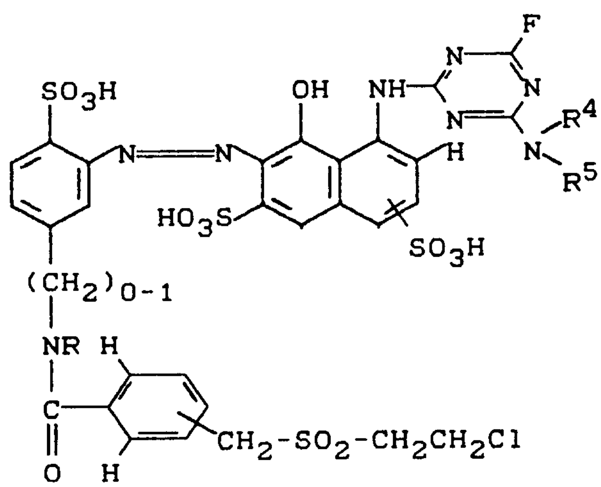

worin $R^4$ und $R^5$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenethyl, Cyclohexyl, Phenyl oder $-NHCH_2CH_2OCH_2CH_2-SO_2M$ (M = $-CH=CH_2$ oder $-CH_2CH_2V$ mit V = alkalisch eliminierbarer Rest), Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo, oder Naphthyl, das gegebenenfalls substituiert ist durch

Halogen, Nitro, $C_{1-4}$-Alkoxy, $C_{1-4}$-Alkanoylamino, Hydroxy, Carboxy oder Sulfo, sind, oder worin $R^4$ und $R^5$ zusammen mit dem Aminostickstoffatom einen Morpholino-, Piperidino- oder Piperazinorest bilden, und R für H, $CH_3$ und $C_2H_5$ steht.

9. Farbstoffe des Anspruchs 1 der Formel

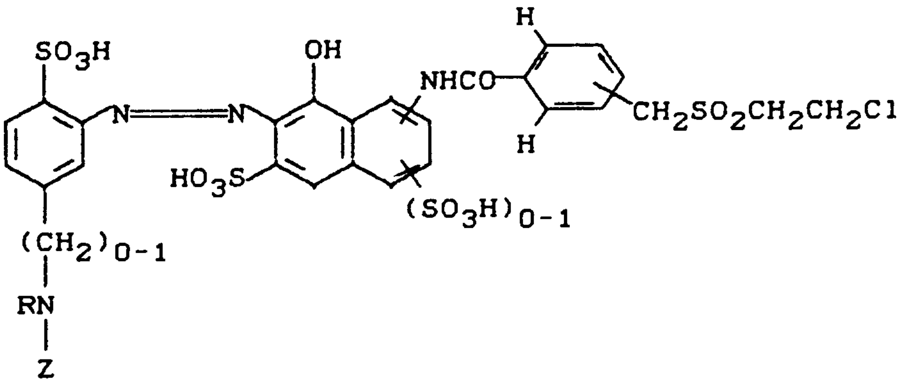

worin

Z = faserreaktiver halogenhaltiger Pyrimidinyl-Rest und
R = H, $CH_3$ oder $C_2H_5$.

10. Verfahren zum Färben und Bedrucken von Hydroxylgruppen- und Amidgruppen-haltigen Materialien, dadurch gekennzeichnet, daß man Farbstoffe der Ansprüche 1-8 verwendet.